# EUROPEAN PATENT APPLICATION

(11) **EP 4 030 504 A1**
(43) Date of publication of application: **20.07.2022**
(21) Application number: 20863628.2
(22) Date of filing: 14.09.2020
(51) Int. Cl.: H01M 4/139, H01M 10/052, H01M 10/058, H01M 10/54, H01M 50/409

(54) **METHOD FOR MANUFACTURING LITHIUM-ION BATTERY RECYCLABLE ELECTRODE ACTIVE MATERIAL, METHOD FOR MANUFACTURING SOLUTION CONTAINING METAL ION, AND LITHIUM-ION BATTERY**

(30) Priority: 12.09.2019 JP 2019166301; 12.09.2019 JP 2019166302; 12.09.2019 JP 2019166303; 12.09.2019 JP 2019166304
(71) Applicant: APB Corporation, Tokyo 101-0041 (JP)
(72) Inventor: SUZUKI, Kaho, Kyoto-shi, Kyoto 605-0995 (JP); NAKASHIMA, Yusuke, Kyoto-shi, Kyoto 605-0995 (JP); KOBAYASHI, Shinya, Kyoto-shi, Kyoto 605-0995 (JP); HORIE, Hideaki, Tokyo 101-0041 (JP)
(74) Representative: Hoefer & Partner Patentanwälte mbB
(86) International application number: PCT/JP2020/034780
(87) International publication number: WO 2021/049668

(57) **Abstract**

There is provided a production method for a recyclable electrode active material for a lithium ion battery, the lithium ion battery having a charge storage element including a first electrode that has a first current collector and a first electrode active material layer formed on the first current collector and consisting of a first electrode composition containing a first electrode active material, a second electrode that has a second current collector and a second electrode active material layer formed on the second current collector and consisting of a second electrode composition containing a second electrode active material, and a separator disposed between the first electrode active material layer and the second electrode active material layer, in which the first current collector is a first resin current collector, the production method including an isolation step of isolating the first electrode active material from the lithium ion battery in which a first current collector is a first resin current collector, the lithium ion battery having a charge storage element including a first electrode that has a first current collector and has a first electrode active material layer consisting of a first electrode composition containing a first electrode active material, the first electrode active material layer being formed on the first current collector, a second electrode that has a second current collector and has a second electrode active material layer consisting of a second electrode composition containing a second electrode active material, the second electrode active material layer being formed on the second current collector, and a separator disposed between the first electrode active material layer and the second electrode active material layer.

## Description

### Technical Field

The present invention relates to a production method for a recyclable electrode active material for a lithium ion battery, a production method for a solution containing a metal ion, and a lithium ion battery.

### Background Art

In recent years, lithium ion (secondary) batteries have been widely used in various applications as compact and lightweight secondary batteries having high capacity. A general lithium ion battery is constituted by housing, in a container, a positive electrode active material layer containing a positive electrode active material and an electrolytic solution and a negative electrode active material layer similarly containing a negative electrode active material and an electrolytic solution in a state where a separator is sandwiched therebetween.

A nickel oxide or a cobalt oxide is often used as a material of the positive electrode active material. Metals such as nickel and cobalt are expensive, and in a case of being discarded as they are, they impose an environmental burden. For this reason, they are desired to be used in a recyclable manner.

Patent Literature 1 discloses a technique for recovering a positive electrode active material from a waste lithium ion battery or waste electrode material.

Patent Literature 1 describes separably removing a separator from a crushed material obtained by crushing a waste lithium ion battery or waste electrode material, followed by heating at 400°C to 550°C in the atmospheric air to remove organic substances contained in the binder.

Further, Patent Literature 2 describes obtaining powdery or granular lithium ion battery scraps through various steps such as roasting, crushing, and sieving, in order to recover valuable metals and the like from recyclable raw materials of the lithium ion battery.

In addition, it describes subjecting the valuable metals contained in the lithium ion battery scraps to acid leaching with an acidic solution.

### Citation List

### Patent Literature

[PTL 1] Japanese Unexamined Patent Application, First Publication No. 2012-195073
[PTL 2] Japanese Unexamined Patent Application, First Publication No. 2016-186118

### Summary of Invention

### Technical Problem

In the technique disclosed in Patent Literature 1, a waste lithium ion battery or a waste electrode material is crushed and heated (roasted) at 400°C to 550°C.

In such a technique, there has been a problem that the steps of separating and recovering the active material are complicated.

In addition, there has also been a problem that in a case where the waste lithium ion battery or the waste electrode material is heated at 400°C to 550°C, electrolyte salts are thermally decomposed and a fluorine-containing gas (HF) is generated, and thus it is essential to install an exhaust gas treatment device.

Furthermore, as described in Patent Literature 2, the particle size of the positive electrode active material in the powdery or granular lithium ion battery scraps obtained by roasting, crushing, and sieving batteries is determined in a state of coarse particles (for example, particles having a particle size of more than 1 mm) in which the positive electrode active material is bound to a binding material resin.

Since the specific surface area of these coarse particles is not so large, the ion extraction efficiency at the time of the acid leaching with an acidic solution is poor, and as a result, a method of carrying out more efficient ion extraction has been desired.

An object of the present invention is to provide a method of producing a recyclable electrode active material for a lithium ion battery from a lithium ion battery through a simple step without requiring high temperature heating, a production method for a metal ion solution with which metals contained in a battery can be isolated easily and efficiently to obtain a metal ion solution, and a lithium ion battery suitable for a method of producing the recyclable electrode active material for a lithium ion battery.

### Solution to Problem

The present invention relates to a production method for a recyclable electrode active material for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer in which a first current collector is a first resin current collector, the production method characterized by including an isolation step of isolating the first electrode active material from the lithium ion battery; a production method for a solution containing a metal ion of a metal element constituting an electrode active material, the production method characterized by including a dispersion liquid preparation step of dispersing a recyclable electrode active material obtained by the production method for a recyclable electrode active material for a lithium ion battery according to the present invention, in a solvent containing water, to obtain an electrode active material dispersion liquid, and a pH adjustment step of adjusting a pH of the electrode active material dispersion liquid such that a hydrogen ion exponent (pH) of an aqueous solution fractionated from the electrode active material dispersion liquid at 25°C is 5 or less; and a lithium ion battery characterized by including a charge storage element consisting of a first electrode that has a first resin current collector and has a first electrode active material layer formed on the first resin current collector and consisting of a first electrode composition containing a first electrode active material, a second electrode that has a second resin current collector and has a second electrode active material layer formed on the second resin current collector and consisting of a second electrode composition containing a second electrode active material, and a separator disposed between the first electrode active material layer and the second electrode active material layer, in which the first resin current collector contains a first matrix resin and a first conductive filler, the second resin current collector contains a second matrix resin and a second conductive filler, a melting point of the first matrix resin is less than 200°C, and a melting point of the second matrix resin is higher than the melting point of the first matrix resin by 30°C or higher.

### Advantageous Effects of Invention

According to the present invention, it is possible to provide a method of producing a recyclable electrode active material for a lithium ion battery from a lithium ion battery without requiring high temperature heating, a production method for a metal ion solution with which metals contained in a battery can be isolated easily and efficiently to obtain a metal ion solution, and a lithium ion battery suitable for a method of producing the recyclable electrode active material for a lithium ion battery.

### Brief Description of Drawings

Fig. 1 is a cross-sectional view schematically illustrating an example of a lithium ion battery that is used in a first aspect of a production method for a recyclable electrode active material for a lithium ion battery.
Fig. 2 is a schematic view illustrating an example of an isolation step.
Fig. 3 is a schematic view illustrating another example of the isolation step.
Fig. 4 is a cross-sectional view schematically illustrating an example of a lithium ion battery that is used in a second aspect of the production method for a recyclable electrode active material for a lithium ion battery.
Fig. 5A is a perspective view schematically illustrating a first electrode constituting a charge storage element illustrated in Fig. 4, and Fig. 5B is a perspective view schematically illustrating a second electrode constituting a charge storage element illustrated in Fig. 4.
Fig. 6 is a cross-sectional view schematically illustrating an example of the isolation step.
Fig. 7 is a cross-sectional view schematically illustrating another example of the isolation step.
Fig. 8 is a cross-sectional view schematically illustrating still another example of the isolation step.
Fig. 9 is a schematic view illustrating an example of a method of separating a first electrode active material from a recyclable sheet-shaped electrode member for a lithium ion battery.
Fig. 10 is a cross-sectional view schematically illustrating an example of a lithium ion battery that is used in a method of selectively isolating a positive electrode active material.
Fig. 11 is a schematic view illustrating an example of a suspension preparation step constituting the method of selectively isolating a positive electrode active material.
Fig. 12 is a schematic view illustrating an example of a separation step constituting the method of selectively isolating a positive electrode active material.
Fig. 13 is a cross-sectional view schematically illustrating an example of an isolation step in a production method for a recyclable electrode sheet for a lithium ion battery.
Fig. 14 is a cross-sectional view schematically illustrating an example of a lithium ion battery that is used in a first embodiment of a production method for a positive electrode for a lithium ion battery.
Fig. 15 is a schematic view schematically illustrating an example of a step of mixing an electrode active material with lithium and/or a lithium-containing compound in the first embodiment of the production method for a positive electrode for a lithium ion battery.
Fig. 16 is a cross-sectional view schematically illustrating an example of a lithium ion battery that is used in a second embodiment of the production method for a positive electrode for a lithium ion battery.
Fig. 17 is a schematic view illustrating an example of a method of isolating an electrode active material layer from a lithium ion battery in the second embodiment of the production method for a positive electrode for a lithium ion battery.
Fig. 18 is a schematic view showing an example of a step of short circuiting a positive electrode active material layer and metallic lithium in a state of being opposed to each other, with a separator being sandwiched therebetween, in the second embodiment of the production method for a positive electrode for a lithium ion battery.
Fig. 19 is a photographic image showing a state of a mixed solvent after the separation step according to Example 3-1.

### Description of Embodiments

Hereinafter, the present invention will be described in detail.

In the present specification, the lithium ion battery in a case of being described shall include a concept of a lithium ion secondary battery as well. In addition, the electrode active material isolated from a lithium ion battery is referred to as a recyclable electrode active material in order to distinguish it from an electrode active material that is used in a case where a lithium ion battery is produced.

In addition, the member in which the recyclable electrode active material is combined with at least one of a current collector and a separator is referred to as a recyclable sheet-shaped electrode member in order to distinguish it from a sheet-shaped electrode member that is used in a case where a lithium ion battery is manufactured. Further, the member in which the recyclable electrode active material is combined with a current collector and a separator is referred to as a recyclable electrode sheet in order to distinguish it from an electrode that is used in a case where a lithium ion battery is manufactured.

### [Production method for recyclable electrode active material for lithium ion battery]

The production method for a recyclable electrode active material for a lithium ion battery of the present invention, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which a first current collector is a first resin current collector, is characterized by including an isolation step of isolating the first electrode active material from the lithium ion battery.

In the production method for a recyclable electrode active material for a lithium ion battery, at least a part of the first resin current collector may be removed and the first electrode active material may be isolated.

Such an aspect of the production method for a recyclable electrode active material for a lithium ion battery is a first aspect of the production method for a recyclable electrode active material for a lithium ion battery.

In the first aspect of the production method for a recyclable electrode active material for a lithium ion battery, it is preferable for the isolation step to include a step of heating the charge storage element at a temperature equal to or higher than a melting point of a first matrix resin constituting the first resin current collector and lower than 200°C.

In addition, in the first aspect of the production method for a recyclable electrode active material for a lithium ion battery, it is preferable that the isolation step includes a step of immersing the charge storage element in a solvent and an absolute value of a difference between an SP value of a first matrix resin constituting the first resin current collector and an SP value of the solvent is 1.0 or less.

In addition, in the production method for a recyclable electrode active material for a lithium ion battery, in the lithium ion battery, the first current collector and the separator are adhered to each other with a first sealing material being sandwiched therebetween at an outer peripheral edge portion on which the first electrode active material layer is not formed, and the first current collector and the separator may be separated, with the first sealing material as a boundary, to isolate the first electrode active material.

Such an aspect of the production method for a recyclable electrode active material for a lithium ion battery is a second aspect of the production method for a recyclable electrode active material for a lithium ion battery.

In the second aspect of the production method for a recyclable electrode active material for a lithium ion battery, it is preferable for the isolation step to include a step of heating the charge storage element at a temperature equal to or higher than a melting point of a resin constituting the first sealing material and lower than 200°C.

In addition, in the second aspect of the production method for a recyclable electrode active material for a lithium ion battery, it is preferable that the isolation step includes a step of immersing the charge storage element in a solvent and an absolute value of a difference between an SP value of a resin constituting the first sealing material and an SP value of the solvent is 1.0 or less.

In addition, in the second aspect of the production method for a recyclable electrode active material for a lithium ion battery, it is preferable for the isolation step to include a step of cutting the first sealing material along a direction substantially perpendicular to a direction in which the first current collector and the separator face each other.

In the production method for a recyclable electrode active material for a lithium ion battery, the first electrode active material is a positive electrode active material, and
the isolation step is a step of selectively isolating the positive electrode active material from the lithium ion battery and may include;
a suspension preparation step of isolating the charge storage element from the lithium ion battery, bringing the charge storage element into contact with a non-polar solvent having an SP value of 10 or less and a specific gravity smaller than that of water, adding water at a time of the contact or after the contact, and obtaining a suspension containing the water, the non-polar solvent, and the positive electrode active material, and
a separation step of separating, after allowing the suspension to stand, an oil layer containing the non-polar solvent from a water layer containing the water and the positive electrode active material.

Such an aspect of the production method for a recyclable electrode active material for a lithium ion battery is a third aspect of the production method for a recyclable electrode active material for a lithium ion battery.

In the third aspect of the production method for a recyclable electrode active material for a lithium ion battery, the first current collector is a positive electrode resin current collector, and the first electrode active material layer is a positive electrode active material layer,
the positive electrode resin current collector and the separator are adhered to each other with a positive electrode sealing material being sandwiched therebetween at an outer peripheral edge portion on which the positive electrode active material layer is not formed,
the second current collector is a negative electrode resin current collector, and the second electrode active material layer is a negative electrode active material layer, and
it is preferable that the negative electrode resin current collector and the separator are adhered to each other with a negative electrode sealing material being sandwiched therebetween at an outer peripheral edge portion on which the negative electrode active material layer is not formed.

In addition, in the third aspect of the production method for a recyclable electrode active material for a lithium ion battery, the first electrode active material layer is a positive electrode active material layer, and
the positive electrode active material layer is preferably a non-bound body that does not contain a binding material.

In addition, in the third aspect of the production method for a recyclable electrode active material for a lithium ion battery, the positive electrode active material is preferably a coated positive electrode active material, where at least a part of a surface of the positive electrode active material is coated with a coating material containing a macromolecule compound.

In addition, in the third aspect of the production method for a recyclable electrode active material for a lithium ion battery, the first current collector is a positive electrode resin current collector, and
a matrix resin constituting the positive electrode resin current collector is preferably a polyolefin resin.

Further, in the third aspect of the production method for a recyclable electrode active material for a lithium ion battery, it is preferable to heat the suspension to 50°C to 100°C in the suspension preparation step.

Hereinafter, each of the first aspect, the second aspect, and the third aspect of the production method for a recyclable electrode active material for a lithium ion battery will be described.

First, the first aspect of the production method for a recyclable electrode active material for a lithium ion battery will be described.

The production method for a recyclable electrode active material for a lithium ion battery according to the first aspect aims to solve the following problems of the production methods in the related art (for example, Patent Literatures 1 and 2). In the technique disclosed in Patent Literature 1, a waste lithium ion battery or a waste electrode material is crushed and heated (roasted) at 400°C to 550°C.

In such a technique, there has been a problem that the steps of separating and recovering the active material are complicated.

In addition, there has also been a problem that in a case where the waste lithium ion battery or the waste electrode material is heated at 400°C to 550°C, electrolyte salts are thermally decomposed and a fluorine-containing gas (HF) is generated, and thus it is essential to install an exhaust gas treatment device.

Furthermore, as described in Patent Literature 2, the particle size of the positive electrode active material in the powdery or granular lithium ion battery scraps obtained by roasting, crushing, and sieving batteries is determined in a state of coarse particles (for example, particles having a particle size of more than 1 mm) in which the positive electrode active material is bound to a binding material resin.

Since the specific surface area of these coarse particles is not so large, the ion extraction efficiency at the time of the acid leaching with an acidic solution is poor, and as a result, a method of carrying out more efficient ion extraction has been desired.

### [Production method for recyclable electrode active material for lithium ion battery]

For the purpose of solving the above-described problems in the related art, the first aspect of the production method for a recyclable electrode active material for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which a first current collector is a first resin current collector, has an isolation step of removing at least a part of a first resin current collector and isolating the first electrode active material from the lithium ion battery.

In the first aspect of the production method for a recyclable electrode active material for a lithium ion battery, the first current collector constituting a lithium ion battery is the first resin current collector, and thus the first electrode active material that is a recyclable electrode active material can be isolated in a case where at least a part of the first resin current collector is removed. Since the first resin current collector is made of a resin, at least a part of the first resin current collector can be removed without heating at a high temperature, for example, 400°C to 550°C. As a result, the process becomes simple and the recycling cost can be suppressed. Further, since the recyclable electrode active material to be obtained is difficult to be sintered, it is possible to obtain a recyclable electrode active material having a large specific surface area. The recyclable electrode active material having a large specific surface area has high ion extraction efficiency and is suitable for recycling.

### [Lithium ion battery]

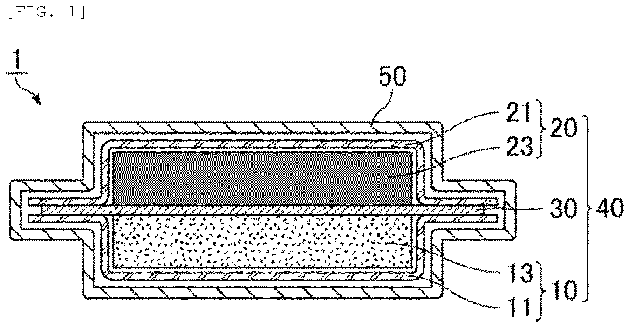

An example of a lithium ion battery that is used in the first aspect of the production method for a recyclable electrode active material for a lithium ion battery will be described with reference to Fig. 1.

Fig. 1 is a cross-sectional view schematically illustrating an example of a lithium ion battery that is used in the first aspect of the production method for a recyclable electrode active material for a lithium ion battery.

As illustrated in Fig. 1, in a lithium ion battery 1, a charge storage element 40 is constituted such that a first electrode 10 that has a first current collector 11 and has a first electrode active material layer 13 containing a first electrode active material, where the first electrode active material layer 13 is formed on the first current collector 11, is disposed to be opposed to a second electrode 20 that has a second current collector 21 and has a second electrode active material layer 23 containing a second electrode active material, where the second electrode active material layer 23 is formed on the second current collector 21, with a separator 30 being sandwiched therebetween, and the outside of the charge storage element 40 is covered by a battery exterior body 50.

The first electrode active material layer 13 is covered by the first current collector 11 and the separator 30.

The second electrode active material layer 23 is covered by the second current collector 21 and the separator 30.

The first current collector 11 is the first resin current collector consisting of the first matrix resin and a conductive filler.

An insulating layer (not illustrated in the drawing) is formed on the inner surface of the battery exterior body 50, and the first current collector 11 and the second current collector 21 are insulated from each other. Further, external electrodes (not illustrated in the drawing) are connected to the first current collector 11 and the second current collector 21, and a part of the external electrode is led out to the outside of the battery exterior body 50.

### [Isolation step]

The first aspect of the production method for a recyclable electrode active material for a lithium ion battery includes the isolation step.

In the isolation step, the first electrode active material is isolated from a lithium ion battery having the above constitution by removing at least a part of the first resin current collector.

Since the first electrode composition is covered by the first resin current collector and the separator, the first electrode active material can be isolated through a portion in which the first resin current collector has been removed, by removing at least a part of the first resin current collector.

Here, isolating the first electrode active material from the lithium ion battery means separating the first electrode active material constituting a lithium ion battery from the lithium ion battery in a state where the second electrode active material is not included, and the isolated first electrode active material may be mixed with the separator or components constituting the first resin current collector. The first electrode active material to be isolated may be the first electrode active material layer that maintains the state of being disposed inside the lithium ion battery as it is, and it may be a slurry in which the first electrode active material is dispersed in a solvent.

The method of removing at least a part of the first resin current collector in the isolation step is not particularly limited, and examples thereof include a method of heating the charge storage element and a method of immersing the charge storage element in a solvent.

In a case where a charge storage element is heated in the isolation step, it is preferable for the isolation step to include a step of heating the charge storage element at a temperature equal to or higher than a melting point of a first matrix resin constituting the first resin current collector and lower than 200°C.

In a case where in the isolation step, the charge storage element is heated at a temperature equal to or higher than the melting point of the first matrix resin and lower than 200°C, at least a part of the first resin current collector can be removed to isolate a first electrode composition to the outside.

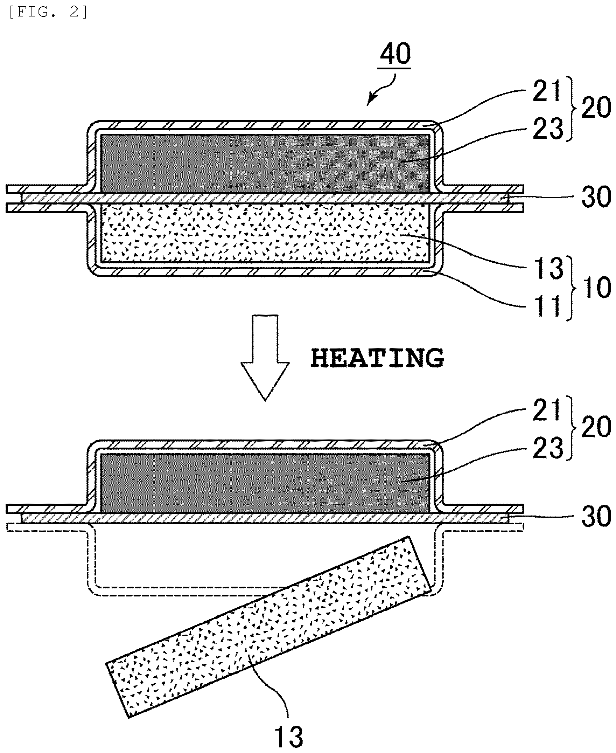

An example of a method of heating the charge storage element at a temperature equal to or higher than the melting point of the first matrix resin and lower than 200°C will be described with reference to Fig. 2.

Fig. 2 is a schematic view illustrating an example of an isolation step.

In the isolation step illustrated in Fig. 2, at least a part of a first resin current collector 11 is removed by heating a charge storage element 40.

The melting point of the first matrix resin contained in the first resin current collector 11 is less than 200°C. As a result, in a case where the charge storage element 40 is heated at a temperature equal to or higher than the melting point of the first matrix resin contained in the first resin current collector 11 and lower than 200°C, the first resin current collector 11 is softened, and thus a part thereof can be removed. In a case where a part of the first resin current collector is removed, the first electrode active material layer 13 containing the first electrode active material can be isolated.

It suffices that the temperature at which the charge storage element is heated (hereinafter, also referred to as the heating temperature) is higher than the melting point of the first matrix resin and lower than 200°C; however, it is preferably higher than the melting point of the first matrix resin by 10°C or higher, and more preferably by 20°C or higher.

The method of isolating the first electrode active material from the charge storage element including the softened first resin current collector is not particularly limited; however, examples thereof include a method of immersing the first resin current collector in a solvent after being softened and a method of scraping off the first electrode active material layer together with the softened first resin current collector.

In a case where the charge storage element in which the first resin current collector has been softened is immersed in a solvent, the destruction of the first resin current collector proceeds, and then in a case where the first electrode active material layer comes into contact with the solvent, the first electrode composition constituting the first electrode active material layer is dispersed in the solvent.

In addition, examples of the above method further include a method of sieving the charge storage element containing the softened first resin current collector and separating the softened first resin current collector and the first electrode active material layer from the other materials.

The melting point of the separator is not particularly limited; however, it is preferably 200°C or higher. In addition, two or more sheets of the separator may be disposed to be overlapped with each other.

The second current collector may be a metal current collector consisting of metal or may be a resin current collector (a second resin current collector) consisting of a second matrix resin and a conductive filler. However, in a case where the second current collector is the second resin current collector, it is preferable that the melting point of the second matrix resin is higher than the melting point of the first matrix resin by 30°C or higher.

In a case where the melting point of the second matrix resin is higher than the melting point of the first matrix resin by 30°C or higher, where the second current collector is a metal current collector or the second current collector is the second resin current collector, the first resin current collector can be softened without softening the second current collector by utilizing the difference in physical properties between the first resin current collector and the second current collector, and as a result, solely the first electrode active material can be selectively isolated.

In a case where the charge storage element is immersed in a solvent in the isolation step, it is preferable that the isolation step includes a step of immersing the charge storage element in a solvent and an absolute value of a difference between an SP value of a first matrix resin constituting the first resin current collector and an SP value of the solvent is 1.0 or less.

In a case where the charge storage element is immersed in a solvent, where the absolute value of the difference between the SP value of the solvent and the SP value of the first matrix resin is 1.0 or less, the first matrix resin is swollen and softened by the solvent, and thus at least a part of the first resin current collector can be removed.

The SP value [unit: (cal/cm³)^{0.5}] is a value at 25°C, which is calculated according to the method described in Polymer engineering and science Vol. 14, pages 151 to 154 written by Robert F. Fedors et al.

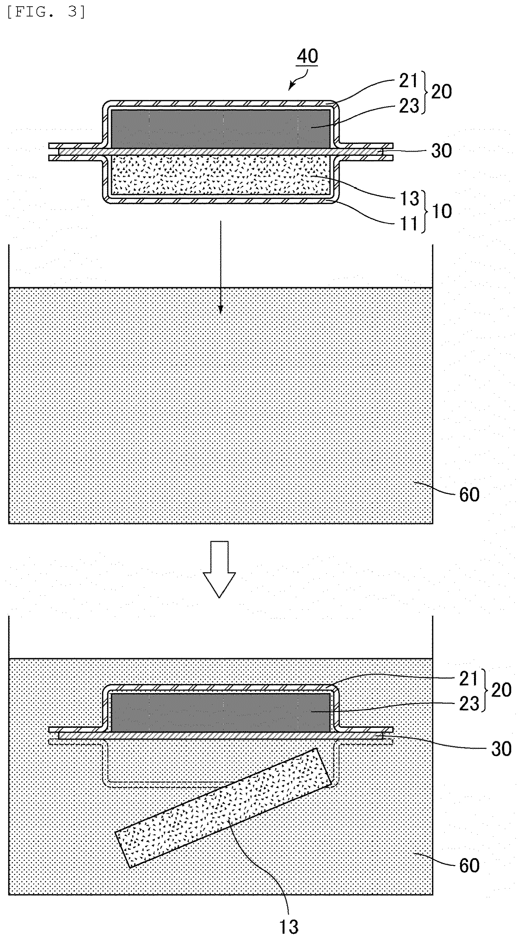

An example of a method of immersing the charge storage element in a solvent will be described with reference to Fig. 3.

Fig. 3 is a schematic view illustrating another example of the isolation step.

In the isolation step illustrated in Fig. 3, at least a part of the first resin current collector 11 is removed by immersing the charge storage element 40 into a solvent 60.

The absolute value of the difference between the SP value of the first matrix resin and the SP value of the solvent 60 is 1.0 or less.

As a result, as illustrated in Fig. 3, the first matrix resin is swollen and softened by the solvent 60, by immersing the charge storage element 40 in the solvent 60, and at least a part of the first resin current collector 11 is removed, whereby the first electrode active material layer 13 containing the first electrode active material can be isolated.

The second current collector may be a metal current collector consisting of metal or may be a resin current collector (a second resin current collector) consisting of a second matrix resin and a conductive filler. However, in a case where the second current collector is the second resin current collector, it is preferable that the SP value and the Tg of each of the first matrix resin and the second matrix resin respectively satisfy the following conditions (1) and (2).
Condition (1): [the absolute value of the difference between the SP value of the first matrix resin and the SP value of the second matrix resin] > 3.5
Condition (2): [the absolute value of the difference between Tg of the first matrix resin and Tg of the second matrix resin] ≥ 35
The glass transition temperature (Tg) is a value measured according to the differential scanning calorimetry (DSC) method described in JIS K 7121 (1987).

In a case where the SP value and the Tg of each of the first matrix resin and the second matrix resin respectively satisfy the above conditions (1) and (2), where the second current collector is a metal current collector or the second current collector is the second resin current collector, the first resin current collector can be softened and swollen without swelling and softening the second current collector by utilizing the difference in physical properties between the first resin current collector and the second current collector, and as a result, solely the first electrode active material can be selectively isolated.

Specifically, in a case where the charge storage element is immersed in a solvent, where the difference between the SP value of the solvent and the SP value of the first matrix resin is 1.0 or less and the difference between the SP value of the solvent and the SP value of the second matrix resin is more than 2.5, solely the first matrix resin can be swollen and softened by the solvent, and thus the first electrode active material can be easily isolated selectively.

Further, in a case where the second current collector is a resin current collector (the second resin current collector) containing the second matrix resin and a conductive filler, it is preferable that the following condition (3) is further satisfied.

Condition (3): [the absolute value of the difference between the SP value of the separator and the SP value of the second matrix resin] ≤ 1.0

In a case where the above condition (3) is satisfied, the separator becomes less soluble in a solvent as in the case where the separator is the second resin current collector.

Examples of the solvent that is used in a case where the charge storage element is immersed in a solvent include xylene (SP value: 8.8) and DMF (SP value: 12.0).

The temperature of the solvent in a case where the charge storage element is immersed in a solvent is not particularly limited; however, it is preferably 140°C to 150°C.

Subsequently, the constitution of a lithium ion battery that is used in the first aspect of the production method for a recyclable electrode active material for a lithium ion battery will be described.

The lithium ion battery that is used in the first aspect of the production method for a recyclable electrode active material for a lithium ion battery has a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector is a first resin current collector.

### [First electrode]

The first electrode has the first current collector and has the first electrode active material layer containing the first electrode active material formed on the first current collector.

The first current collector is the first resin current collector containing the first matrix resin and a conductive filler.

The conductive filler is selected from materials having conductivity.

Specific examples thereof include a metal [nickel, aluminum, stainless steel (SUS), silver, copper, titanium, or the like], carbon [graphite, carbon black (acetylene black, Ketjen black, furnace black, channel black, thermal lamp black, or the like), or the like], and a mixture thereof; however, carbon is preferable. In a case where the conductive filler is carbon, it is possible to prevent a metal from being mixed in the isolated first electrode active material. This is effective as a method of suppressing the deterioration of the characteristics of the isolated first electrode active material in a case where the first electrode active material is a positive electrode active material.

One kind of these conductive fillers may be used alone, or two or more kinds thereof may be used in combination. Moreover, an alloy or metal oxide thereof may be used. From the viewpoint of electrical stability, aluminum, stainless steel, carbon, silver, copper, titanium, or a mixture thereof is preferable, silver, aluminum, stainless steel, or carbon is more preferable, and carbon is still more preferable. Further, these conductive fillers may be those obtained by coating a conductive material (a metallic conductive material among materials of the conductive filler described above) around a particle-based ceramic material or a resin material with plating or the like.

The average particle size of the conductive filler is not particularly limited; however, it is preferably 0.01 to 10 µm, more preferably 0.02 to 5 µm, and still more preferably 0.03 to 1 µm, from the viewpoint of the electrical characteristics of the battery. In the present specification, the "particle size" means the maximum distance L among the distances between any two points on the contour line of the particle. As the value of the "average particle size", the average value of the particle sizes of the particles observed in several to several tens of visual fields using an observation means such as a scanning electron microscope (SEM) or a transmission electron microscope (TEM) shall be adopted.

The shape (the form) of the conductive filler is not limited to the particle form, may be a form other than the particle form, and may be a form practically applied as a so-called filler-based conductive resin composition such as carbon nanotubes.

The conductive filler may be a conductive fiber of which the shape is fibrous.

Examples of the conductive fiber include a carbon fiber such as a PAN-based carbon fibers or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber with a metal, and a conductive fiber obtained by coating a surface of an organic fiber with a resin containing a conductive substance. Among these conductive fibers, a carbon fiber is preferable. In addition, a polypropylene resin in which graphene is kneaded is also preferable.

In a case where the conductive filler is a conductive fiber, the average fiber diameter thereof is preferably 0.1 to 20 µm.

The weight proportion of the conductive filler in the first resin current collector is preferably 5% to 90% by weight and more preferably 20% to 80% by weight.

In particular, in a case where the conductive filler is carbon, the weight proportion of the conductive filler is preferably 20% to 30% by weight.

The first matrix resin constituting the first resin current collector preferably has a melting point of less than 200°C.

Examples of the first matrix resin having a melting point of less than 200°C include polyamide (PA), polyolefin (PO), and polyvinylidene fluoride (PVDF).

Further, the first matrix resin is preferably at least one selected from the group consisting of polyamide, polyolefin, and polyvinylidene fluoride.

The melting point of the polyolefin is about 95°C to 140°C.

The melting point of the polyvinylidene fluoride is about 150°C to 180°C.

In the present specification, a numerical value measured according to the differential scanning calorimetry (DSC) method described in JIS K 7121-1987 is used as the melting point of the first matrix resin.

Examples of the polyolefin include polyethylene (PE), polypropylene (PP), and polycycloolefin (PCO).

Among these, polyethylene (PE) or polypropylene (PP) is preferable.

The polypropylene may be random polypropylene or block polypropylene; however, it is preferably random polypropylene.

As the polyolefin, for example, the following products are available on the market.
PE: "NOVATEC LL UE320 (melting point: 122°C)" and "NOVATEC LL UJ960 (melting point: 126°C)", both manufactured by Japan polyethylene Corporation.
PP: "SunAllomer PM854X (melting point: 160°C)" manufactured by SunAllomer Ltd., "WINTEC WFX4T (melting point: 125°C)" manufactured by Japan Polypropylene Corporation, and "SUMITOMO NOBLEN FL6737 (melting point: 130°C)" manufactured by Sumitomo Chemical Co., Ltd.

In addition, the first matrix resin constituting the first resin current collector preferably has an SP value of 8 to 12.

Examples of the first matrix resin having an SP value of 8 to 12 include polyolefin and polyvinylidene fluoride. In addition, the first matrix resin having an SP value of 8 to 12 is preferably at least one selected from the group consisting of polyolefin and polyvinylidene fluoride.

Examples of the polyolefin having an SP value of 8 to 12 include polyethylene (PE), polypropylene (PP), polycycloolefin (PCO), and polymethylpentene (PMP). Among these, polyethylene (PE) or polypropylene (PP) is preferable.

In addition to the first matrix resin and the conductive filler, the first resin current collector may contain other components (a dispersing agent, a crosslinking accelerator, a crosslinking agent, a coloring agent, an ultraviolet absorbing agent, a plasticizer, and the like).

The thickness of the first resin current collector is not particularly limited; however, it is preferably 5 to 400 µm.

The first resin current collector can be obtained, for example, by forming a conductive resin composition obtained by melt-kneading the first matrix resin and the conductive filler into a film shape.

Examples of the method of forming a conductive resin composition into a film shape include known film forming methods such as a T-die method, an inflation method, and a calendaring method. The first resin current collector can also be obtained by a forming method other than the film forming.

The first electrode active material layer consists of the first electrode composition containing the first electrode active material.

The first electrode active material layer is preferably a non-bound body that does not contain a binding material that binds the first electrode active materials to each other.

Here, the non-bound body means that the first electrode active materials are not bound to each other, where "bound" means that the first electrode active materials are irreversibly bound to each other.

The first electrode active material may be a positive electrode active material or a negative electrode active material.

Examples of the positive electrode active material include a composite oxide of lithium and a transition metal {a composite oxide having one kind of transition metal (LiCoO₂, LiNiO₂, LiAlMnO₄, LiMnO₂, LiMn₂O₄, or the like), a composite oxide having two kinds of transition metal elements (for example, LiFeMnO₄, LiNi₁₋ₓCOₓO₂, LiMn_{1-y}Co_{y}O₂, LiNi_{1/3}Co_{1/3}Al_{1/3}O₂, and LiNi_{0.8}Co_{0.15}Al_{0.05}O₂), a composite oxide having three or more kinds of metal elements [for example, LiMₐM'_{b}M"_{c}O₂ (where M, M', and M" are transition metal elements different each other and satisfy a + b + c = 1, and one example is LiNi_{1/3}Mn_{1/3}Co_{1/3}O₂)], or the like}, a lithium-containing transition metal phosphate (for example, LiFePO₄, LiCoPO₄, LiMnPO₄, or LiNiPO₄), a transition metal oxide (for example, MnO₂ and V₂O₅), a transition metal sulfide (for example, MoS₂ or TiS₂), and a conductive macromolecule (for example, polyaniline, polypyrrole, polythiophene, polyacetylene, poly-p-phenylene, or polyvinyl carbazole). Two or more thereof may be used in combination.

Here, the lithium-containing transition metal phosphate may be one in which a part of transition metal sites is substituted with another transition metal.

The volume average particle size of the positive electrode active material is preferably 0.01 to 100 µm, more preferably 0.1 to 35 µm, and still more preferably 2 to 30 µm, from the viewpoint of the electrical characteristics of the battery.

The positive electrode active material may be a coated positive electrode active material, where at least a part of a surface of the coated positive electrode active material is coated with a coating material containing a macromolecule compound.

In a case where the periphery of the positive electrode active material is covered by a coating material, the volume change of the positive electrode is alleviated, and thus the expansion of the positive electrode can be suppressed.

As the macromolecule compound constituting the coating material, those described as the non-aqueous secondary battery active material coating resin in Japanese Unexamined Patent Application, First Publication No. 2017-054703 can be suitably used.

The coating material may contain a conducting agent.

As the conducting agent, the same one as the conductive filler contained in the first resin current collector can be suitably used.

Examples of the negative electrode active material include a carbon-based material [graphite, non-graphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke),a carbon fiber, or the like], a silicon-based material [silicon, silicon oxide (SiOₓ), a silicon-carbon composite body (a composite body obtained by coating surfaces of carbon particles with silicon and/or silicon carbide, a composite body obtained by coating surfaces of silicon particles or silicon oxide particles with carbon and/or silicon carbide, silicon carbide, or the like), a silicon alloy (a silicon-aluminum alloy, a silicon-lithium alloy, a silicon-nickel alloy, a silicon-iron alloy, a silicon-titanium alloy, a silicon-manganese alloy, a silicon-copper alloy, a silicon-tin alloy, or the like), or the like], a conductive macromolecule (for example, polyacetylene or polypyrrole), a metal (tin, aluminum, zirconium, titanium, or the like), a metal oxide (a titanium oxide, a lithium-titanium oxide, or the like), a metal alloy (for example, a lithium-tin alloy, a lithium-aluminum alloy, or a lithium-aluminum-manganese alloy), or the like, and a mixture of the above and a carbon-based material.

Among the above negative electrode active materials, regarding the negative electrode active material that does not contain lithium or lithium ions in the inside thereof, a part or all of the negative electrode active material may be subjected to pre-doping treatment to incorporate lithium or lithium ions in advance.

Among these, a carbon-based material, a silicon-based material, or a mixture thereof is preferable from the viewpoint of battery capacity and the like. The carbon-based material is more preferably graphite, non-graphitizable carbon, or amorphous carbon, and the silicon-based material is more preferably silicon oxide or a silicon-carbon composite body.

The volume average particle size of the negative electrode active material is preferably 0.01 to 100 µm, more preferably 0.1 to 20 µm, and still more preferably 2 to 10 µm, from the viewpoint of the electrical characteristics of the battery.

In the present specification, the volume average particle size of the negative electrode active material means the particle size (Dv50) at an integrated value of 50% in the particle size distribution obtained by the microtrack method (the laser diffraction/scattering method). The microtrack method is a method of determining a particle size distribution by using scattered light obtained by irradiating particles with laser light. A MICROTRAC manufactured by Nikkiso Co., Ltd. can be used for measuring the volume average particle size.

The negative electrode active material may be a coated negative electrode active material, where at least a part of a surface of the coated negative electrode active material is coated with a coating material containing a macromolecule compound.

In a case where the periphery of the negative electrode active material is covered by a coating material, the volume change of the negative electrode is alleviated, and thus the expansion of the negative electrode can be suppressed.

As the coating material, the same one as the coating material constituting the coated positive electrode active material can be suitably used.

The first electrode active material layer may contain a pressure-sensitive adhesive resin.

As the pressure-sensitive adhesive resin, it is possible to suitably use, for example, a resin obtained by mixing the non-aqueous secondary battery active material coating resin, described in Japanese Unexamined Patent Application, First Publication No. 2017-054703, with a small amount of an organic solvent and adjusting the glass transition temperature thereof to room temperature or lower, and those described as adhesives in Japanese Unexamined Patent Application, First Publication No. H10-255805.

Here, the pressure-sensitive adhesive resin means a resin having pressure-sensitive adhesiveness (an adhering property obtained by applying a slight pressure without using water, solvent, heat, or the like) without solidifying even in a case where a solvent component is volatilized and dried. On the other hand, a solution-drying type binder for an electrode, which is used as a binding material, means a binder that dries and solidifies in a case where a solvent component is volatilized, thereby firmly adhering and fixing active materials to each other.

As a result, the solution-drying type electrode binder (the binding material) and the pressure-sensitive adhesive resin are different materials.

The first electrode active material layer may contain an electrolytic solution that contains an electrolyte and a non-aqueous solvent.

As the electrolyte, an electrolytic solution that is used in the known electrolytic solution can be used. Examples thereof include lithium salts of inorganic acids, such as LiPF₆, LiBF₄, LiSbF₆, LiAsF₆, and LiClO₄; and lithium salts of organic acids, such as LiN(FSO₂)₂, LiN(CF₃SO₂)₂, LiN(C₂F₅SO₂)₂, and LiC(CF₃SO₂)₃. LiN(FSO₂)₂ (also referred to as LiFSI) is preferable.

As the non-aqueous solvent, a non-aqueous solvent that is used in the known electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

In addition, among those that are used in the known electrolytic solutions, the non-aqueous solvent is preferably a non-aqueous solvent, where both of the absolute value of the difference between the SP value of the non-aqueous solvent and the SP value of the first matrix resin and the absolute value of the difference between the SP value of the non-aqueous solvent and the SP value of the second matrix resin are more than 1.2.

In a case where the absolute value of the difference between the SP value of the matrix resin and the SP value of the solvent is 1.2 or less, the matrix resin is easily dissolved in the non-aqueous solvent constituting the electrolytic solution.

Examples of the lactone compound include a 5-membered ring lactone compound [γ-butyrolactone (SP value: 12.6) or the like] and a 6-membered ring lactone compound [δ-valerolactone (SP value: 9.7) or the like].

Examples of the cyclic carbonic acid ester include propylene carbonate (SP value: 13.3), ethylene carbonate (SP value: 14.7), and butylene carbonate (SP value: 12.1).

Examples of the chain-like carbonic acid ester include dimethyl carbonate [DMC (SP value: 17.4)], methyl ethyl carbonate (SP value: 9.4), and diethyl carbonate (SP value: 8.8).

Examples of the chain-like carboxylic acid ester include methyl acetate (SP value: 9.6), ethyl acetate (SP value: 9.1), propyl acetate (SP value: 8.8), and methyl propionate (SP value: 8.9).

Examples of the cyclic ether include tetrahydrofuran (SP value: 9.1), tetrahydropyran (SP value: 9.0), 1,3-dioxolane (SP value: 8.6), and 1,4-dioxane (SP value: 10.0) .

Examples of the chain-like ether include dimethoxymethane (SP value: 8.6).

Examples of the phosphoric acid ester include triethyl phosphate (SP value: 10.9).

Examples of the nitrile compound include acetonitrile (SP value: 11.9).

Examples of the amide compound include dimethylformamide [DMF (SP value: 12.0)].

Examples of the sulfone include dimethyl sulfone (SP value: 14.5) and diethyl sulfone (SP value: 12.4).

One kind of solvent may be used alone, or two or more kinds thereof may be used in combination.

Among the solvents, a lactone compound, a cyclic carbonic acid ester, a chain-like carbonic acid ester, or a phosphoric acid ester is preferable from the viewpoint of battery output and charging and discharging cycle characteristics, a lactone compound, a cyclic carbonic acid ester, or a chain-like carbonic acid ester is still more preferable, and dimethyl carbonate (SP value: 17.4), a 1:1 (in terms of volume ratio) mixed solution of ethylene carbonate (EC) and dimethyl carbonate (DMC) (SP value: 15.9), or a 1:1 (in terms of volume ratio) mixed solution (SP value: 14.1) of ethylene carbonate (EC) and propylene carbonate (PC) is particularly preferable.

The first electrode active material layer may contain a conductive auxiliary agent.

As the conductive auxiliary agent, the same conductive material as the conductive filler contained in the first resin current collector can be suitably used.

The weight proportion of the conductive auxiliary agent in the first electrode active material layer is preferably 2% to 10% by weight.

The first electrode active material layer can be prepared, for example, by applying a slurry containing the first electrode active material and an electrolytic solution onto the surface of the first current collector (the first resin current collector) or the base material and then removing the excess electrolytic solution.

In a case where the first electrode active material layer is formed on the surface of the base material, the first electrode active material layer may be combined with the first current collector (the first resin current collector) by a method such as transferring.

The slurry may contain a conductive auxiliary agent or a pressure-sensitive adhesive resin, as necessary. Further, the electrode active material may be a coated electrode active material.

### [Second electrode]

The second electrode has the second current collector and has the second electrode active material layer containing the second electrode active material formed on the second current collector.

The second electrode active material layer preferably contains an electrolytic solution containing an electrolyte.

The second current collector may be a metal current collector consisting of metal or may be a resin current collector (a second resin current collector) consisting of a second matrix resin and a conductive filler.

The thickness of the second current collector is not particularly limited; however, it is preferably 5 to 150 µm.

As the metal current collector, copper, aluminum, titanium, stainless steel, nickel, an alloy thereof, or the like can be used.

The resin current collector (the second resin current collector) contains a second matrix resin and a conductive filler.

As the conductive filler, the same one as the conductive filler constituting the first resin current collector can be suitably used.

The weight proportion of the conductive filler in the second resin current collector is preferably 5% to 90% by weight and more preferably 20% to 80% by weight.

In particular, in a case where the conductive filler is carbon, the weight proportion of the conductive filler is preferably 20% to 30% by weight.

The second resin current collector can be obtained, for example, by forming a conductive resin composition obtained by melt-kneading the second matrix resin and the conductive filler into a film shape.

Examples of the method of forming a conductive resin composition into a film shape include known film forming methods such as a T-die method, an inflation method, and a calendaring method. The second resin current collector can also be obtained by a forming method other than the film forming.

The second matrix resin preferably has a melting point higher than that of the first matrix resin by 30°C or higher. Examples of the resin having a melting point higher than that of the first matrix resin by 30°C or higher include polyamide (PA), polyimide (PI), polyolefin (PO), and polyvinylidene fluoride (PVDF).

Further, the second matrix resin is preferably at least one selected from the group consisting of polyamide, polyolefin, and polyvinylidene fluoride.

The melting point of polyamide is about 170°C to 270°C.

The melting point of the polyvinylidene fluoride is about 150°C to 180°C.

The polyolefin is preferably, for example, polymethylpentene or block polypropylene. The melting point of the polymethylpentene is about 220°C to 240°C.

In a case of isolating the first electrode active material by heating the charge storage element, the preferred combination of the first matrix resin and the second matrix resin is a combination in which the first matrix resin is random polypropylene and the second matrix resin is polymethylpentene.

On the other hand, in a case of isolating the first electrode active material by immersing the charge storage element in a solvent, the preferred combination of the first matrix resin and the second matrix resin is a combination in which the first matrix resin is polypropylene (PP) and the second matrix resin is polyamide (PA).

The second electrode active material layer consists of the second electrode composition containing the second electrode active material.

The second electrode active material is an electrode active material of which kind is different from that of the first electrode active material.

That is, in a case where the first electrode active material is a positive electrode active material, the second electrode active material is a negative electrode active material, and in a case where the first electrode active material is a negative electrode active material, the second electrode active material is a positive electrode active material.

The second electrode active material layer may contain a conductive auxiliary agent.

As the conductive auxiliary agent, the same conductive material as the conductive filler contained in the first resin current collector can be suitably used.

The weight proportion of the conductive auxiliary agent in the second electrode active material layer is preferably 2% to 10% by weight.

The second electrode active material layer can be prepared, for example, by applying a slurry containing the second electrode active material and an electrolytic solution onto the surface of the second current collector or the base material and then removing the excess electrolytic solution.

In a case where the second electrode active material layer is formed on the surface of the base material, the second electrode active material layer may be combined with the second current collector by a method such as transferring.

The slurry may contain a conductive auxiliary agent or a pressure-sensitive adhesive resin, as necessary. Further, the electrode active material may be a coated electrode active material.

The second electrode active material layer contains the second electrode active material and may be a non-bound body that does not contain a binding material that binds the second electrode active materials to each other. The non-bound body means that the second electrode active materials are not bound to each other, where "bound" means that the second electrode active materials are irreversibly bound to each other.

The second electrode active material layer may contain a pressure-sensitive adhesive resin.

As the pressure-sensitive adhesive resin, the same one as the pressure-sensitive adhesive resin which is an optional component of the first electrode active material layer can be suitably used.

### [Separator]

Examples of the separator include known separators for a lithium ion battery, such as a porous film consisting of polyethylene or polypropylene, a lamination film of a porous polyethylene film and a porous polypropylene, a non-woven fabric consisting of a synthetic fiber (a polyester fiber, an aramid fiber, or the like), a glass fiber, or the like and those above of which the surface is attached with ceramic fine particles such as silica, alumina, or titania.

Among these, the separator is preferably a porous film made of polypropylene.

The melting point of the separator is preferably 200°C or higher.

In addition, in a case where the second current collector is the second resin current collector, the SP value of the separator is preferable to satisfy the condition of [the absolute value of the difference between the SP value of the separator and the SP value of the second matrix resin] ≤ 1.0

In addition, two or more sheets of the separator may be disposed to be overlapped with each other.

Hereinafter the second aspect of the production method for a recyclable electrode active material for a lithium ion battery will be described.

The production method for a recyclable electrode active material for a lithium ion battery according to the second aspect aims to solve the following problems of the production methods in the related art (for example, Patent Literatures 1 and 2). In the technique disclosed in Patent Literature 1, a waste lithium ion battery or a waste electrode material is crushed and heated (sintered) at 400°C to 550°C.

In such a technique, there has been a problem that the steps of separating and recovering the active material are complicated.

In addition, there has also been a problem that in a case where the waste lithium ion battery or the waste electrode material is heated at 400°C to 550°C, electrolyte salts are thermally decomposed and a fluorine-containing gas (HF) is generated, and thus it is essential to install an exhaust gas treatment device.

Furthermore, as described in Patent Literature 2, the particle size of the positive electrode active material in the powdery or granular lithium ion battery scraps obtained by roasting, crushing, and sieving batteries is determined in a state of coarse particles (for example, particles having a particle size of more than 1 mm) in which the positive electrode active material is bound to a binding material resin.

Since the surface area of these coarse particles is not so large, the ion extraction efficiency at the time of the acid leaching with an acidic solution is poor, and as a result, a method of carrying out more efficient ion extraction has been desired.

### [Production method for recyclable electrode active material for lithium ion battery]

For the purpose of solving the above-described problems in the related art, the second aspect of the production method for a recyclable electrode active material for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, includes an isolation step of separating the first current collector and the separator with the first sealing material as a boundary, to isolate the first electrode active material from the lithium ion battery.

In the second aspect of the production method for a recyclable electrode active material for a lithium ion battery, since the first current collector and the separator are separated with the first sealing material as a boundary, the first electrode active material which is a recyclable electrode active material can be isolated from a lithium ion battery.

Since the first sealing material is a resin that adheres the first current collector to the separator, the first current collector and the separator can be separated with the first sealing material as a boundary, without heating at a high temperature, for example, 400°C to 550°C. As a result, the process becomes simple and the recycling cost can be suppressed. Further, since the recyclable electrode active material to be obtained is difficult to be sintered, it is possible to obtain a recyclable electrode active material having a large specific surface area. The recyclable electrode active material having a large specific surface area has high ion extraction efficiency and is suitable for recycling.

### [Lithium ion battery]

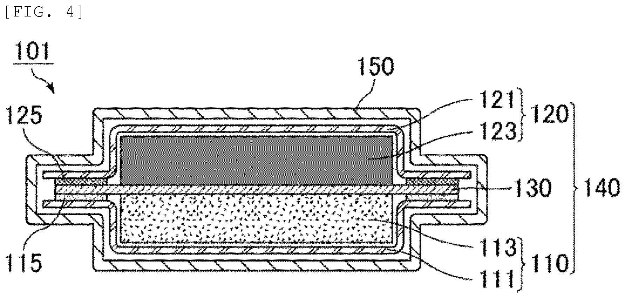

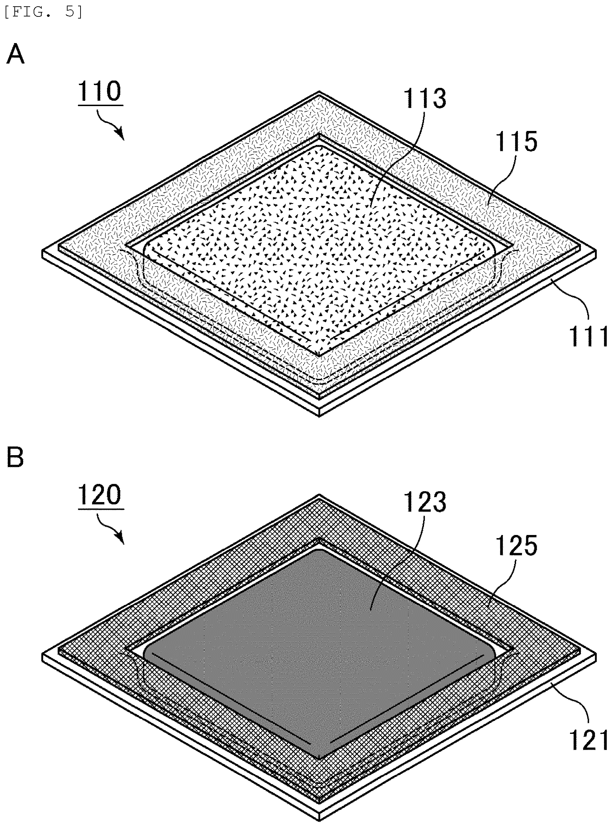

The constitution of the lithium ion battery that is used in the second aspect of the production method for a recyclable electrode active material for a lithium ion battery will be described with reference to Fig. 4, Fig. 5A, and Fig. 5B.

Fig. 4 is a cross-sectional view schematically illustrating an example of a lithium ion battery that is used in the second aspect of the production method for a recyclable electrode active material for a lithium ion battery, Fig. 5A is a perspective view schematically illustrating a first electrode constituting a charge storage element illustrated in Fig. 4, and Fig. 5B is a perspective view schematically illustrating a second electrode constituting a charge storage element illustrated in Fig. 4.

As illustrated in Fig. 4, in a lithium ion battery 101, a charge storage element 140 is constituted such that a first electrode 110 that has a first current collector 111 and has a first electrode active material layer 113 containing a first electrode active material, where the first electrode active material layer 113 is formed on the first current collector 111, is disposed to be opposed to a second electrode 120 that has a second current collector 121 and has a second electrode active material layer 123 containing a second electrode active material, where the second electrode active material layer 123 is formed on the second current collector 121, with a separator 130 being sandwiched therebetween, and the outside of the charge storage element 140 is covered by a battery exterior body 150.

An insulating layer (not illustrated in the drawing) is formed on the inner surface of the battery exterior body 150, and the first current collector 111 and the second current collector 121 are insulated from each other. Further, external electrodes (not illustrated in the drawing) are connected to the first current collector 111 and the second current collector 121, and a part of the external electrode is led out to the outside of the battery exterior body 150.

As illustrated in Fig. 5A, in a case where the charge storage element 140 is viewed along the direction in which the first current collector 111 and the second current collector 121 face each other, the first electrode active material layer 113 is not provided but the first sealing material 115 is provided at the outer peripheral edge portion of the first current collector 111. In addition, the first current collector 111 and the separator (not illustrated in the drawing) are adhered to each other with the first sealing material 115 provided at the outer peripheral edge portion being sandwiched therebetween. As illustrated in Fig. 4 and 5A, the first electrode active material layer 113 is covered by the first current collector 111, the separator 130, and the first sealing material 115.

As a result, in a case where the first sealing material 115 adheres the separator 130 and the first current collector 111, the first electrode active material layer 113 is not exposed to the outside. In other words, in a case where the first current collector 111 and the separator 130 are separated with the first sealing material 115 as a boundary, the first electrode active material layer 113 can be isolated to the outside of the charge storage element 140.

As illustrated in Fig. 5B, in a case where the charge storage element 140 is viewed along the direction in which the first current collector 111 and the second current collector 121 face each other, the second electrode active material layer 123 is not provided but the second sealing material 125 is provided at the outer peripheral edge portion of the second current collector 121. In addition, the second current collector 121 and the separator (not illustrated in the drawing) are adhered to each other with the second sealing material 125 being sandwiched therebetween. As illustrated in Fig. 4 and 5B, the second electrode active material layer 123 is covered by the second current collector 121, the separator 130, and the second sealing material 125.

Although an example in which the second current collector 121 and the separator 130 are adhered to each other by the second sealing material 125 is described in Fig. 4 and 5B, it is noted that in a lithium ion battery that is used in the second aspect of the production method for a recyclable electrode active material for a lithium ion battery, the second sealing material is not essential, and the second current collector may be directly adhered to the separator.

Examples of the method of directly adhering the second current collector to the separator include a method of subjecting the second current collector and the separator to thermocompression bonding.

### [Isolation step]

In the isolation step, the first current collector and the separator are separated with the first sealing material as a boundary. Since the first current collector and the separator are separated with the first sealing material as a boundary, it is possible to easily isolate the first electrode active material disposed between the first current collector and the separator.

Examples of the method of separating the first current collector from the separator with the first sealing material as a boundary include a method of heating the charge storage element, a method of immersing the charge storage element in a solvent, or a method of cutting the first sealing material.

Hereinafter, each of embodiments will be described as an example of the method of heating the charge storage element, as a first embodiment of the second aspect of the production method for a recyclable electrode active material for a lithium ion battery; as an example of the method of immersing the charge storage element in a solvent, as a second embodiment of the second aspect of the production method for a recyclable electrode active material for a lithium ion battery; and as an example of the method of cutting the first sealing material, as a third embodiment of the second aspect of the production method for a recyclable electrode active material for a lithium ion battery.

In the first embodiment of the second aspect of the production method for a recyclable electrode active material for a lithium ion battery, it is preferable for the isolation step to include a step of heating the charge storage element at a temperature equal to or higher than a melting point of a resin constituting the first sealing material and lower than 200°C.

In a case where the charge storage element is heated at a temperature equal to or higher than the melting point of the resin constituting the first sealing material and lower than 200°C in the isolation step, the first sealing material can be softened, and thus the first current collector and the separator can be separated with the first sealing material as a boundary.

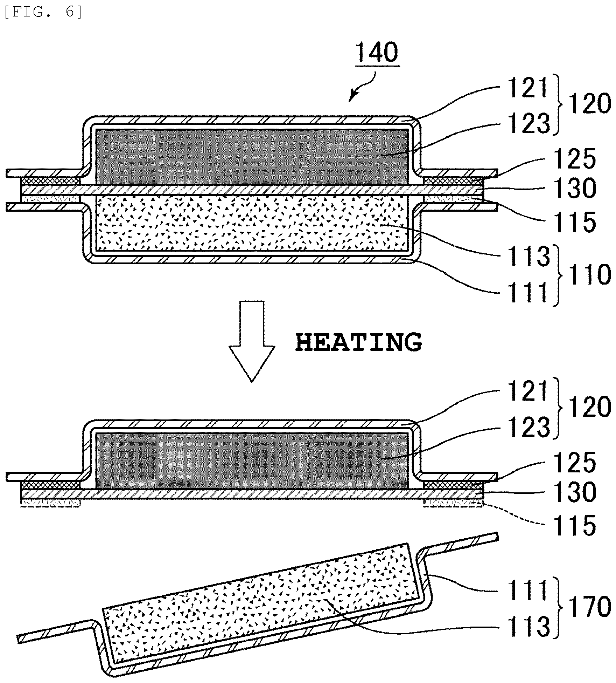

An example of the first embodiment of the second aspect of the production method for a recyclable electrode active material for a lithium ion battery will be described with reference to Fig. 6.

Fig. 6 is a cross-sectional view schematically illustrating an example of the isolation step.

In the isolation step illustrated in Fig. 6, the charge storage element 140 is heated to separate the first current collector 111 from the separator 130 with the first sealing material 115 as a boundary.

The melting point of the first sealing material 115 is lower than 200°C.

As a result, in a case where the battery exterior body 150 is removed from the lithium ion battery 101, and then the charge storage element 140 is heated at a temperature equal to or higher than the melting point of the resin constituting the first sealing material 115 and lower than 200°C, the first sealing material 115 is softened to separate the first current collector 111 from the separator 130 with the first sealing material 115 as a boundary, whereby it is possible to obtain a first recyclable sheet-shaped electrode member 170 consisting of the first electrode active material layer 113 and the first current collector 111.

In the first embodiment of the second aspect of the production method for a recyclable electrode active material for a lithium ion battery, it suffices that the temperature at which the charge storage element is heated (hereinafter, also referred to as the heating temperature) is equal to or higher than the melting point of the resin constituting the first sealing material and lower than 200°C. However, it is preferably higher than the melting point of the resin constituting the first sealing material by 10°C or higher, more preferably by 20°C or higher, and still more preferably by 30°C or higher.

In the first embodiment of the second aspect of the production method for a recyclable electrode active material for a lithium ion battery, the melting point of the resin constituting the first sealing material is lower than 200°C.

The resin constituting the first sealing material is preferably at least one selected from the group consisting of polyamide, polyvinylidene fluoride, and polyolefin.

The first current collector may be a metal current collector consisting of metal or may be a resin current collector (a first resin current collector) consisting of a first matrix resin and a conductive filler.

In a case where the second current collector and the separator are adhered by the second sealing material, the melting point of the resin constituting the second sealing material is preferably higher than the melting point of the resin constituting the first sealing material by 30°C or higher.

In a case where the melting point of the resin constituting the second sealing material is higher than the melting point of the resin constituting the first sealing material by 30°C or higher, it is easy to adjust the temperature to a temperature at which the first sealing material is softened but the second sealing material is not softened. In a case where the charge storage element is heated at a temperature at which the first sealing material is softened but the second sealing material is not softened, the first current collector and the separator can be separated with the first sealing material as a boundary without softening the second sealing material, whereby solely the first electrode active material can be selectively isolated.

The resin constituting the second sealing material is preferably at least one selected from the group consisting of polyamide, polyimide, polyvinylidene fluoride, polyester, and polyolefin.

It is noted that polyimide is a thermosetting resin, and thus it does not have a melting point. The melting point of the resin constituting the second sealing material is the temperature at which embrittlement starts in a case where the second sealing material is heated. As a result, in a case where the second sealing material is constituted of a resin having no melting point such as thermosetting resin, thermal decomposition temperature, which is the temperature at which embrittlement starts, shall be used as the melting point of the resin constituting the second sealing material.

In the second embodiment of the second aspect of the production method for a recyclable electrode active material for a lithium ion battery, it is preferable that the isolation step includes a step of immersing the charge storage element in a solvent and an absolute value of a difference between an SP value of a resin constituting the first sealing material and an SP value of the solvent is 1.0 or less.

In a case where the absolute value of the difference between the SP value of the resin constituting the first sealing material and the SP value of the solvent to 1.0 or less, the first sealing material can be swollen and softened by a solvent, and thus the first current collector and the separator can be separated with the first sealing material as a boundary.

The SP value [unit: (cal/cm³)^{0.5}] is a value at 25°C, which is calculated according to the method described in Polymer engineering and science Vol. 14, pages 151 to 154 written by Robert F. Fedors et al.

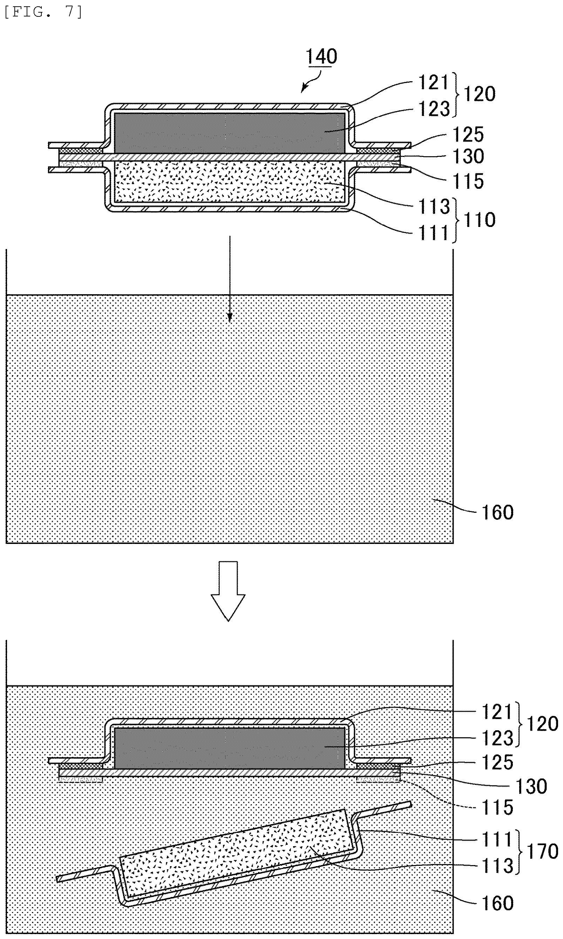

An example of the second embodiment of the second aspect of the production method for a recyclable electrode active material for a lithium ion battery will be described with reference to Fig. 7.

Fig. 7 is a cross-sectional view schematically illustrating another example of the isolation step.

In the isolation step illustrated in Fig. 7, the battery exterior body 150 is removed from the lithium ion battery 101, and then the charge storage element 140 is immersed in a solvent 160. At this time, in a case where a solvent is selected so that the absolute value of the difference between the SP value of the resin constituting the first sealing material 115 and the SP value of the solvent 160 to 1.0 or less, the first sealing material 115 swollen and softened by the solvent 160. The first sealing material 115 is swollen and softened, whereby the first current collector 111 and the separator 130 are separated with the first sealing material 115 as a boundary, and it is possible to obtain a first recyclable sheet-shaped electrode member 170 consisting of the first electrode active material layer 113 and the first current collector 111.

In a case where the charge storage element is immersed in a solvent in the isolation step, examples of the resin constituting the first sealing material include polyamide, polyvinylidene fluoride, and polyolefin.

In the case of the method of immersing the charge storage element in a solvent, the second current collector and the separator may be adhered to each other by the second sealing material.

However, in a case where the second current collector and the separator are adhered by the second sealing material, it is preferable that the SP value and the Tg of each of the resin constituting the first sealing material and the resin constituting the second sealing material respectively satisfy both of the following conditions (1) and (2).
Condition (1): [the absolute value of the difference between the SP value of the resin constituting the first sealing material and the SP value of the resin constituting the second sealing material] > 3.5
Condition (2): [the absolute value of the difference between the Tg of the resin constituting the first sealing material and the Tg of the resin constituting the second sealing material] ≥ 35
The glass transition temperature (Tg) is a value measured according to the differential scanning calorimetry (DSC) method described in JIS K 7121 (1987).

In a case where the SP value and the Tg of each of the resin constituting the first sealing material and the resin constituting the second sealing material respectively satisfy both of the above conditions (1) and (2), solely the first electrode active material can be selectively isolated by utilizing the difference in physical properties between the resin constituting the first sealing material and the resin constituting the second sealing material.

Specifically, in a case where the charge storage element is immersed in a solvent, where the difference between the SP value of the solvent and the SP value of the resin constituting the first sealing material is less than 1.0 and the difference between the SP value of the solvent and the SP value of the resin constituting the second sealing material is more than 2.5, solely the resin constituting the first sealing material can be swollen and softened by the solvent, and thus, solely the first electrode active material can be easily isolated selectively.

Further, in a case where the second current collector and the separator are adhered by the second sealing material, it is preferable that the following condition (3) is further satisfied.

Condition (3): [the absolute value of the difference between the SP value of the separator and the SP value of the resin constituting the second sealing material] ≤ 1.0

In a case where the above condition (3) is satisfied, the separator becomes less soluble in a solvent as in the case where the separator is the second sealing material.

Examples of the solvent that is used in a case where the charge storage element is immersed in a solvent include xylene (SP value: 8.8) and DMF (SP value: 12.0).

The temperature of the solvent in a case where the charge storage element is immersed in a solvent is not particularly limited; however, it is preferably 140°C to 150°C.

In the third embodiment of the second aspect of the production method for a recyclable electrode active material for a lithium ion battery, it is preferable for the isolation step to include a step of cutting the first sealing material along a direction substantially perpendicular to a direction in which the first current collector and the separator face each other.

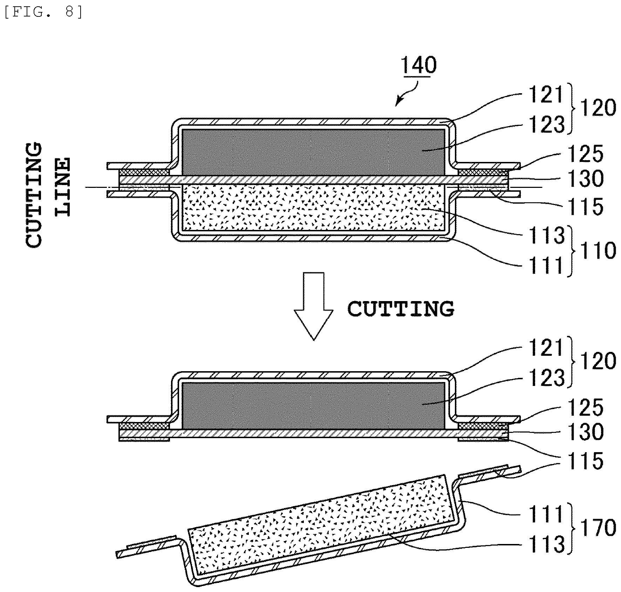

An example of the third embodiment of the second aspect of the production method for a recyclable electrode active material for a lithium ion battery will be described with reference to Fig. 8.

Fig. 8 is a cross-sectional view schematically illustrating still another example of the isolation step.

After removing the battery exterior body 150 from the lithium ion battery 101, the first sealing material 115 constituting the charge storage element 140 is cut in a direction substantially perpendicular to a direction in which the first current collector 111 and the separator 130 face each other (cut at the position indicated by the alternate long and short dash line in Fig. 8) to divide the first sealing material 115 itself. The first current collector 111 and the separator 130 are separated by cutting the first sealing material 115, whereby it is possible to obtain the first recyclable sheet-shaped electrode member 170 consisting of the first electrode active material layer 113 and the first current collector 111.

In the third embodiment of the second aspect of the production method for a recyclable electrode active material for a lithium ion battery, the kind of the resin constituting the first sealing material is not particularly limited; however, it is preferably polyolefin.

In the third embodiment of the second aspect of the production method for a recyclable electrode active material for a lithium ion battery, examples of the method of cutting the first sealing material along a direction substantially perpendicular to a direction in which the first current collector and the separator face each other include a method using a blade, a laser cutter, or the like. The blade may be a metal blade or may be a non-metal blade (for example, a ceramic blade).

The recyclable sheet-shaped electrode member 170, which is obtained by the methods illustrated in Fig. 6, Fig. 7, and Fig. 8, consists of the first electrode active material layer 113 and the first current collector 111.

In the second aspect of the production method for a recyclable electrode active material for a lithium ion battery, the first electrode active material layer 113 is further separated from the recyclable sheet-shaped electrode member 170 in the isolation step.

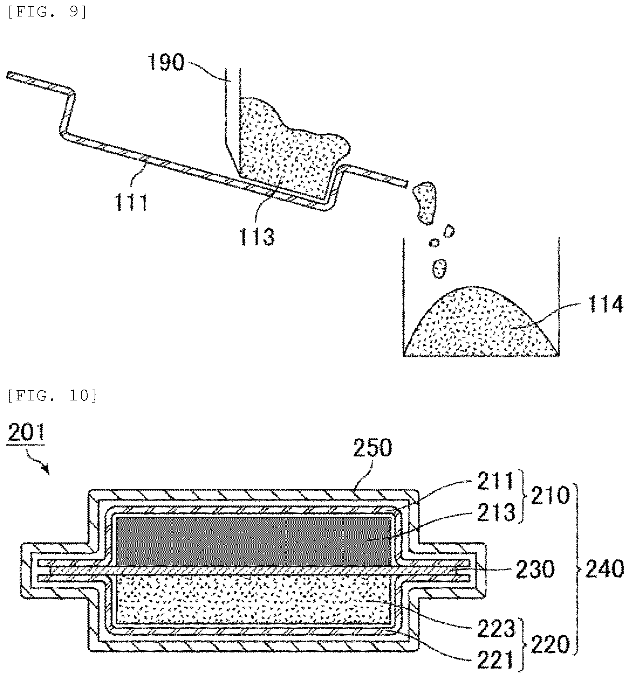

Fig. 9 is a schematic view illustrating an example of a method of separating the first electrode active material from the recyclable sheet-shaped electrode member for a lithium ion battery.

As illustrated in Fig. 9, the first electrode active material layer 113 formed on the first current collector 111 is scraped off with a squeegee 190 or the like, whereby the recyclable electrode active material 114 containing the first electrode active material can be recovered.

Further, in the method illustrated in Fig. 7, the first electrode active material layer 113 is dispersed in the solvent 160, whereby the first electrode active material layer 113 and the first current collector 111 can be separated. In such a case as well, the recyclable electrode active material can be recovered.

The use application of the recyclable electrode active material for a lithium ion battery obtained by the second aspect of the production method for a recyclable electrode active material for a lithium ion battery is not particularly limited; however, for example, the above recyclable electrode active material may be used as a raw material of the electrode active material layer in a case where a lithium ion battery is produced, and metals may be recovered therefrom by acid extraction or the like.

In a case where the step illustrated in Fig. 9 is not carried out after the steps illustrated in Fig. 6, Fig. 7, and Fig. 8, the steps illustrated in Fig. 6, Fig. 7, and Fig. 8 are included in a production method for a recyclable sheet-shaped electrode member for a lithium ion battery, which will be described later.

Subsequently, the constitution of a lithium ion battery that is used in the second aspect of the production method for a recyclable electrode active material for a lithium ion battery will be described.

It is possible to use a lithium ion battery having substantially the same constitution as the lithium ion battery that is used in the above-described first aspect of the production method for a recyclable electrode active material for a lithium ion battery described above. Accordingly, solely the points different from those of the lithium ion battery that is used in the first aspect of the production method for a recyclable electrode active material for a lithium ion battery will be described. The constitution that is not described here can be made to be the same as that of the lithium ion battery that is used in the first aspect of the production method for a recyclable electrode active material for a lithium ion battery.

The lithium ion battery that is used in the second aspect of the production method for a recyclable electrode active material for a lithium ion battery has a charge storage element consisting of a first electrode that has the first current collector and has a first electrode active material layer formed on the first current collector and consisting of a first electrode composition containing a first electrode active material, a second electrode that has the second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed.

### [First electrode]

The first electrode has the first current collector and has the first electrode active material layer containing the first electrode active material formed on the first current collector.

The first current collector may be a metal current collector consisting of metal or may be a resin current collector (a first resin current collector) consisting of a first matrix resin and a conductive filler; however, it is preferably the resin current collector (the first resin current collector).

In a case where a metal current collector is used as the first current collector, copper, aluminum, titanium, stainless steel, nickel, an alloy thereof, or the like can be used.

In a case where a resin current collector is used as the first current collector, it is possible to use the same one as the resin current collector that is used in the first aspect of the production method for a recyclable electrode active material for a lithium ion battery.

In a case where the conductive filler contained in the resin current collector is carbon, it is possible to prevent the metal derived from the first current collector from being mixed in the isolated first electrode active material.

Moreover, the SP value of the first matrix resin is not particularly limited.

Regarding both the positive electrode active material and the negative electrode active material as well, it is possible to use, as the first electrode active material constituting the first electrode active material layer, the same one as the electrode active material that is used in the first aspect of the production method for a recyclable electrode active material for a lithium ion battery.

In addition, the positive electrode active material and the negative electrode active material may be respectively a coated positive electrode active material and a coated negative electrode active material, where at least a part of a surface of each of the coated positive electrode active material and the coated negative electrode active material is coated with a coating material containing a macromolecule compound.

Regarding the pressure-sensitive adhesive resin, the electrolytic solution, and the conductive auxiliary agent as well, which may be contained in the first electrode active material layer, it is possible to use those that are respectively the same as the pressure-sensitive adhesive resin, the electrolytic solution, and the conductive auxiliary agent, which are used in the first aspect of the production method for a recyclable electrode active material for a lithium ion battery.

Moreover, the SP value of the non-aqueous solvent that is used in the electrolytic solution is not particularly limited.

The preparation method for the first electrode active material layer can also be the same as the method described in the first aspect of the production method for a recyclable electrode active material for a lithium ion battery.

### [Second electrode]

The second electrode has the second current collector and has the second electrode active material layer containing the second electrode active material formed on the second current collector.

The second electrode active material layer preferably contains an electrolytic solution containing an electrolyte.

The second current collector may be a metal current collector consisting of metal or may be a resin current collector (a second resin current collector) consisting of a second matrix resin and a conductive filler.

As the second electrode, it is possible to use the same one as the second electrode that is used in the first aspect of the production method for a recyclable electrode active material for a lithium ion battery.

As the second matrix resin constituting the second resin current collector, it is possible to use the same one as the first matrix resin constituting the first resin current collector.

Moreover, the SP value of the second matrix resin is not particularly limited.

### [Separator]

As the separator, it is possible to use the same one as the separator that is used in the first aspect of the production method for a recyclable electrode active material for a lithium ion battery.

It is noted that the SP value of the separator is not particularly limited.

### [First sealing material]

The first sealing material adheres the first current collector to the separator.

The first sealing material contains a resin.

The melting point of the resin constituting the first sealing material is preferably less than 200°C.

The resin constituting the first sealing material is preferably at least one selected from the group consisting of polyamide, polyvinylidene fluoride, and polyolefin.

### [Second sealing material]

The second current collector and the separator may be directly adhered to each other or may be adhered to each other by the second sealing material.

The second sealing material contains a resin.

In a case where the second current collector and the separator are adhered by the second sealing material, the melting point of the resin constituting the second sealing material is preferably higher than the melting point of the resin constituting the first sealing material by 30°C or higher.

In addition, in a case where the second current collector and the separator are adhered by the second sealing material, the absolute value of the difference between the SP value of the resin constituting the second sealing material and the SP value of the resin constituting the first sealing material is preferably more than 3.5.

The resin constituting the second sealing material is preferably at least one selected from the group consisting of polyamide, polyimide, polyvinylidene fluoride, polyester, and polyolefin.

The third aspect of the production method for a recyclable electrode active material for a lithium ion battery can be said to be a method of selectively isolating a positive electrode active material since it is a method of selectively isolating a positive electrode active material from a lithium ion battery to produce a recyclable positive electrode active material which is the recyclable electrode active material for a lithium ion battery.

Hereinafter, the third aspect of the production method for a recyclable electrode active material for a lithium ion battery will be described as a method of selectively isolating a positive electrode active material.

The production method for a recyclable electrode active material for a lithium ion battery according to the third aspect aims to solve the following problems of the production methods in the related art (for example, Patent Literature 1). The technique disclosed in Patent Literature 1 has had a problem that it is necessary to go through a large number of steps such as crushing, heating, separation, and purification until a new positive electrode active material is obtained from a waste lithium ion battery and thus the recycling cost is high. As a result, a method of selectively isolating a positive electrode active material from a lithium ion battery by a simple operation has been desired.

The lithium ion battery that is used in the method of selectively isolating a positive electrode active material includes all lithium ion batteries once manufactured regardless of whether or not they are actually used. As a result, in the method of selectively isolating a positive electrode active material, a lithium ion battery that has been determined to be defective in the post-manufacturing examination or an unused lithium ion battery that is generally distributed in the market may be used.

### [Method of selectively isolating positive electrode active material]

The method of selectively isolating a positive electrode active material is a method of selectively isolating a positive electrode active material from a lithium ion battery, the lithium ion battery having a charge storage element consisting of a positive electrode that has a positive electrode resin current collector and has a positive electrode active material layer formed on the positive electrode resin current collector and consisting of a positive electrode composition containing a positive electrode active material, a negative electrode that has a negative electrode resin current collector and has a negative electrode active material layer formed on the negative electrode resin current collector and consisting of a negative electrode composition containing a negative electrode active material, and a separator disposed between the positive electrode active material layer and the negative electrode active material layer, is characterized by including a suspension preparation step of isolating the charge storage element from the lithium ion battery, bringing the charge storage element into contact with a non-polar solvent having an SP value of 10 or less and a specific gravity smaller than that of water, adding water at a time of the contact or after the contact, and obtaining a suspension containing the water, the non-polar solvent, and the positive electrode active material, and a separation step of separating, after allowing the suspension to stand, an oil layer containing the non-polar solvent from a water layer containing the water and the positive electrode active material,.

It is noted that selectively isolating a positive electrode active material from a lithium ion battery means isolating a positive electrode active material constituting a lithium ion battery from the lithium ion battery in a state where components other than the positive electrode active material constituting a lithium ion battery (for example, other components constituting the positive electrode active material layer, such as a conductive auxiliary agent and a binder, and a negative electrode active material) are not contained. The positive electrode active material to be isolated may contain water or may be deactivated.

### [Lithium ion battery]

Fig. 10 is a cross-sectional view schematically illustrating an example of a lithium ion battery that is used in a method of selectively isolating a positive electrode active material.

A lithium ion battery 201 has a charge storage element 240 having a positive electrode 210 that has a positive electrode resin current collector 211 and has a positive electrode active material layer 213 containing a positive electrode active material, the positive electrode active material layer 213 being formed on the positive electrode resin current collector 211, is disposed to be opposed to a negative electrode 220 that has a negative electrode resin current collector 221 and has a negative electrode active material layer 223 containing a negative electrode active material, the negative electrode active material layer 223 being formed on the negative electrode resin current collector 221, with a separator 230 being sandwiched therebetween, and the outside of the charge storage element 240 is covered by a battery exterior body 250.

An insulating layer (not illustrated in the drawing) is formed on the inner surface of the battery exterior body 250, and the positive electrode resin current collector 211 and the negative electrode resin current collector 221 are insulated from each other. Further, external electrodes (not illustrated in the drawing) are connected to the positive electrode resin current collector 211 and the negative electrode resin current collector 221, and a part of the external electrode is led out to the outside of the battery exterior body 250.

The detailed constitution of the lithium ion battery will be described later.

### [Suspension preparation step]

In the suspension preparation step, the charge storage element isolated from a lithium ion battery is brought into contact with a non-polar solvent having an SP value of 10 or less and a specific gravity smaller than that of water, adding water at a time of the contact or after the contact, and then obtaining a suspension containing the water, the non-polar solvent, and the positive electrode active material.

A mixture of water and the non-polar solvent is also referred to as a mixed solvent.

In a case where the positive electrode resin current collector is dissolved in the non-polar solvent by bringing the charge storage element into contact with the non-polar solvent, or in a case where the positive electrode resin current collector is swollen and softened by the non-polar solvent, the positive electrode active material layer comes into direct contact with the non-polar solvent, whereby the charge storage element is isolated to the outside of the charge storage element.

Examples of the method of adding water at the time of the contact between the non-polar solvent and the charge storage element include a method of bringing the charge storage element into contact with the mixed solvent of the non-polar solvent and water and a method of adding the non-polar solvent and water at the same time to the charge storage element.

In addition, in a case where the positive electrode resin current collector and the separator are adhered by a sealing material containing an adhesive resin, it is also possible to use a method of softening the sealing material (also referred to as the positive electrode sealing material) with the non-polar solvent or the mixed solvent instead of softening the positive electrode resin current collector.

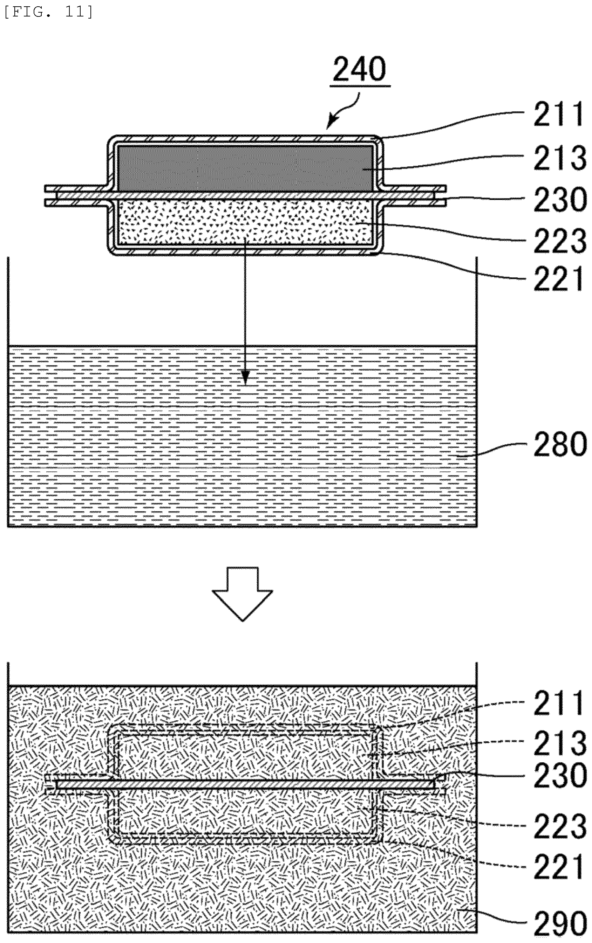

An example of the suspension preparation step will be described with reference to Fig. 11.

Fig. 11 is a schematic view illustrating an example of a suspension preparation step constituting the method of selectively isolating a positive electrode active material.

Fig. 11 is an example of the suspension preparation step in which water is added at the time of the contact between the non-polar solvent and the charge storage element.

In the suspension preparation step, as illustrated in Fig. 11, the charge storage element 240 isolated from a lithium ion battery is immersed in a mixed solvent 280 of water and a non-polar solvent having an SP value of 10 or less and a specific gravity smaller than that of water. In a case where the charge storage element 240 is immersed in the mixed solvent 280, the positive electrode resin current collector 211 and the negative electrode resin current collector 221 are dissolved. In a case where the positive electrode resin current collector 211 and the negative electrode resin current collector 221 are dissolved, the positive electrode active material layer 213 and the negative electrode active material layer 223 come into contact with the mixed solvent 280, and then, the positive electrode active material and the conductive auxiliary agent, constituting the positive electrode active material layer 213, and the negative electrode active material constituting the negative electrode active material layer 223 are dispersed in the mixed solvent 280, whereby a suspension 290 is obtained.

In the suspension preparation step illustrated in Fig. 11, the same resin current collector is used for the positive electrode resin current collector 211 and the negative electrode resin current collector 221, and thus the negative electrode resin current collector 221 is also dissolved in the mixed solvent 280; however, a resin that is not dissolved in the non-polar solvent may be selected as the resin constituting the negative electrode resin current collector 221. The resin that is not dissolved in the non-polar solvent is not dissolved in the mixed solvent either.

In a case where the resin constituting the negative electrode resin current collector 221 is a resin that is not dissolved in the non-polar solvent, the negative electrode resin current collector is not dissolved in the suspension preparation step, and thus a conductive filler and the negative electrode active material, constituting the negative electrode resin current collector, are not mixed in the suspension.

By the way, in the suspension preparation step illustrated in Fig. 11, the separator is not dissolved in the mixed solvent; however, a mixed solvent in which the separator is dissolved may be used.

In addition, in a case where the positive electrode resin current collector and the separator are adhered to each other by the positive electrode sealing material, the positive electrode sealing material may be dissolved instead of dissolving the positive electrode resin current collector with the mixed solvent.

Examples of the non-polar solvent having an SP value of 10 or less and a specific gravity smaller than that of water include benzene (SP value: 9.2, specific gravity: 0.879), toluene (SP value: 8.8, specific gravity 0.867), ethylbenzene (SP value: 8.8, specific gravity 0.866), xylene (SP value: 8.8, specific gravity: 0.880), cyclohexane (SP value: 8.2, specific gravity: 0.779), hexane (SP value: 7.3, specific gravity: 0.659), octane (SP value: 7.6, specific gravity: 0.703), and pentane (SP value: 7.0, specific gravity: 0.630).

Among these, xylene is preferable.

The proportion of water in the mixed solvent is preferably 15% to 50% by volume.

It is preferable to heat the suspension to 50°C to 100°C in the suspension preparation step.

In a case where the charge storage element is brought into contact with the non-polar solvent or the mixed solvent, vibration, ultrasonic irradiation, or the like may be carried out.

### [Separation step]

In the separation step, the suspension obtained in the suspension preparation step is allowed to stand, and then the oil layer containing the non-polar solvent and the water layer containing water and the positive electrode active material are separated.

Since the liquid components constituting the suspension are water and the non-polar solvent having an SP value of 10 or less, they are not mixed with each other and are separated into two layers. As a result, it is easy to separate the oil layer and the water layer by the separation step.

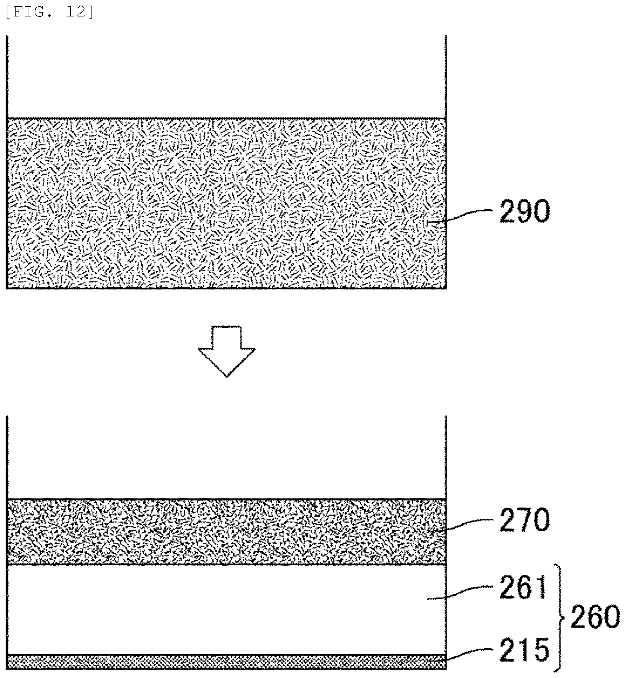

An example of the separation step will be described with reference to Fig. 12.

Fig. 12 is a schematic view illustrating an example of a separation step constituting the method of selectively isolating a positive electrode active material.

Fig. 12 is a view schematically illustrating an example of the separation step.

As illustrated in Fig. 12, the suspension 290 is allowed to stand, whereby it is separated into a water layer 260 containing water 261 and an oil layer 270 containing a non-polar solvent having an SP value of 10 or less. Since the specific gravity of the non-polar solvent is smaller than that of water, the oil layer 270 becomes the upper layer, and the water layer 260 becomes the lower layer, whereby a positive electrode active material 215 precipitates at the bottom of the water layer 260.

The oil layer 270 contains the non-polar solvent having an SP value of 10 or less and a specific gravity smaller than that of water, the resin constituting the positive electrode resin current collector, the conductive filler constituting the positive electrode resin current collector, the negative electrode active material, the resin constituting the negative electrode resin current collector, and the conductive filler constituting the negative electrode resin current collector. In a case where the positive electrode active material layer 213 contains a conductive auxiliary agent such as conductive carbon, the conductive auxiliary agent is also contained in the oil layer 270.

As a result, the positive electrode active material constituting a lithium ion battery can be selectively isolated by allowing the suspension to stand and then separating the oil layer and the water layer.

According to the above, in the method of selectively isolating a positive electrode active material, it is possible to selectively isolate the positive electrode active material from a lithium ion battery by a simple operation.

The use application of the isolated positive electrode active material is not particularly limited; however, examples thereof include use as a material for the positive electrode active material and use for isolating metal ions by acid extraction.

In a case where metal ions are isolated by acid extraction, it is preferable to further include, after the separation step, an extraction step of isolating metal ions from the positive electrode active material in the water layer by adjusting the pH of the water layer to 2 to 6.

The non-polar solvent has a specific gravity smaller than that of water. In a case where the specific gravity of the non-polar solvent is smaller than that of water, the upper side layer (the upper layer) becomes an oil layer and the lower side layer (the lower layer) becomes a water layer, and thus the positive electrode active material that precipitates in the water layer can be easily separated.

The suspension may contain materials constituting the negative electrode active material layer, for example, a negative electrode active material and a conductive auxiliary agent.

Since the negative electrode active material is generally constituted of a carbon-based material, it is lipophilic like the conductive auxiliary agent and the conductive filler and thus is present in the oil layer.

As a result, even in a case where the negative electrode active material or the conductive auxiliary agent is present in the suspension, the positive electrode active material can be selectively isolated.

It is noted that the SP value (cal/cm³)^{0.5} is a value at 25°C, which is calculated according to the method described in Polymer engineering and science Vol. 14, pages 151 to 154 written by Robert F. Fedors et al.

Subsequently, the constitution of a lithium ion battery that is used in the method of selectively isolating a positive electrode active material, which is the third aspect of the production method for a recyclable electrode active material for a lithium ion battery, will be described.

A lithium ion battery that is used in the method of selectively isolating a positive electrode active material includes a positive electrode that has a positive electrode resin current collector and has a positive electrode active material layer containing a positive electrode active material, the positive electrode active material layer being formed on the positive electrode resin current collector; and a negative electrode that has a negative electrode resin current collector and has a negative electrode active material layer containing a negative electrode active material, the negative electrode active material layer being formed on the negative electrode resin current collector.

The positive electrode has a positive electrode resin current collector and a positive electrode active material layer containing a positive electrode active material.

In addition to the positive electrode active material, the positive electrode active material layer may contain a conductive auxiliary agent, a non-aqueous electrolytic solution, and the like.

The positive electrode resin current collector contains a matrix resin and a conductive filler.

The conductive filler is selected from materials having conductivity.

Specific examples thereof include carbon [graphite and carbon black (acetylene black, Ketjen black, furnace black, channel black, thermal lamp black, and the like)].

One kind of these conductive fillers may be used alone, or two or more kinds thereof may be used in combination.

The average particle size of the conductive filler is not particularly limited; however, it is preferably 0.01 to 10 µm, more preferably 0.02 to 5 µm, and still more preferably 0.03 to 1 µm, from the viewpoint of the electrical characteristics of the battery. The "particle size" means the maximum distance L among the distances between any two points on the contour line of the particle. As the value of the "average particle size", the average value of the particle sizes of the particles observed in several to several tens of visual fields using an observation means such as a scanning electron microscope (SEM) or a transmission electron microscope (TEM) shall be adopted.

The shape (the form) of the conductive filler is not limited to the particle form, may be a form other than the particle form, and may be a form practically applied as a so-called filler-based conductive resin composition such as carbon nanotubes.

The conductive filler may be a conductive fiber of which the shape is fibrous.

Examples of the conductive fiber include a carbon fiber such as a PAN-based carbon fibers or a pitch-based carbon fiber, a conductive fiber obtained by uniformly dispersing a metal having good conductivity or graphite in the synthetic fiber, and a conductive fiber obtained by coating a surface of an organic fiber with a resin containing a conductive substance. Among these conductive fibers, a carbon fiber is preferable. In addition, a polypropylene resin in which graphene is kneaded is also preferable.

In a case where the conductive filler is a conductive fiber, the average fiber diameter thereof is preferably 0.1 to 20 µm.

The weight proportion of the conductive filler in the positive electrode resin current collector is preferably 5% to 90% by weight and more preferably 20% to 80% by weight.

In particular, in a case where the conductive filler is carbon, the weight proportion of the conductive filler is preferably 20% to 30% by weight.

Examples of the matrix resin constituting the positive electrode resin current collector include a polyolefin resin and a polyvinylidene fluoride, and a polyolefin resin is preferable.

These resins have high solubility in a non-polar solvent having an SP value of 10 or less.

Examples of the polyolefin resin include polyethylene (PE), polypropylene (PP), polycycloolefin (PCO), and polymethylpentene (PMP).

Among these, polyethylene (PE) or polypropylene (PP) is preferable.

As the polyolefin resin, for example, the following products are available on the market.
PE: "NOVATEC LL UE320" and "NOVATEC LL UJ960", both manufactured by Japan polyethylene Corporation.
PP: "SunAllomer PM854X", "SunAllomer PC684S", "SunAllomer PL500A", "SunAllomer PC630S", "SunAllomer PC630A", and "SunAllomer PB522M", all manufactured by SunAllomer Ltd.,; "Prime Polymer J-2000GP" manufactured by Prime Polymer Co., Ltd.,;"WINTEC WFX4T "manufactured by Japan Polypropylene Corporation,"; and "SUMITOMO NOBLEN FL6737" manufactured by Sumitomo Chemical Co., Ltd.
PMP: "TPX" manufactured by Mitsui Chemicals, Inc.

The melt flow rate of the polyolefin resin is not particularly limited; however, a polyolefin having a melt mass flow rate of 12 to 200 g/10 min is preferable, where the melt mass flow rate is measured according to the method described in JIS K7210: 1990 under the conditions of a temperature of 230°C and a load of 2.16 kg.

In addition to the conductive filler and the resin, the positive electrode resin current collector may contain other components (a dispersing agent, a crosslinking accelerator, a crosslinking agent, a coloring agent, an ultraviolet absorbing agent, a plasticizer, and the like).

The thickness of the positive electrode resin current collector is not particularly limited; however, it is preferably 5 to 400 µm.

Examples of the positive electrode active material include a composite oxide of lithium and a transition metal {a composite oxide having one kind of transition metal (LiCoO₂, LiNiO₂, LiAlMnO₄, LiMnO₂, LiMn₂O₄, or the like), a composite oxide having two kinds of transition metal elements (for example, LiFeMnO₄, LiNi₁₋ₓCoₓO₂, LiMn_{1-y}Co_{y}O₂, LiNi_{1/3}Co_{1/3}Al_{1/3}O₂, and LiNi_{0.8}Co_{0.15}Al_{0.05}O₂), a composite oxide having three or more kinds of metal elements [for example, LiMₐM'_{b}M"_{c}O₂ (where M, M', and M" are transition metal elements different each other and satisfy a + b + c = 1, and one example is LiNi_{1/3}Mn_{1/3}Co_{1/3}O₂)], or the like}, a lithium-containing transition metal phosphate (for example, LiFePO₄, LiCoPO₄, LiMnPO₄, or LiNiPO₄), a transition metal oxide (for example, MnO₂ and V₂O₅), and a transition metal sulfide (for example, MoS₂ or TiS₂). Two or more thereof may be used in combination.

Here, the lithium-containing transition metal phosphate may be one in which a part of transition metal sites is substituted with another transition metal.

The volume average particle size of the positive electrode active material is preferably 0.01 to 100 µm, more preferably 0.1 to 35 µm, and still more preferably 2 to 30 µm, from the viewpoint of the electrical characteristics of the battery.

The volume average particle size of the positive electrode active material means the particle size (Dv50) at an integrated value of 50% in the particle size distribution obtained by the microtrack method (the laser diffraction/scattering method). The microtrack method is a method of determining a particle size distribution by using scattered light obtained by irradiating particles with laser light. A MICROTRAC manufactured by Nikkiso Co., Ltd. can be used for measuring the volume average particle size.

The conductive auxiliary agent is selected from materials having conductivity.

Specific examples thereof include carbon [graphite and carbon black (acetylene black, Ketjen black, furnace black, channel black, thermal lamp black, and the like)].

One kind of these conductive auxiliary agents may be used alone, or two or more kinds thereof may be used in combination.

The average particle size of the conductive auxiliary agent is not particularly limited; however, it is preferably 0.01 to 10 µm, more preferably 0.02 to 5 µm, and still more preferably 0.03 to 1 µm, from the viewpoint of the electrical characteristics of the battery. In the present specification, the "particle size" means the maximum distance L among the distances between any two points on the contour line of the conductive auxiliary agent. As the value of the "average particle size", the average value of the particle sizes of the particles observed in several to several tens of visual fields using an observation means such as a scanning electron microscope (SEM) or a transmission electron microscope (TEM) shall be adopted.

The shape (the form) of the conductive auxiliary agent is not limited to the particle form, may be a form other than the particle form, and may be a form practically applied as a so-called filler-based conductive resin composition such as carbon nanotubes.

The conductive auxiliary agent may be a conductive fiber of which the shape is fibrous.

Examples of the conductive fiber include a carbon fiber such as a PAN-based carbon fibers or a pitch-based carbon fiber, a conductive fiber obtained by uniformly dispersing a metal having good conductivity or graphite in the synthetic fiber, and a conductive fiber obtained by coating a surface of an organic fiber with a resin containing a conductive substance. Among these conductive fibers, a carbon fiber is preferable. In addition, a polypropylene resin in which graphene is kneaded is also preferable.

In a case where the conductive auxiliary agent is a conductive fiber, the average fiber diameter thereof is preferably 0.1 to 20 µm.

As the non-aqueous electrolytic solution, a known non-aqueous electrolytic solution containing an electrolyte and a non-aqueous solvent, which is used in the manufacturing of a lithium ion battery, can be used.

As the electrolyte, an electrolyte that is used in a known non-aqueous electrolytic solution can be used. Examples thereof include lithium salts of inorganic acids, such as LiPF₆, LiBF₄, LiSbF₆, LiAsF₆, and LiClO₄; and lithium salts of organic acids, such as LiN(FSO₂)₂, LiN(CF₃SO₂)₂, LiN(C₂F₅SO₂)₂, and LiC(CF₃SO₂)₃. Among these, LiPF₆ or LiN(FSO₂)₂ is preferable from the viewpoints of battery output and charging and discharging cycle characteristics.

As the non-aqueous solvent, a non-aqueous solvent that is used in the known non-aqueous electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

Examples of the lactone compound include a 5-membered ring lactone compound (γ-butyrolactone, γ-valerolactone, or the like) and a 6-membered ring lactone compound (δ-valerolactone or the like).

Examples of the cyclic carbonic acid ester include propylene carbonate, ethylene carbonate, and butylene carbonate.

Examples of the chain-like carbonic acid ester include dimethyl carbonate, methyl ethyl carbonate, diethyl carbonate, methyl-n-propyl carbonate, ethyl-n-propyl carbonate, and di-n-propyl carbonate.

Examples of the chain-like carboxylic acid ester include methyl acetate, ethyl acetate, propyl acetate, and methyl propionate.

Examples of the cyclic ether include tetrahydrofuran, tetrahydropyran, 1,3-dioxolane, and 1,4-dioxane.

Examples of the chain-like ether include dimethoxymethane and 1,2-dimethoxyethane.

Examples of the phosphoric acid ester include trimethyl phosphate, triethyl phosphate, ethyl dimethyl phosphate, diethyl methyl phosphate, tripropyl phosphate, tributyl phosphate, tri(trifluoromethyl)phosphate, tri(trichloromethyl)phosphate, tri(trifluoroethyl)phosphate, tri(triperfluoroethyl)phosphate, 2-ethoxy-1,3,2-dioxaphosphoran-2-one, 2-trifluoroethoxy-1,3,2-dioxaphosphoran-2-one, and 2-methoxyethoxy-1,3,2-dioxaphosphoran-2-one.

Examples of the nitrile compound include acetonitrile. Examples of the amide compound include DMF. Examples of the sulfone include dimethyl sulfone and diethyl sulfone.

One kind of non-aqueous solvent may be used alone, or two or more kinds thereof may be used in combination.

Among the non-aqueous solvents, a lactone compound, a cyclic carbonic acid ester, a chain-like carbonic acid ester, or a phosphoric acid ester is preferable, a lactone compound, a cyclic carbonic acid ester, or a chain-like carbonic acid ester is still more preferable, and a mixed solution of a cyclic carbonic acid ester and a chain-like carbonic acid ester is particularly preferable, from the viewpoint of battery output and charging and discharging cycle characteristics. The most preferable one is a mixed solution of ethylene carbonate (EC) and dimethyl carbonate (DMC), or a mixed solution of ethylene carbonate (EC) and propylene carbonate (PC).

The positive electrode active material layer may further contain a known solution-drying type binder (carboxymethyl cellulose, SBR latex, polyvinylidene fluoride, or the like), a pressure-sensitive adhesive resin, and the like.

However, it is preferably a non-bound body that does not contain a known binder (also referred to as a binding material).

Further, it is desirable that the positive electrode active material layer contains a pressure-sensitive adhesive resin. This is because in a case where the electrode composition contains the above-described known solution-drying type binder, it is necessary to integrate the electrode composition by carrying out a drying step after the electrode active material layer forming step; however, in a case where the electrode composition contains a pressure-sensitive adhesive resin, it is not necessary to be able to integrate the electrode composition with a slight pressure at room temperature without carrying out a drying step. In a case where the drying step is not carried out, the shrinkage or cracking of the electrode composition due to heating does not occur, which is preferable.

Further, in the electrode composition containing the electrode active material, the non-aqueous electrolytic solution, and the pressure-sensitive adhesive resin, the electrode active material layer is maintained as the non-bound body even after undergoing the electrode active material layer forming step. In a case where the electrode active material layer is a non-bound body, the electrode active material layer can be made thicker, and a battery having high capacity can be obtained, which is preferable.

As the pressure-sensitive adhesive resin, it is possible to suitably use, for example, a resin obtained by mixing the non-aqueous secondary battery active material coating resin, described in Japanese Unexamined Patent Application, First Publication No. 2017-054703, with a small amount of an organic solvent and adjusting the glass transition temperature thereof to room temperature or lower, and those described as adhesives in Japanese Unexamined Patent Application, First Publication No. H10-255805 and the like.

Here, the non-bound body means that electrode active materials constituting the electrode composition are not bound to each other, where "bound" means that electrode active materials are irreversibly bound to each other.

The solution-drying type binder means a binder that dries and solidifies in a case where a solvent component is volatilized, thereby firmly adhering and fixing active materials to each other. In addition, the pressure-sensitive adhesive resin means a resin having pressure-sensitive adhesiveness (an adhering property obtained by applying a slight pressure without using water, solvent, heat, or the like) without solidifying even in a case where a solvent component is volatilized and dried.

The solution-drying type binder and the pressure-sensitive adhesive resin are different materials.

The positive electrode active material may be a coated positive electrode active material, where at least a part of a surface of the coated positive electrode active material is coated with a coating material containing a macromolecule compound.

In a case where the periphery of the positive electrode active material is covered by a coating material, the volume change of the electrode is alleviated, and thus the expansion of the electrode can be suppressed.

As the macromolecule compound constituting the coating material, those described as the non-aqueous secondary battery active material coating resin in Japanese Unexamined Patent Application, First Publication No. 2017-054703 can be suitably used.

A method of producing the above-described coated positive electrode active material will be described.

For example, the coated positive electrode active material may be produced by mixing a macromolecule compound and a positive electrode active material, as well as a conducting agent that is used as necessary, may be produced by mixing a macromolecule compound with a conducting agent to prepare a coating material, and then mixing the coating material with a positive electrode active material in a case where a conducting agent is used as the coating material, and may be produced by mixing a macromolecule compound, a conducting agent, and a positive electrode active material.

In a case where the positive electrode active material, the macromolecule compound, and the conducting agent are mixed, the mixing order is not particularly limited; however, it is preferable that the positive electrode active material is mixed with the macromolecule compound and then the conducting agent is further added and further mixed.

By the above method, at least a part of the surface of the positive electrode active material is coated with a coating material containing the macromolecule compound and a conducting agent that is used as necessary.

As the conducting agent which is an optional component of the coating material, the same one as the conductive auxiliary agent constituting the positive electrode active material layer can be suitably used.

The negative electrode has a negative electrode resin current collector and a negative electrode active material layer containing a negative electrode active material.

In addition to the negative electrode active material, the negative electrode active material layer may contain a conductive auxiliary agent, a non-aqueous electrolytic solution, a binder, a pressure-sensitive adhesive resin.

As the conductive auxiliary agent, the non-aqueous electrolytic solution, the binder, and the pressure-sensitive adhesive resin, the same ones as those of the positive electrode can be suitably used.

In addition, the negative electrode active material may be a coated negative electrode active material, where at least a part of a surface of the coated negative electrode active material is coated with a coating material containing a macromolecule compound. The coating material constituting the coated negative electrode active material is preferably the same one as that of the coated positive electrode active material.

The negative electrode resin current collector contains a conductive filler and a resin.

As the conductive filler and the resin, the same ones as the conductive filler and the resin, constituting the positive electrode resin current collector, can be suitably used.

The weight proportion of the conductive filler in the negative electrode resin current collector is preferably 5% to 90% by weight and more preferably 20% to 80% by weight.

In particular, in a case where the conductive filler is carbon, the weight proportion of the conductive filler is preferably 20% to 30% by weight.

Examples of the negative electrode active material include a carbon-based material [graphite, non-graphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke), a carbon fiber, or the like], a conductive macromolecule (for example, polyacetylene or polypyrrole), and a metal (tin, aluminum, zirconium, titanium, or the like).

The carbon-based material is preferably graphite, non-graphitizable carbon, or amorphous carbon.

A part or all of the negative electrode active material may be subjected to a pre-doping treatment by which lithium or lithium ions are incorporated into a part or all of the negative electrode active material.

The volume average particle size of the negative electrode active material is preferably 0.01 to 100 µm, more preferably 0.1 to 20 µm, and still more preferably 2 to 10 µm, from the viewpoint of the electrical characteristics of the battery.

Examples of the separator include known separators for a lithium ion battery, such as a porous film consisting of polyethylene or polypropylene, a lamination film of a porous polyethylene film and a porous polypropylene, a non-woven fabric consisting of a synthetic fiber (a polyester fiber, an aramid fiber, or the like), a glass fiber, or the like and those above of which the surface is attached with ceramic fine particles such as silica, alumina, or titania.

The number of sheets of the separator is not particularly limited; however, it is preferably two or more.

In a case where the number of sheets of the separator is two or more, it is possible to separate, before the impregnation step, a positive electrode sheet consisting of the positive electrode resin current collector, the positive electrode active material layer, and a separator (a positive electrode side separator) in contact with the positive electrode active material, and a negative electrode sheet consisting of the negative electrode resin current collector, the negative electrode active material layer, and a separator (a negative electrode side separator) in contact with the negative electrode active material layer. In a case where the positive electrode sheet and the negative electrode sheet are separated before the suspension preparation step, solely the positive electrode sheet can be immersed in the mixed solvent, and thus it is possible to reliably prevent the negative electrode active material from being mixed in the mixed solvent.

The positive electrode resin current collector and the separator, and the negative electrode resin current collector and the separator may be adhered to each other by a sealing material containing an adhesive resin.

The sealing material provided between the positive electrode resin current collector and the separator is also referred to as a positive electrode sealing material.

The sealing material provided between the negative electrode resin current collector and the separator is also referred to as a negative electrode sealing material.

The positive electrode resin current collector and the separator are preferably adhered to each other with a positive electrode sealing material being sandwiched therebetween at an outer peripheral edge portion on which the positive electrode active material layer is not formed.

The negative electrode resin current collector and the separator are preferably adhered to each other with a negative electrode sealing material being sandwiched therebetween at an outer peripheral edge portion on which the negative electrode active material layer is not formed.

Examples of the adhesive resin contained in the positive electrode sealing material and the negative electrode sealing material include polyamide, polyimide, polyvinylidene fluoride, polyester, and polyolefin.

The adhesive resin contained in the positive electrode sealing material and the adhesive resin contained in the negative electrode sealing material may be the same or different from each other.

Further, the adhesive resin contained in the positive electrode sealing material may be the same as the resin constituting the positive electrode resin current collector.

### [Production method for solution containing metal ion]

The production method for a solution containing metal ions of metal elements constituting an electrode active material of the present invention is characterized by including a dispersion liquid preparation step of dispersing a recyclable electrode active material obtained by the production method for a recyclable electrode active material for a lithium ion battery according to the present invention, in a solvent containing water, to obtain an electrode active material dispersion liquid; and a pH adjustment step of adjusting a pH of the electrode active material dispersion liquid such that a hydrogen ion exponent (pH) of an aqueous solution fractionated from the electrode active material dispersion liquid at 25°C is 5 or less.

The recyclable electrode active material for a lithium ion battery may be one obtained in the first aspect of the production method for a recyclable electrode active material for a lithium ion battery or may be one obtained in the second aspect of the production method for a recyclable electrode active material for a lithium ion battery.

Further, as the recyclable electrode active material for a lithium ion battery, the positive electrode active material obtained by the method of selectively isolating a positive electrode active material, which is the third aspect of the production method for a recyclable electrode active material for a lithium ion battery, may be used.

Hereinafter, an aspect of obtaining a solution containing metal ions from the recyclable electrode active material for a lithium ion battery will be described.

The production method for a solution containing metal ions of metal elements constituting an electrode active material of the present invention may include a dispersion liquid preparation step of dispersing a recyclable electrode active material for a lithium ion battery obtained by the above-described production method for a recyclable electrode active material for a lithium ion battery, in a solvent containing water, to obtain an electrode active material dispersion liquid; and a pH adjustment step of adjusting a pH of the electrode active material dispersion liquid such that a hydrogen ion exponent (pH) of an aqueous solution fractionated from the electrode active material dispersion liquid at 25°C is 5 or less.

In the production method for a solution containing metal ions of metal elements constituting the electrode active material, the recyclable electrode active material obtained by the production method for a recyclable electrode active material is dispersed in a solvent containing water to obtain an electrode active material dispersion liquid. After obtaining the metal element, and then the pH of the electrode active material dispersion liquid is adjusted to a predetermined value to ionize metal elements constituting the electrode active material, which are contained in the electrode active material dispersion liquid, whereby a solution (hereinafter, also referred to as a metal ion solution) containing metal ions of metal elements constituting the electrode active material can be produced.

In the above-described production method for a recyclable electrode active material, since the lithium ion battery is not heated at a high temperature, for example, 400°C to 550°C, the sintering of particles of the obtained recyclable electrode active material do not proceed, and thus particles having a large specific surface area can be obtained. As a result, the ion extraction efficiency at the time of acid leaching with an acidic liquid is high, and ion extraction can be carried out efficiently.

### [Dispersion liquid adjustment step]

In the dispersion liquid adjustment step, the recyclable electrode active material obtained by the above-described production method for a recyclable electrode active material for a lithium ion battery is dispersed in a solvent containing water to obtain an electrode active material dispersion liquid.

The solvent other than the water may be a non-polar solvent or a polar solvent. The polar solvent may be a protic polar solvent or an aprotic polar solvent.

Examples of the non-polar solvent include toluene, xylene, hexane, heptane, and octane, where two or more kinds of them may be used in combination.

Examples of the protic polar solvent include methanol and ethanol, where two or more kinds of them may be used in combination.

Examples of the aprotic polar solvent include dimethylformamide (DMF) and dimethyl sulfoxide (DMSO), where two or more of them may be used in combination.

The solvent is preferably a mixed solvent of a non-polar solvent and water, or a single solvent of water. The proportion of water in the mixed solvent of the non-polar solvent and water is preferably 50% to 80% by weight.

The single solvent of water means that solely water is used as the solvent.

The water-containing solvent for dispersing the electrode composition is preferably a mixed solvent of water and toluene or a mixed solvent of water and xylene from the viewpoint of metal ion extraction efficiency.

The solid content concentration in the electrode active material dispersion liquid is not particularly limited; however, it is preferably 50% by weight or less.

In a case where the solid content concentration in the electrode active material dispersion liquid exceeds 50% by weight, the proportion of the solvent in the electrode active material dispersion liquid decreases, and the extraction rate of metal ions after the pH adjustment step may decrease.

The electrode active material dispersion liquid may contain a solid component other than the electrode composition.

Examples of the solid component other than the electrode composition include a current collector, a separator, and a battery exterior body. It is desirable that these solid components are separated before the pH adjustment step.

Examples of the method of separating solid components include separation using specific gravity, filtration, and centrifugation.

### [PH adjustment step]

In the pH adjustment step, the pH of the electrode active material dispersion liquid is adjusted so that the hydrogen ion exponent (pH) of the aqueous solution fractionated from the electrode active material dispersion liquid obtained in the dispersion liquid adjustment step at 25°C is 5 or less. It is noted that the fractionated aqueous solution refers to a solution obtained by isolating a part or all of the electrode active material dispersion liquid and removing a solvent other than the water.

The pH of the aqueous solution at 25°C, adjusted by the pH adjustment step, is preferably 3 or more and 5 or less.

Examples of the method of adjusting the pH of the aqueous solution to 5 or less include a method of mixing an electrode active material dispersion liquid with an acid agent.

Examples of the acid agent include sulfuric acid, hydrochloric acid, nitric acid, citric acid, and gluconic acid, succinic acid, and two or more kinds of them may be used in combination. The acid agent is preferably sulfuric acid.

The pH of the aqueous solution can be measured using a commercially available pH meter.

The method of separating the aqueous solution from the electrode active material dispersion liquid is not particularly limited; however, examples thereof include a method in which known separation methods such as filtration, centrifugation, static separation, and adsorption separation are appropriately combined.

Here, the aqueous solution is separated not in a state of pure water but in a state of containing a solute. That is, a method for separating high-purity water from the electrode active material dispersion liquid, such as distillation and a method of using an ion exchange resin, is not adopted.

In a case of adjusting the pH of the electrode active material dispersion liquid, acid may be added little by little to the electrode active material dispersion liquid, the electrode active material dispersion liquid may be added little by little to the acid agent, or the electrode active material dispersion liquid may be mixed with a predetermined amount of the acid agent at one time.

The time required for the pH adjustment step is not particularly limited; however, it is preferably 1 to 3 hours.

The temperature of the electrode active material dispersion liquid in the pH adjustment step is not particularly limited; however, it is preferably 10°C or higher.

In the pH adjustment step, the electrode active material dispersion liquid may be stirred, or the electrode active material dispersion liquid may be irradiated with ultrasonic waves.

The metal ion solution produced by the production method for a metal ion solution of the present invention can be used for producing of an active material for a lithium ion battery, a catalyst for a chemical reaction, and the like.

Examples of the metal ion contained in the metal ion solution include a lithium ion, a nickel ion, a cobalt ion, a manganese ion, an iron ion, an aluminum ion, a vanadium ion, a molybdenum ion, and a titanium ion.

Hereinafter, a description will be made for a lithium ion battery suitable as the lithium ion battery which is used in the production method for a recyclable electrode active material for a lithium ion battery of the present invention, which is used suitably in the first aspect of the production method for a recyclable electrode active material for a lithium ion battery.

### [Lithium ion battery]

One embodiment of the lithium ion battery of the present invention is a lithium ion battery characterized by including a charge storage element consisting of a first electrode that has a first resin current collector and has a first electrode active material layer formed on the first resin current collector and consisting of a first electrode composition containing a first electrode active material, a second electrode that has a second resin current collector and has a second electrode active material layer formed on the second resin current collector and consisting of a second electrode composition containing a second electrode active material, and a separator disposed between the first electrode active material layer and the second electrode active material layer, in which the first resin current collector contains a first matrix resin and a first conductive filler, the second resin current collector contains a second matrix resin and a second conductive filler, a melting point of the first matrix resin is less than 200°C, and a melting point of the second matrix resin is higher than the melting point of the first matrix resin by 30°C or higher.

In one embodiment of the lithium ion battery of the present invention, the first resin current collector contains a first matrix resin and a first conductive filler, the second resin current collector contains a second matrix resin and a second conductive filler, a melting point of the first matrix resin is less than 200°C, and a melting point of the second matrix resin is higher than the melting point of the first matrix resin by 30°C or higher.

As a result, in a case where in the isolation step, the charge storage element is heated at a temperature equal to or higher than the melting point of the first matrix resin and lower than 200°C, at least a part of the first resin current collector can be removed, and a first electrode composition can be selectively isolated to the outside.

As a result, one embodiment of the lithium ion battery of the present invention is suitable as a lithium ion battery that is used in the production method for a recyclable electrode active material for a lithium ion battery of the present invention. In addition, it is suitable as a lithium ion battery that is used in the first aspect of the production method for a recyclable electrode active material for a lithium ion battery will be described.

Another embodiment of the lithium ion battery is a lithium ion battery characterized by having a charge storage element consisting of a first electrode that has a first resin current collector and has a first electrode active material layer formed on the first resin current collector and consisting of a first electrode composition containing a first electrode active material, a second electrode that has a second resin current collector and has a second electrode active material layer formed on the second resin current collector and consisting of a second electrode composition containing a second electrode active material, and a separator disposed between the first electrode active material layer and the second electrode active material layer, in which the first resin current collector contains a first matrix resin and a first conductive filler, the second resin current collector contains a second matrix resin and a second conductive filler, and the SP value and the Tg of each of the first matrix resin and the second matrix resin respectively satisfy the following conditions (1) and (2).
Condition (1): [the absolute value of the difference between the SP value of the first matrix resin and the SP value of the second matrix resin] > 3.5
Condition (2): [the absolute value of the difference between Tg of the first matrix resin and Tg of the second matrix resin] ≥ 35

In another embodiment of the lithium ion battery, the first resin current collector contains a first matrix resin and a first conductive filler, the second resin current collector contains a second matrix resin and a second conductive filler, and the SP value and the Tg of each of the first matrix resin and the second matrix resin respectively satisfy the above conditions (1) and (2).

In a case where the charge storage element is immersed in a solvent, where the difference between the SP value of the solvent and the SP value of the first matrix resin is 1.0 or less and the difference between the SP value of the solvent and the SP value of the second matrix resin is more than 2.5, the first matrix resin is dissolved in the solvent to remove at least a part of the first resin current collector containing the first matrix resin, whereby the first electrode active material can be selectively isolated.

As a result, the above-described other embodiment of the lithium ion battery of the present invention is suitable as a lithium ion battery that is used in the production method for a recyclable electrode active material for a lithium ion battery of the present invention. In addition, it is suitable as a lithium ion battery that is used in the first aspect of the production method for a recyclable electrode active material for a lithium ion battery will be described.

These lithium ion batteries described above can be manufactured by, for example, a step of preparing a first resin current collector, a step of forming a first electrode active material layer containing the first electrode active material on the first resin current collector to obtain a first electrode, a step of preparing a second current collector, a step of forming a second electrode active material layer containing the second electrode active material on the second current collector to obtain a second electrode, and a step of laminating the first electrode, the second electrode, and a separator so that the first electrode active material layer and the second electrode active material layer are opposed to each other with the separator being sandwiched therebetween.

Hereinafter, a description will be made for a lithium ion battery suitable as the lithium ion battery which is used in the production method for a recyclable electrode active material for a lithium ion battery of the present invention, which is used suitably in the second aspect of the production method for a recyclable electrode active material for a lithium ion battery.

The first embodiment of the lithium ion battery is a lithium ion battery characterized by having a charge storage element consisting of a first electrode that has a first current collector and has a first electrode active material layer formed on the first current collector and consisting of a first electrode composition containing a first electrode active material; a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed, the second electrode current collector and the separator are adhered to each other with the second sealing material being sandwiched therebetween at an outer peripheral edge portion on which the second electrode active material layer is not formed, the melting point of the resin constituting the first sealing material is lower than 200°C, and the melting point of the resin constituting the second sealing material is higher than the melting point of the resin constituting the first sealing material by 30°C or higher.

In the first embodiment of the lithium ion battery, the melting point of the resin constituting the first sealing material is less than 200°C, and the melting point of the resin constituting the second sealing material is higher than the melting point of the resin constituting the first sealing material by 30°C or higher.

As a result, in a case where the charge storage element is heated at a temperature equal to or higher than the melting point of the resin constituting the first sealing material and lower than 200°C, the first sealing material can be softened, and the first current collector and the separator are separated with the first sealing material as a boundary, whereby the first electrode composition can be selectively isolated.

As a result, the first embodiment of the lithium ion battery of the present invention is suitable as a lithium ion battery that is used in the production method for a recyclable electrode active material for a lithium ion battery of the present invention. In addition, it is suitable as a lithium ion battery that is used in the second aspect of the production method for a recyclable electrode active material for a lithium ion battery will be described.

Further, it is suitable as a lithium ion battery that is used in a production method for a recyclable sheet-shaped electrode member for a lithium ion battery, which will be described later.

The second embodiment of the lithium ion battery is a lithium ion battery characterized by having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed, the second electrode current collector and the separator are adhered to each other with the second sealing material being sandwiched therebetween at an outer peripheral edge portion on which the second electrode active material layer is not formed, and the SP value and the Tg of each of the first sealing material and the second sealing material respectively satisfy the following conditions (1) and (2).
Condition (1): [the absolute value of the difference between the SP value of the resin constituting the first sealing material and the SP value of the resin constituting the second sealing material] > 3.5
Condition (2): [the absolute value of the difference between the Tg of the resin constituting the first sealing material and the Tg of the resin constituting the second sealing material] ≥ 35

In the second embodiment of the lithium ion battery, the SP value and the Tg of each of the first sealing material and the second sealing material respectively satisfy all of the above conditions.

As a result, in a case where the charge storage element is immersed in a solvent, where the difference between the SP value of the solvent and the SP value of the resin constituting the first sealing material is less than 1.0 and the difference between the SP value of the solvent and the SP value of the resin constituting the second sealing material is more than 2.5, the first sealing material is dissolved in the solvent to separate the first current collector from the separator with the first sealing material as a boundary, whereby the first electrode active material layer can be selectively isolated.

As a result, the second embodiment of the lithium ion battery of the present invention is suitable as a lithium ion battery that is used in the production method for a recyclable electrode active material for a lithium ion battery of the present invention. In addition, it is suitable as a lithium ion battery that is used in the second aspect of the production method for a recyclable electrode active material for a lithium ion battery will be described.

Further, it is suitable as a lithium ion battery that is used in a production method for a recyclable sheet-shaped electrode member for a lithium ion battery, which will be described later.

### [Manufacturing method for lithium ion battery]

A lithium ion battery can be manufactured by, for example, a step of preparing a first current collector, a step of forming a first electrode active material layer containing the first electrode active material on the first current collector to obtain a first electrode sheet-shaped member, a step of preparing a second current collector, a step of forming a second electrode active material layer containing the second electrode active material on the second current collector to obtain a second electrode sheet-shaped member, a step of adhering the first current collector and the separator with the first sealing material to cover the first electrode active material layer with the first current collector, the separator, and the first sealing material, and a step of adhering the second current collector and the separator with the second sealing material to cover the second electrode active material layer with the second current collector, the separator, and the second sealing material.

The method of adhering the first current collector and the separator with the first sealing material is not particularly limited; however, examples thereof include a method of applying a resin serving as the first sealing material onto the edge part of the separator to adhere the first current collector. In this case, the first electrode active material layer is made to be sandwiched between the separator and the first current collector.

The same applies to the method of adhering the second current collector and the separator with the second sealing material.

### [Production method for recyclable sheet-shaped electrode member for lithium ion battery]

The production method for a recyclable sheet-shaped electrode member for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, is characterized by including an isolation step of separating the first current collector and the separator with the first sealing material as a boundary, to isolate the first recyclable sheet-shaped electrode member including the first current collector and the first electrode active material layer from a lithium ion battery.

In the production method for a recyclable sheet-shaped electrode member for a lithium ion battery, the first current collector and the separator are separated, with the first sealing material as a boundary, to isolate the first recyclable sheet-shaped electrode member that contains the first current collector and the first electrode active material layer.

The production method for a recyclable sheet-shaped electrode member for a lithium ion battery is the same as the above-described production method for a recyclable electrode active material for a lithium ion battery, except that the object to be isolated by the isolation step is not the first electrode active material but the first recyclable sheet-shaped electrode member that contains the first current collector and the first electrode active material layer.

As a result, in the production method for a recyclable electrode active material for a lithium ion battery illustrated in Fig. 6, Fig. 7, and Fig. 8, the method of isolating the first recyclable sheet-shaped electrode member 170 containing the first regenerated sheet that includes the first current collector 111 and the first electrode active material layer 113 is the production method for a recyclable sheet-shaped electrode member for a lithium ion battery.

### [Production method for recyclable electrode sheet for lithium ion battery]

The production method for a recyclable electrode sheet for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, and the second current collector and the separator are adhered to each other with a second sealing material being sandwiched therebetween at an outer peripheral edge portion on which the second electrode active material layer is not formed, is characterized by including an isolation step of separating the second current collector and the separator with the second sealing material as a boundary, to isolate the first recyclable electrode sheet consisting of the first current collector, the first electrode active material layer, the separator, and the first sealing material from the lithium ion battery,.

In the production method for a recyclable electrode sheet for a lithium ion battery, the second current collector and the separator are separated with the second sealing material as a boundary. Since the second current collector and the separator are separated in the charge storage element, it is possible to isolate the first recyclable electrode sheet consisting of the first current collector, the first electrode active material layer, the separator, and the first sealing material.

In the first recyclable electrode sheet, since the first electrode active material layer is covered by the first current collector, the first sealing material, and the separator, the first electrode active material does not leak to the outside. As a result, it is easy to suppress the mixing of the second electrode active material or the deactivation of the first electrode active material, and thus the above production method is excellent as a method of recycling or reusing a lithium ion battery in a simple process.

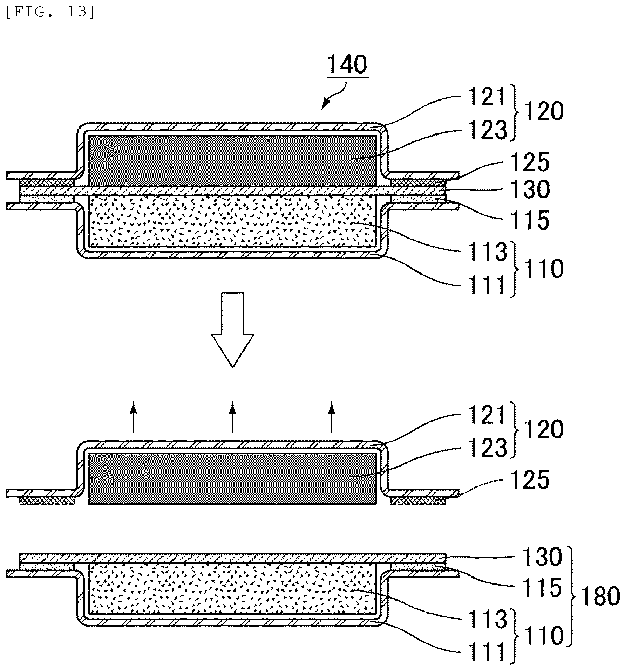

An example of the production method for a recyclable electrode sheet for a lithium ion battery will be described with reference to Fig. 13.

Fig. 13 is a cross-sectional view schematically illustrating an example of an isolation step in a production method for a recyclable electrode sheet for a lithium ion battery.

In Fig. 13, the second current collector 121 and the separator 130 are separated with the second sealing material 125 constituting the charge storage element 140 as a boundary. Since the second current collector 121 and the separator 130 are separated with the second sealing material 125 as a boundary, it is possible to obtain a first recyclable electrode sheet 180 consisting of the first current collector 111, the first electrode active material layer 113, the first sealing material 115, and the separator 130.

Examples of the method of separating the second current collector from the separator with the second sealing material as a boundary include a method obtained by applying, to the second sealing material, the method of separating the first current collector from the separator with the first sealing material as a boundary in the production method for a recyclable electrode active material for a lithium ion battery.

That is, examples of the method of separating the second current collector from the separator with the second sealing material as a boundary include a method of heating the charge storage element, a method of immersing the charge storage element in a solvent, or a method of cutting the second sealing material.

In a case where the charge storage element is heated in the isolation step, it is preferable for the isolation step to include a step of heating the charge storage element at a temperature equal to or higher than the melting point of the resin constituting the second sealing material and lower than the melting point of the resin constituting the first sealing material.

In a case where the charge storage element is immersed in a solvent in the isolation step, it is preferable that the isolation step includes a step of immersing the charge storage element in a solvent, the absolute value of the difference between the SP value of the resin constituting the second sealing material and the SP value of the solvent is 1.0 or less, and the absolute value of the difference between the SP value of the resin constituting the first sealing material and the SP value of the solvent more than 2.5 or less.

In a case where the second sealing material is cut in the isolation step, it is preferable for the isolation step to include a step of cutting the second sealing material along a direction substantially perpendicular to a direction in which the second current collector and the separator face each other.

The recyclable electrode sheet for a lithium ion battery, which is produced by the production method for a recyclable electrode sheet for a lithium ion battery, may be used again for manufacturing a lithium ion battery by being combined with an electrode sheet having a different polarity.

In the production method for a recyclable electrode sheet for a lithium ion battery, it is preferable to carry out the isolation step under the conditions in which the first electrode active material is not deactivated.

In a case where the first electrode active material has been deactivated, it becomes difficult to reuse the recyclable electrode sheet for a lithium ion battery obtained by the production method for a recyclable electrode sheet for a lithium ion battery.

In order for the first electrode active material not to be deactivated, it is preferable not to bring the first electrode active material into contact with water. Further, the atmosphere in which the isolation step is carried out is preferably in a dry room environment with a dew point of -30°C or lower.

The recyclable electrode sheet obtained by the production method for a recyclable electrode sheet for a lithium ion battery has a constitution corresponding to a half battery of a lithium ion battery, which has the first current collector, the first electrode active material layer, and the separator, and thus it is possible to manufacture a new lithium ion battery by combining the recyclable electrode sheet with an electrode sheet having a different polarity.

Regarding the case of heating the charge storage element in the isolation step and the case of immersing the charge storage element in a solvent in the isolation step, the constitution of the lithium ion battery that is used in the production method for a recyclable electrode sheet for a lithium ion battery is preferably a constitution obtained by reversing the constitution of the first electrode and the second electrode in a lithium ion battery that is used in the production method for a recyclable electrode active material for a lithium ion battery and a lithium ion battery that is used in the production method for a recyclable sheet-shaped electrode member for a lithium ion battery.

On the other hand, in a case where the second sealing material is cut in the isolation step, it is preferably the same constitution as those in a lithium ion battery that is used in the production method for a recyclable electrode active material for a lithium ion battery and a lithium ion battery that is used in the production method for a recyclable sheet-shaped electrode member for a lithium ion battery.

Next, a description will be made for a production method for a positive electrode for a lithium ion battery, with which a positive electrode for a lithium ion battery can be produced using a positive electrode active material isolated from a lithium ion battery, and a manufacturing method for a lithium ion battery, with which a lithium ion battery is manufactured using the positive electrode for a lithium ion battery.

As a method of isolating the positive electrode active material from the lithium ion battery, the production method for a recyclable electrode active material for a lithium ion battery of the present invention may be used. As a result, the positive electrode for a lithium ion battery can be manufactured by using the production method for a recyclable electrode active material for a lithium ion battery of the present invention and subsequently the production method for a positive electrode for a lithium ion battery described below.

The technique disclosed in Patent Literature 1 described above has had a problem that it is necessary to go through a large number of steps such as crushing, heating, separation, and purification until a new positive electrode active material is produced from a waste lithium ion battery (hereinafter, also referred to as a used lithium ion battery) and thus the recycling cost is high.

The production method for a positive electrode for a lithium ion battery described below is a method for solving the above-described problems. That is, the production method for a positive electrode for a lithium ion battery is a production method for a positive electrode for a lithium ion battery, characterized by including a step of mixing a positive electrode active material isolated from a lithium ion battery with lithium and/or a lithium-containing compound, and a production method for a positive electrode for a lithium ion battery, characterized by including a step of short circuiting a positive electrode active material layer containing a positive electrode active material isolated from a lithium ion battery and metallic lithium in a state of being opposed to each other, with a separator being sandwiched therebetween.

According to this method, it is possible to provide a method of producing a positive electrode for a lithium ion battery from a lithium ion battery with a simple operation.

Further, the manufacturing method for a lithium ion battery described below is a manufacturing method for a lithium ion battery, characterized by including a step of combining a positive electrode for a lithium ion battery produced by the production method for a positive electrode for a lithium ion battery and a negative electrode for a lithium ion battery, with a separator being sandwiched therebetween.

### [Production method for positive electrode for lithium ion battery]

The lithium ion battery that is used in the production method for a positive electrode for a lithium ion battery described below includes all lithium ion batteries regardless of whether or not they are used.

### [First embodiment of production method for positive electrode for lithium ion battery]

A first embodiment of the production method for a positive electrode for a lithium ion battery is characterized by including a step of mixing a positive electrode active material isolated from a lithium ion battery with lithium and/or a lithium-containing compound.

The first embodiment of the production method for a positive electrode for a lithium ion battery includes a step of mixing a positive electrode active material isolated from a lithium ion battery with lithium and/or a lithium-containing compound.

Since a positive electrode active material is mixed with lithium and/or a lithium-containing compound, the positive electrode active material is doped with lithium and/or lithium ions, and thus the battery capacity of the positive electrode active material is increased or recovered.

The method of isolating a positive electrode active material from a lithium ion battery is not particularly limited, and a method matched with the structure of the lithium ion battery from which the positive electrode active material is to be isolated can be adopted.

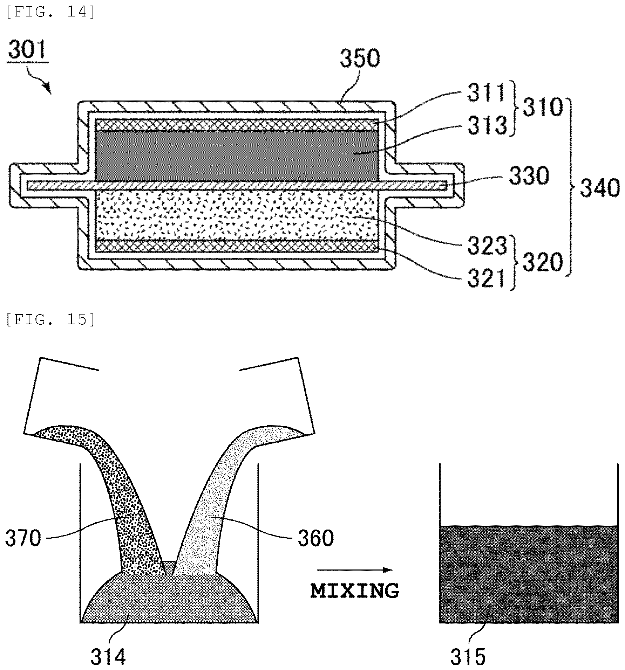

Fig. 14 is a cross-sectional view schematically illustrating an example of a lithium ion battery that is used in a first embodiment of a production method for a positive electrode for a lithium ion battery.

A lithium ion battery 301 has a charge storage element 340 having a positive electrode 310 that has a positive electrode current collector 311 and has a positive electrode active material layer 313 containing a positive electrode active material, where the positive electrode active material layer 313 is formed on the positive electrode current collector 311, is disposed to be opposed to a negative electrode 320 that has a negative electrode current collector 321 and has a negative electrode active material layer 323 containing a negative electrode active material, where the negative electrode active material layer 323 is formed on the negative electrode current collector 321, with a separator 330 being sandwiched therebetween, and the outside of the charge storage element 340 is covered by a battery exterior body 350.

The positive electrode active material layer 313 and the negative electrode active material layer 323 contain a binder.

An insulating layer (not illustrated in the drawing) is formed on the inner surface of the battery exterior body 350, and the positive electrode current collector 311 and the negative electrode current collector 321 are insulated from each other. Further, external electrodes (not illustrated in the drawing) are connected to the positive electrode current collector 311 and the negative electrode current collector 321, and a part of the external electrode is led out to the outside of the battery exterior body 350.

Hereinafter, a description will be made for an example of a constitution of a lithium ion battery that can be used in the production method for a positive electrode for a lithium ion battery, and a method of isolating a positive electrode active material suitable for the constitution of a lithium ion battery.

In a case where the positive electrode active material layer constituting a lithium ion battery contains a binder, it is preferable to immerse the charge storage element constituting a lithium ion battery in the solvent.

The charge storage element constituting a lithium ion battery is immersed in a solvent to swell the positive electrode active material layer containing a binder, and then the positive electrode active material can be scraped off and recovered by a squeegee or the like.

The solvent is preferably N-methylpyrrolidone (NMP), N,N-dimethylformamide (DMF), tetrahydrofuran (THF), isopropanol (IPA), or the like.

In a case where the positive electrode current collector constituting a lithium ion battery is a positive electrode resin current collector containing a matrix resin and a conductive filler, it is preferable to heat the charge storage element to a temperature equal to or higher than the melting point of the matrix resin.

In a case where the charge storage element constituting a lithium ion battery is heated at a temperature equal to or higher than the melting point of the matrix resin constituting the positive electrode resin current collector, the positive electrode resin current collector is softened to remove at least a part of the positive electrode resin current collector, whereby the positive electrode active material layer can be isolated to the outside.

It suffices that the temperature at which the charge storage element is heated is equal to or higher than the melting point of the matrix resin constituting the positive electrode resin current collector; however, it is more preferably less than 200°C.

In a case where the negative electrode current collector is a negative electrode resin current collector containing a matrix resin and a conductive filler, the heating temperature is preferably a temperature lower than the melting point of the matrix resin constituting the negative electrode resin current collector.

In a case where the positive electrode current collector constituting a lithium ion battery is a positive electrode resin current collector containing a matrix resin and a conductive filler, it is preferable to immerse the charge storage element in a solvent with which the matrix resin can be dissolved or swollen.

In a case where the charge storage element is immersed in a solvent with which the matrix resin can be dissolved or swollen, the positive electrode resin current collector is swollen and softened to remove at least a part of the positive electrode resin current collector, whereby the positive electrode active material can be isolated.

The absolute value of the difference between the SP value of the solvent and the SP value of the matrix resin is preferably less than 1.0.

The SP value [unit: (cal/cm³)^{0.5}] is a value at 25°C, which is calculated according to the method described in Polymer engineering and science Vol. 14, pages 151 to 154 written by Robert F. Fedors et al.

In a case where the positive electrode current collector constituting a lithium ion battery and a separator are adhered to each other with a positive electrode sealing material being sandwiched therebetween, it is preferable to heat the charge storage element to a temperature equal to or higher than the melting point of the resin constituting the positive electrode sealing material.

In a case where the charge storage element is heated to a temperature equal to or higher than the melting point of the resin constituting the positive electrode sealing material, the positive electrode sealing material is softened to remove at least a part of the positive electrode sealing material from the charge storage element, whereby the positive electrode active material can be isolated.

It suffices that the temperature at which the charge storage element is heated is a temperature equal to or higher than the melting point of the resin constituting the positive electrode sealing material; however, it is more preferably less than 200°C.

Further, in a case where the negative electrode current collector and a separator are adhered to each other with a negative electrode sealing material being sandwiched therebetween, the heating temperature is preferably a temperature lower than the melting point of the resin constituting the negative electrode sealing material.

In a case where the positive electrode current collector constituting a lithium ion battery and a separator are adhered to each other with a positive electrode sealing material being sandwiched therebetween, it is preferable to immerse the charge storage element in a solvent in which the positive electrode sealing material is swollen and softened.

In a case where the charge storage element is immersed in a solvent in which the positive electrode sealing material is swollen and softened, the positive electrode sealing material is swollen and softened to remove at least a part of the positive electrode sealing material from the charge storage element, whereby the positive electrode active material can be isolated.

The absolute value of the difference between the SP value of the solvent and the SP value of the resin constituting the positive electrode sealing material is preferably less than 1.0.

In a case where the positive electrode current collector constituting a lithium ion battery and a separator are adhered to each other with a positive electrode sealing material being sandwiched therebetween, it is preferable to cut the positive electrode sealing material along a direction substantially perpendicular to a direction in which the positive electrode current collector and the separator face each other.

In a case where the positive electrode sealing material is cut along a direction substantially perpendicular to a direction in which the positive electrode current collector and the separator face each other, the positive electrode sealing material is divided into two parts in the thickness direction, the positive electrode current collector and the separator are separated with the positive electrode sealing material as a boundary, whereby the positive electrode active material can be isolated.

The step of isolating the positive electrode active material from the lithium ion battery is preferably carried out under the conditions in which the positive electrode active material is not deactivated.

In a case where the positive electrode active material has been deactivated, it may be difficult to increase or recover the battery capacity of the positive electrode active material in the subsequent steps.

In order for the positive electrode active material not to be deactivated, it is preferable not to bring the positive electrode active material into contact with water.

As a result, the solvent in which a lithium ion battery is immersed is preferably a non-aqueous solvent.

Further, the atmosphere in a case where the positive electrode active material is isolated from a lithium ion battery is preferably a dry room environment with a dew point of -30°C or lower.

In the first embodiment of the production method for a positive electrode for a lithium ion battery, it is preferable that the positive electrode active material isolated from a lithium ion battery is in a state where the negative electrode active material is not contained. Further, the positive electrode active material isolated from a lithium ion battery may contain a conductive auxiliary agent or a binder.

In the production method for a positive electrode for a lithium ion battery, a positive electrode active material isolated from a lithium ion battery is mixed with lithium and/or a lithium-containing compound.

Since a positive electrode active material is mixed with lithium and/or a lithium-containing compound, the positive electrode active material is doped with lithium and/or lithium ions, and thus the battery capacity of the positive electrode active material can be increased or recovered.

In the first embodiment of the production method for a positive electrode for a lithium ion battery, an example of a method of mixing a positive electrode active material isolated from a lithium ion battery with lithium and/or a lithium-containing compound will be described with reference to Fig. 15.

Fig. 15 is a schematic view schematically illustrating an example of a step of mixing an electrode active material with lithium and/or a lithium-containing compound in the first embodiment of the production method for a positive electrode for a lithium ion battery.

As illustrated in Fig. 15, a positive electrode active material 314 isolated from a lithium ion battery is mixed and stirred with lithium and/or a lithium-containing compound 360 and a solvent 370 to dope the positive electrode active material with lithium and/or lithium ions, whereby a battery capacity-increased or battery capacity-recovered positive electrode active material 315 is obtained.

Lithium means metallic lithium.

The lithium-containing compound may be any compound as long as it can supply lithium and/or lithium ions to the positive electrode active material. Examples thereof include a lithium alloy and a lithium salt, and two or more thereof may be used in combination.

Examples of the lithium alloy include a Li-Si alloy, a Li-Sn alloy, a Li-Al alloy, and Li-Al-Mn alloy.

Examples of the lithium salt include lithium carbonate and lithium citrate.

The volume average particle size of lithium and the lithium-containing compound is not particularly limited; however, it is preferably 10 to 1,000 µm.

The obtained positive electrode active material becomes a positive electrode for a lithium ion battery by adding thereto a binder, a conductive auxiliary agent, or the like as necessary, and then forming it as a positive electrode active material layer on a positive electrode current collector.

Whether or not the positive electrode active material has been doped with a specified amount of lithium and/or lithium ions can be checked by measuring the open circuit voltage (OCV) of the positive electrode active material before and after doping. The OCV of the positive electrode active material after doping is smaller than the OCV of the positive electrode active material before doping.

The OCV of the positive electrode active material after doping varies depending on the charging and discharging curve (the OCV curve) that depends on the kind of the positive electrode active material used; however, it is preferably 2.5 V or less.

In the first embodiment of the production method for a positive electrode for a lithium ion battery, the positive electrode active material layer containing a positive electrode active material, obtained by a step of carrying out mixing with lithium and/or a lithium-containing compound is formed on a positive electrode current collector.

The method of forming a positive electrode active material layer on a positive electrode current collector is not particularly limited,; however, examples thereof include a method of applying a positive electrode active material slurry containing a positive electrode active material and a solvent onto a positive electrode current collector and then removing the solvent, and a method of applying the positive electrode active material slurry onto a base material, subsequently removing the solvent, and then transferring the obtained positive electrode active material layer onto a positive electrode current collector.

By the above steps, it is possible to obtain a positive electrode for a lithium ion battery, in which a positive electrode active material layer containing a battery capacity-increased or battery capacity-recovered positive electrode active material is formed on a positive electrode current collector.

### [Second embodiment of production method for positive electrode for lithium ion battery]

A second embodiment of the production method for a positive electrode for a lithium ion battery is characterized by including a step of short circuiting a positive electrode active material layer containing a positive electrode active material isolated from a lithium ion battery and metallic lithium in a state of being opposed to each other, with a separator being sandwiched therebetween.

In the second embodiment of the production method for a positive electrode for a lithium ion battery, the positive electrode active material layer consisting of the positive electrode active material isolated from a lithium ion battery may be a positive electrode active material layer constituting a lithium ion battery, which has been isolated while the shape thereof being maintained, or may be one obtained by forming the positive electrode active material isolated from a lithium ion battery by the method described in the first embodiment of the production method for a positive electrode for a lithium ion battery, into a sheet shape.

The method of isolating a positive electrode active material layer constituting a lithium ion battery while the shape thereof being maintained is not particularly limited. However, examples thereof include a method of isolating a positive electrode sheet from a lithium ion battery in a case where, in the lithium ion battery, two or more sheets of the separator are disposed between a positive electrode active material layer and a negative electrode active material layer, and a positive electrode sheet consisting of a positive electrode current collector, a positive electrode active material layer, and a positive electrode side separator can be easily separated from a negative electrode sheet consisting of a negative electrode current collector, a negative electrode active material layer, and a negative electrode side separator. In the isolated positive electrode sheet, the shape of the positive electrode active material layer constituting a lithium ion battery is maintained as it is.

Further, examples of the method of isolating a positive electrode active material layer from a lithium ion battery having a constitution other than the above-described constitution, while the shape thereof being maintained, include a method of applying the method of separating the separator and the positive electrode current collector, which is described in the first embodiment of the production method for a positive electrode for a lithium ion battery, as a method of separating a separator and a negative electrode current collector from each other. In a case where the separator and the negative electrode current collector are separated, the negative electrode current collector and the negative electrode active material layer can be separated from the charge storage element, whereby a positive electrode sheet consisting of the positive electrode current collector, the positive electrode active material layer, and the separator can be obtained. In the isolated positive electrode sheet, the shape of the positive electrode active material layer constituting a lithium ion battery is maintained as it is.

Examples of the method of forming a positive electrode active material isolated from a lithium ion battery into a sheet shape include a method of applying a positive electrode active material slurry containing an isolated positive electrode active material and a solvent onto a positive electrode current collector or a base material, and then removing the solvent. In a case where the positive electrode active material slurry is applied onto a base material, the obtained positive electrode active material layer may be transferred onto the positive electrode current collector after the solvent has been removed.

### [Lithium ion battery]

An example of a lithium ion battery that is used in a second embodiment of the production method for a positive electrode for a lithium ion battery will be schematically shown.

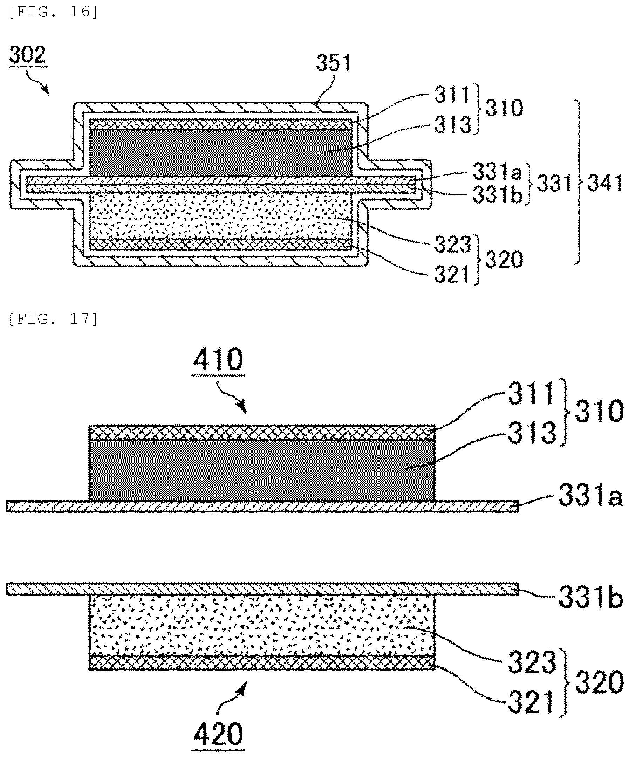

Fig. 16 is a cross-sectional view schematically illustrating an example of a lithium ion battery that is used in a second embodiment of the production method for a positive electrode for a lithium ion battery.

A lithium ion battery 302 has a charge storage element 341 having a positive electrode 310 that has a positive electrode current collector 311 and has a positive electrode active material layer 313 containing a positive electrode active material, where the positive electrode active material layer 313 is formed on the positive electrode current collector 311, is disposed to be opposed to a negative electrode 320 that has a negative electrode current collector 321 and has a negative electrode active material layer 323 containing a negative electrode active material, where the negative electrode active material layer 323 is formed on the negative electrode current collector 321, with two sheets of a separator 331 (a positive electrode side separator 331a and a negative electrode side separator 331b) being sandwiched therebetween, and the outside of the charge storage element is covered by a battery exterior body 351.

The positive electrode active material layer may contain or may not contain a binder.

Fig. 17 is a schematic view illustrating an example of a method of isolating an electrode active material layer from a lithium ion battery in the second embodiment of the production method for a positive electrode for a lithium ion battery.

As illustrated in Fig. 17, in a case where a negative electrode sheet 420 consisting of the negative electrode side separator 331b, the negative electrode active material layer 323, and the negative electrode current collector 321 is separated from a lithium ion battery 302, a positive electrode sheet 410 consisting of the positive electrode side separator 331a, the positive electrode active material layer 313, and the positive electrode current collector 311 is isolated.

One main surface of the positive electrode active material layer 313 is in contact with the positive electrode current collector 311, and the other main surface thereof is in contact with the positive electrode side separator 331a. The side surface of the positive electrode active material layer 313 may be exposed without being in contact with the positive electrode current collector 311 and the positive electrode side separator 331a or may be covered by the positive electrode current collector 311 or the positive electrode side separator 331a.

One main surface of the negative electrode active material layer 323 is in contact with the negative electrode current collector 321, and the other main surface thereof is in contact with the negative electrode side separator 331b. The side surface of the negative electrode active material layer 323 may be exposed without being in contact with the negative electrode current collector 321 and the negative electrode side separator 331b or may be covered by the negative electrode current collector 321 or the negative electrode side separator 331b.

The separator constituting each of the positive electrode sheet and the negative electrode sheet may be one sheet of two or more sheets of separator, present in the lithium ion battery.

In the method illustrated in Fig. 17, the positive electrode sheet 410 consisting of the positive electrode side separator 331a, the positive electrode active material layer 313, and the positive electrode current collector 311 is isolated.

The positive electrode active material layer 313 constituting the positive electrode sheet 410 is a positive electrode active material layer 313 constituting the lithium ion battery 302, which has been isolated while the shape thereof being maintained.

In the second embodiment of the production method for a positive electrode for a lithium ion battery, it is preferable that the positive electrode active material layer isolated from a lithium ion battery is in a state where the negative electrode active material is not contained. Further, the positive electrode active material layer isolated from a lithium ion battery may contain a conductive auxiliary agent, a binder, or the like, and may not be separated from the separator or the positive electrode current collector.

The step of isolating the positive electrode active material layer containing the positive electrode active material from the lithium ion battery is preferably carried out under the conditions in which the positive electrode active material is not deactivated.

In a case where the positive electrode active material has been deactivated, it may be difficult to increase or recover the battery capacity of the positive electrode active material in the subsequent steps.

In order for the positive electrode active material not to be deactivated, it is preferable not to bring the positive electrode active material into contact with water.

As a result, the solvent in which a charge storage element is immersed is preferably a non-aqueous solvent.

Further, the atmosphere in a case where the positive electrode active material is isolated from a lithium ion battery is preferably a dry room environment with a dew point of -30°C or lower.

In a case where the isolated positive electrode active material layer contains components other than the positive electrode active material, a separation operation of removing these components may be carried out, as necessary.

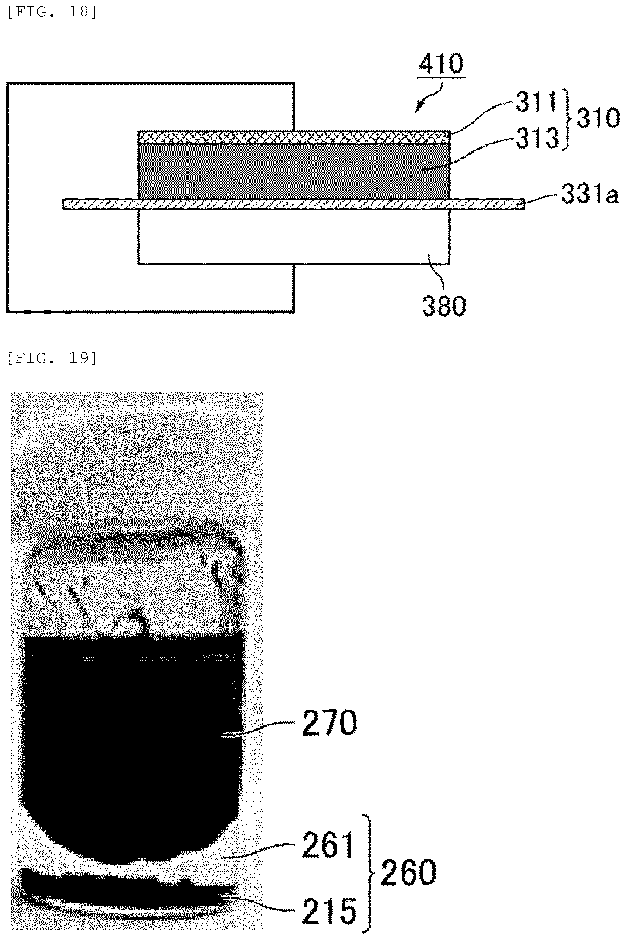

Fig. 18 is a schematic view showing an example of a step of short circuiting a positive electrode active material layer and metallic lithium in a state of being opposed to each other, with a separator being sandwiched therebetween, in the second embodiment of the production method for a positive electrode for a lithium ion battery.

In Fig. 18, the positive electrode sheet 410 and the metallic lithium sheet 380 isolated in the step illustrated in Fig. 17 are short circuited in a state of being opposed to each other, with a separator (a positive electrode side separator 331a) containing a non-aqueous electrolytic solution being sandwiched therebetween, whereby the positive electrode active material is doped with lithium and/or lithium ions to increase or recover the battery capacity of the positive electrode active material.

The positive electrode sheet obtained by the method illustrated in Fig. 18 itself may be used as a positive electrode for a lithium ion battery.

Whether or not the positive electrode active material has been doped with a specified amount of lithium and/or lithium ions can be checked by measuring the open circuit voltage (OCV) of the positive electrode active material before and after doping. The OCV of the positive electrode active material after doping is smaller than the OCV of the positive electrode active material before doping.

The OCV of the positive electrode active material after doping varies depending on the charging and discharging curve (the OCV curve) that depends on the kind of the positive electrode active material used; however, it is preferably 2.5 V or less.

The conditions in the step of short circuiting the positive electrode active material and the metallic lithium in a state of being opposed to each other, with a separator being sandwiched therebetween, are preferably the conditions in which the positive electrode active material is not deactivated, as in the case of the step of isolating the positive electrode active material from the lithium ion battery.

It is noted that the short circuit between the positive electrode active material and the metallic lithium refers to a case where the positive electrode active material and the metallic lithium are electrically connected on the outside. As a result, not only a case where the positive electrode active material and metallic lithium are electrically connected by a conductive wire or the like, but also a case where the positive electrode active material and metallic lithium are connected by a predetermined circuit (for example, a commercially available charging and discharging device) and electrical connection between the positive electrode active material and metallic lithium is secured is included.

### [Lithium ion battery]

A general lithium ion battery can be used in the production method for a positive electrode for a lithium ion battery.

Examples of the general lithium ion battery include a lithium ion battery having a charge storage element consisting of a positive electrode that has a positive electrode current collector and has a positive electrode active material layer formed on the positive electrode current collector and consisting of a positive electrode composition containing a positive electrode active material, a negative electrode that has a negative electrode current collector and has a negative electrode active material layer formed on the negative electrode current collector and consisting of a negative electrode composition containing a negative electrode active material, and a separator disposed between the positive electrode active material layer and the negative electrode active material layer.

The kind of the lithium ion battery that is used in the production method for a positive electrode for a lithium ion battery is not particularly limited. However, since the battery capacity of the positive electrode active material can be increased or recovered by the production method for a positive electrode for a lithium ion battery, it is preferable to use a lithium ion battery of which the battery capacity is reduced to 80% or less of the initial stage (the 1st cycle).

The positive electrode has a positive electrode current collector and a positive electrode active material layer containing a positive electrode active material.

In addition to the positive electrode active material, the positive electrode active material layer may contain a conductive auxiliary agent, a non-aqueous electrolytic solution, a binder, a pressure-sensitive adhesive resin.

The positive electrode current collector may be a metal current collector consisting of metal or may be a positive electrode resin current collector consisting of a second matrix resin and a conductive filler. However, it is preferably a positive electrode resin current collector.

The thickness of the positive electrode current collector is not particularly limited; however, it is preferably 5 to 150 µm.

As the metal current collector, copper, aluminum, titanium, stainless steel, nickel, an alloy thereof, or the like can be used.

The positive electrode resin current collector contains a matrix resin and a conductive filler.

The conductive filler is selected from materials having conductivity.

Specific examples thereof include a metal [nickel, aluminum, stainless steel (SUS), silver, copper, titanium, or the like], carbon [graphite, carbon black (acetylene black, Ketjen black, furnace black, channel black, thermal lamp black, or the like), or the like], and a mixture thereof; however, carbon is preferable. In a case where the conductive filler is carbon, it is possible to prevent a metal from being mixed in the isolated positive electrode active material. In a case where metal is mixed in the isolated positive electrode active material, the increase or recovery of the battery capacity of the positive electrode active material may be hindered.

One kind of these conductive fillers may be used alone, or two or more kinds thereof may be used in combination. Moreover, an alloy or metal oxide thereof may be used. From the viewpoint of electrical stability, aluminum, stainless steel, carbon, silver, copper, titanium, or a mixture thereof is preferable, silver, aluminum, stainless steel, or carbon is more preferable, and carbon is still more preferable. Further, these conductive fillers may be those obtained by coating a conductive material (a metallic conductive material among materials of the conductive filler described above) around a particle-based ceramic material or a resin material with plating or the like.

The average particle size of the conductive filler is not particularly limited; however, it is preferably 0.01 to 10 µm, more preferably 0.02 to 5 µm, and still more preferably 0.03 to 1 µm, from the viewpoint of the electrical characteristics of the battery. In the present specification, the "particle size" means the maximum distance L among the distances between any two points on the contour line of the particle. As the value of the "average particle size", the average value of the particle sizes of the particles observed in several to several tens of visual fields using an observation means such as a scanning electron microscope (SEM) or a transmission electron microscope (TEM) shall be adopted.

The shape (the form) of the conductive filler is not limited to the particle form, may be a form other than the particle form, and may be a form practically applied as a so-called filler-based conductive resin composition such as carbon nanotubes.

The conductive filler may be a conductive fiber of which the shape is fibrous.

Examples of the conductive fiber include a carbon fiber such as a PAN-based carbon fibers or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber with a metal, and a conductive fiber obtained by coating a surface of an organic fiber with a resin containing a conductive substance. Among these conductive fibers, a carbon fiber is preferable. In addition, a polypropylene resin in which graphene is kneaded is also preferable.

In a case where the conductive filler is a conductive fiber, the average fiber diameter thereof is preferably 0.1 to 20 µm.

The weight proportion of the conductive filler in the positive electrode resin current collector is preferably 5% to 90% by weight and more preferably 20% to 80% by weight.

In particular, in a case where the conductive filler is carbon, the weight proportion of the conductive filler is preferably 20% to 30% by weight.

The melting point of the matrix resin constituting the positive electrode resin current collector is preferably less than 200°C.

Examples of the matrix resin having a melting point of less than 200°C include polyamide (PA), polyolefin (PO), and polyvinylidene fluoride.

Examples of the polyolefin include polyethylene (PE), polypropylene (PP), and polycycloolefin (PCO).

The SP value of the matrix resin constituting the positive electrode resin current collector is preferably 8 to 12.

Examples of the first matrix resin having an SP value of 8 to 12 include polyolefin (PO) and polyvinylidene fluoride (PVDF).

Examples of the polyolefin having an SP value of 8 to 12 include polyethylene (PE), polypropylene (PP), polycycloolefin (PCO), and polymethylpentene (PMP). Among these, polyethylene (PE) or polypropylene (PP) is preferable.

The positive electrode resin current collector can be obtained, for example, by forming a conductive resin composition obtained by melt-kneading the matrix resin and the conductive filler into a film shape.

Examples of the method of forming a conductive resin composition into a film shape include known film forming methods such as a T-die method, an inflation method, and a calendaring method. The positive electrode resin current collector can also be obtained by a forming method other than the film forming.

Examples of the positive electrode active material include a composite oxide of lithium and a transition metal {a composite oxide having one kind of transition metal (LiCoO₂, LiNiO₂, LiAlMnO₄, LiMnO₂, LiMn₂O₄, or the like), a composite oxide having two kinds of transition metal elements (for example, LiFeMnO₄, LiNi₁₋ₓCOₓO₂, LiMn_{1-y}Co_{y}O₂, LiNi_{1/3}Co_{1/3}Al_{1/3}O₂, and LiNi_{0.8}Co_{0.15}Al_{0.05}O₂), a composite oxide having three or more kinds of metal elements [for example, LiMaM'bM"cO2 (where M, M', and M" are transition metal elements different each other and satisfy a + b + c = 1, and one example is LiNi_{1/3}Mn_{1/3}Co_{1/3}O₂)], or the like}, a lithium-containing transition metal phosphate (for example, LiFePO₄, LiCoPO₄, LiMnPO₄, or LiNiPO₄), a transition metal oxide (for example, MnO₂ and V₂O₅), a transition metal sulfide (for example, MoS₂ or TiS₂), and a conductive macromolecule (for example, polyaniline, polypyrrole, polythiophene, polyacetylene, poly-p-phenylene, or polyvinyl carbazole). Two or more thereof may be used in combination.

Here, the lithium-containing transition metal phosphate may be one in which a part of transition metal sites is substituted with another transition metal.

The volume average particle size of the positive electrode active material is preferably 0.01 to 100 µm, more preferably 0.1 to 35 µm, and still more preferably 2 to 30 µm, from the viewpoint of the electrical characteristics of the battery.

The volume average particle size of the positive electrode active material means the particle size (Dv50) at an integrated value of 50% in the particle size distribution obtained by the microtrack method (the laser diffraction/scattering method). The microtrack method is a method of determining a particle size distribution by using scattered light obtained by irradiating particles with laser light. A MICROTRAC manufactured by Nikkiso Co., Ltd. can be used for measuring the volume average particle size.

The conductive auxiliary agent is selected from materials having conductivity.

Specific examples of the conductive auxiliary agent include, but are not limited thereto, a metal [nickel, aluminum, stainless steel (SUS), silver, copper, titanium, or the like], carbon [graphite, or carbon black (acetylene black, Ketjen black, furnace black, channel black, thermal lamp black, or the like), or the like], and a mixture thereof.

One kind of these conductive auxiliary agents may be used alone, or two or more kinds thereof may be used in combination. Moreover, an alloy or metal oxide thereof may be used. From the viewpoint of electrical stability, aluminum, stainless steel, carbon, silver, copper, titanium, or a mixture thereof is preferable, silver, aluminum, stainless steel, or carbon is more preferable, and carbon is still more preferable. Further, these conductive auxiliary agents may be those obtained by coating a conductive material (a metallic conductive material among materials of the conductive auxiliary agent described above) around a particle-based ceramic material or a resin material with plating or the like.

The average particle size of the conductive auxiliary agent is not particularly limited; however, it is preferably 0.01 to 10 µm, more preferably 0.02 to 5 µm, and still more preferably 0.03 to 1 µm, from the viewpoint of the electrical characteristics of the battery. In the present specification, the "particle size" means the maximum distance L among the distances between any two points on the contour line of the conductive auxiliary agent. As the value of the "average particle size", the average value of the particle sizes of the particles observed in several to several tens of visual fields using an observation means such as a scanning electron microscope (SEM) or a transmission electron microscope (TEM) shall be adopted.

The shape (the form) of the conductive auxiliary agent is not limited to the particle form, may be a form other than the particle form, and may be a form practically applied as a so-called filler-based conductive resin composition such as carbon nanotubes.

The conductive auxiliary agent may be a conductive fiber of which the shape is fibrous.

Examples of the conductive fiber include a carbon fiber such as a PAN-based carbon fibers or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber with a metal, and a conductive fiber obtained by coating a surface of an organic fiber with a resin containing a conductive substance. Among these conductive fibers, a carbon fiber is preferable. In addition, a polypropylene resin in which graphene is kneaded is also preferable.

In a case where the conductive auxiliary agent is a conductive fiber, the average fiber diameter thereof is preferably 0.1 to 20 µm.

As the non-aqueous electrolytic solution, a known non-aqueous electrolytic solution containing an electrolyte and a non-aqueous solvent, which is used in the manufacturing of a lithium ion battery, can be used.

As the electrolyte, an electrolyte that is used in a known non-aqueous electrolytic solution can be used. Examples thereof include lithium salts of inorganic acids, such as LiPF₆, LiBF₄, LiSbF₆, LiAsF₆, and LiClO₄; and lithium salts of organic acids, such as LiN(CF₃SO₂)₂ (also referred to as LiFSI), LiN(C₂F₅SO₂)₂, and LiC(CF₃SO₂)₃. Among these, LiPF₆ is preferable from the viewpoints of battery output and charging and discharging cycle characteristics.

As the non-aqueous solvent, a non-aqueous solvent that is used in the known non-aqueous electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

Examples of the lactone compound include a 5-membered ring lactone compound (γ-butyrolactone, γ-valerolactone, or the like) and a 6-membered ring lactone compound (δ-valerolactone or the like).

Examples of the cyclic carbonic acid ester include propylene carbonate, ethylene carbonate, and butylene carbonate.

Examples of the chain-like carbonic acid ester include dimethyl carbonate, methyl ethyl carbonate, diethyl carbonate, methyl-n-propyl carbonate, ethyl-n-propyl carbonate, and di-n-propyl carbonate.

Examples of the chain-like carboxylic acid ester include methyl acetate, ethyl acetate, propyl acetate, and methyl propionate.

Examples of the cyclic ether include tetrahydrofuran, tetrahydropyran, 1,3-dioxolane, and 1,4-dioxane.

Examples of the chain-like ether include dimethoxymethane and 1,2-dimethoxyethane.

Examples of the phosphoric acid ester include trimethyl phosphate, triethyl phosphate, ethyl dimethyl phosphate, diethyl methyl phosphate, tripropyl phosphate, tributyl phosphate, tri(trifluoromethyl)phosphate, tri(trichloromethyl)phosphate, tri(trifluoroethyl)phosphate, tri(triperfluoroethyl)phosphate, 2-ethoxy-1,3,2-dioxaphosphoran-2-one, 2-trifluoroethoxy-1,3,2-dioxaphosphoran-2-one, and 2-methoxyethoxy-1,3,2-dioxaphosphoran-2-one.

Examples of the nitrile compound include acetonitrile.

Examples of the amide compound include DMF.

Examples of the sulfone include dimethyl sulfone and diethyl sulfone.

One kind of non-aqueous solvent may be used alone, or two or more kinds thereof may be used in combination.

Among the non-aqueous solvents, a lactone compound, a cyclic carbonic acid ester, a chain-like carbonic acid ester, or a phosphoric acid ester is preferable, a lactone compound, a cyclic carbonic acid ester, or a chain-like carbonic acid ester is still more preferable, and a mixed solution of a cyclic carbonic acid ester and a chain-like carbonic acid ester is particularly preferable, from the viewpoint of battery output and charging and discharging cycle characteristics. The most preferable one is a mixed solution of ethylene carbonate (EC) and dimethyl carbonate (DMC), or a mixed solution of ethylene carbonate (EC) and diethyl carbonate (DEC).

The positive electrode active material layer may further contain a known solution-drying type binder (carboxymethyl cellulose, SBR latex, polyvinylidene fluoride, or the like), a pressure-sensitive adhesive resin, and the like.

However, it is desirable to contain not a known binder but a pressure-sensitive adhesive resin. In a case where the positive electrode active material layer contains the above-described known solution-drying type binder, it is necessary to integrate the positive electrode active material layer by carrying out drying after a step of forming the positive electrode active material layer; however, in a case where the positive electrode active material layer contains a pressure-sensitive adhesive resin, it is possible to integrate the positive electrode active material layer with a slight pressure at room temperature without drying step. In a case where the drying is not carried out, the shrinkage or cracking of the positive electrode active material layer due to heating does not occur, which is preferable.

Further, in the positive electrode composition containing the positive electrode active material, the non-aqueous electrolytic solution, and the pressure-sensitive adhesive resin, the positive electrode active material layer is maintained as the non-bound body even after undergoing a step of forming the positive electrode active material layer. In a case where the positive electrode active material layer is a non-bound body, the positive electrode active material layer can be made thicker, and a battery having high capacity can be obtained, which is preferable.

As the pressure-sensitive adhesive resin, it is possible to suitably use, for example, a resin obtained by mixing the non-aqueous secondary battery active material coating resin, described in Japanese Unexamined Patent Application, First Publication No. 2017-054703, with a small amount of an organic solvent and adjusting the glass transition temperature thereof to room temperature or lower, and those described as adhesives in Japanese Unexamined Patent Application, First Publication No. H10-255805 and the like.

Here, "non-bound body" means that positive electrode active materials constituting the positive electrode active material layer are not bound to each other, where "bound" means that positive electrode active materials are irreversibly bound to each other.

The solution-drying type binder means a binder that dries and solidifies in a case where a solvent component is volatilized, thereby firmly adhering and fixing positive electrode active materials to each other. In addition, the pressure-sensitive adhesive resin means a resin having pressure-sensitive adhesiveness (an adhering property obtained by applying a slight pressure without using water, solvent, heat, or the like) without solidifying even in a case where a solvent component is volatilized and dried.

The solution-drying type binder and the pressure-sensitive adhesive resin are different materials.

The positive electrode active material may be a coated positive electrode active material, where at least a part of a surface of the coated positive electrode active material is coated with a coating layer containing a macromolecule compound.

In a case where the periphery of the positive electrode active material is covered by a coating layer, the volume change of the electrode is alleviated, and thus the expansion of the electrode can be suppressed.

As the macromolecule compound constituting the coating layer, those described as the non-aqueous secondary battery active material coating resin in Japanese Unexamined Patent Application, First Publication No. 2017-054703 can be suitably used.

A method of producing the above-described coated positive electrode active material will be described.

For example, the coated positive electrode active material may be produced by mixing a macromolecule compound and a positive electrode active material, as well as a conducting agent that is used as necessary, may be produced by mixing a macromolecule compound with a conducting agent to prepare a coating material, and then mixing the coating material with an electrode active material in a case where a conducting agent is used as the coating layer, and may be produced by mixing a macromolecule compound, a conducting agent, and an electrode active material.

In a case where the positive electrode active material, the macromolecule compound, and the conducting agent are mixed, the mixing order is not particularly limited; however, it is preferable that the positive electrode active material is mixed with the macromolecule compound and then the conducting agent is further added and further mixed.

By the above method, at least a part of the surface of the positive electrode active material is coated with a coating layer containing the macromolecule compound and a conducting agent that is used as necessary.

As the conducting agent which is an optional component of the coating material, the same one as the conductive auxiliary agent constituting the positive electrode active material layer can be suitably used.

The negative electrode has a negative electrode current collector and a negative electrode active material layer containing a negative electrode active material.

In addition to the negative electrode active material, the negative electrode active material layer may contain a conductive auxiliary agent, a non-aqueous electrolytic solution, a binder, a pressure-sensitive adhesive resin.

As the conductive auxiliary agent, the non-aqueous electrolytic solution, the binder, and the pressure-sensitive adhesive resin, the same ones as those of the positive electrode can be suitably used.

In addition, the negative electrode active material may be a coated negative electrode active material, where at least a part of a surface of the coated negative electrode active material is coated with a coating layer containing a macromolecule compound. The coating layer constituting the coated negative electrode active material is preferably the same one as that of the coated positive electrode active material.

The negative electrode current collector may be a metal current collector consisting of metal or may be a negative electrode resin current collector consisting of a matrix resin and a conductive filler.

The thickness of the negative electrode current collector is not particularly limited; however, it is preferably 5 to 150 µm.

As the negative electrode current collector, copper, aluminum, titanium, stainless steel, nickel, an alloy thereof, or the like can be used.

The negative electrode resin current collector contains a matrix resin and a conductive filler.

As the conductive filler constituting the negative electrode resin current collector, the same one as the conductive filler constituting the positive electrode resin current collector can be suitably used.

Examples of the matrix resin constituting the negative electrode resin current collector include polyamide (PA), polyimide (PI), polyolefin (PO), and polyvinylidene fluoride (PVDF).

Examples of the polyolefin include polyethylene (PE), polypropylene (PP), polycycloolefin (PCO), and polymethylpentene (PMP).

In a case where the positive electrode current collector constituting a lithium ion battery is the positive electrode resin current collector and the negative electrode current collector is the negative electrode resin current collector, the melting point of the matrix resin constituting the negative electrode resin current collector is higher than the melting point of the matrix resin constituting the positive electrode resin current collector preferably by 10°C or higher, more preferably by 20°C or higher, and still more preferably by 30°C or higher.

Further, the absolute value of the difference between the SP value of the matrix resin constituting the negative electrode resin current collector and the SP value of the matrix resin constituting the positive electrode resin current collector is preferably more than 3.5.

Examples of the negative electrode active material include a carbon-based material [graphite, non-graphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke),a carbon fiber, or the like], a silicon-based material [silicon, silicon oxide (SiOₓ), a silicon-carbon composite body (a composite body obtained by coating surfaces of carbon particles with silicon and/or silicon carbide, a composite body obtained by coating surfaces of silicon particles or silicon oxide particles with carbon and/or silicon carbide, silicon carbide, or the like), a silicon alloy (a silicon-aluminum alloy, a silicon-lithium alloy, a silicon-nickel alloy, a silicon-iron alloy, a silicon-titanium alloy, a silicon-manganese alloy, a silicon-copper alloy, a silicon-tin alloy, or the like), or the like], a conductive macromolecule (for example, polyacetylene or polypyrrole), a metal (tin, aluminum, zirconium, titanium, or the like), a metal oxide (a titanium oxide, a lithium-titanium oxide, or the like), a metal alloy (for example, a lithium-tin alloy, a lithium-aluminum alloy, or a lithium-aluminum-manganese alloy), or the like, and a mixture of the above and a carbon-based material.

Among the above negative electrode active materials, regarding the negative electrode active material that does not contain lithium or lithium ions in the inside thereof, a part or all of the negative electrode active material may be subjected to pre-doping treatment to incorporate lithium or lithium ions in advance.

Among these, a carbon-based material, a silicon-based material, or a mixture thereof is preferable from the viewpoint of battery capacity and the like. The carbon-based material is more preferably graphite, non-graphitizable carbon, or amorphous carbon, and the silicon-based material is more preferably silicon oxide or a silicon-carbon composite body.

The volume average particle size of the negative electrode active material is preferably 0.01 to 100 µm, more preferably 0.1 to 20 µm, and still more preferably 2 to 10 µm, from the viewpoint of the electrical characteristics of the battery.

Examples of the separator include known separators for a lithium ion battery, such as a porous film consisting of polyethylene or polypropylene, a lamination film of a porous polyethylene film and a porous polypropylene, a non-woven fabric consisting of a synthetic fiber (a polyester fiber, an aramid fiber, or the like), a glass fiber, or the like and those above of which the surface is attached with ceramic fine particles such as silica, alumina, or titania.

In the step of isolating the positive electrode active material from a lithium ion battery, the number of sheets of the separator included in the lithium ion battery is preferably two or more from the viewpoint of easily separating the positive electrode sheet.

In addition, in the step of isolating a positive electrode active material from a lithium ion battery, the positive electrode active material layer constituting a lithium ion battery preferably does not contain a binder, and it more preferably contains a pressure-sensitive adhesive resin, from the viewpoint of easily isolating the positive electrode active material.

Further, the positive electrode active material is preferably a coated positive electrode active material.

The positive electrode current collector and the separator may be adhered to each other by a positive electrode sealing material.

The positive electrode sealing material contains a resin.

The melting point of the resin constituting the positive electrode sealing material is preferably less than 200°C.

The resin constituting the positive electrode sealing material is preferably at least one selected from the group consisting of polyamide, polyvinylidene fluoride, and polyolefin.

The negative electrode current collector and the separator may be adhered to each other by a negative electrode sealing material.

The negative electrode sealing material contains a resin.

In a case where the negative electrode current collector and the separator may be adhered to each other by a negative electrode sealing material, The melting point of the resin constituting the negative electrode sealing material is higher than that of the resin constituting the positive electrode sealing material preferably by 10°C or higher, more preferably by 20°C or higher, and still more preferably by 30°C or higher.

In addition, in a case where the negative electrode current collector and the separator are adhered by the negative electrode sealing material, the absolute value of the difference between the SP value of the resin constituting the negative electrode sealing material and the SP value of the resin constituting the positive electrode sealing material is preferably more than 3.5.

### [Manufacturing method for lithium ion battery]

The manufacturing method for a lithium ion battery is characterized by including a step of combining a positive electrode for a lithium ion battery produced by the production method for a positive electrode for a lithium ion battery and a negative electrode for a lithium ion battery, with a separator being sandwiched therebetween.

Since the positive electrode for a lithium ion battery, produced by the production method for a positive electrode for a lithium ion battery has an increased or recovered battery capacity, the lithium ion battery manufactured by this manufacturing method for a lithium ion battery can exhibit battery performance comparable to that of a new lithium ion battery.

This specification describes the following technical ideas described in the basic application of this international application.
(1-1) A production method for a recyclable electrode active material for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, a separator disposed between the first electrode active material layer and the second electrode active material layer, in which a first current collector is a first resin current collector, the production method characterized by including an isolation step of removing at least a part of a first resin current collector and isolating the first electrode active material from the lithium ion battery.
(1-2) The production method for a recyclable electrode active material according to (1-1), in which the isolation step includes a step of heating the charge storage element at a temperature equal to or higher than a melting point of a first matrix resin constituting the first resin current collector and lower than 200°C.
(1-3) The production method for a recyclable electrode active material according to (1-1), in which the isolation step includes a step of immersing the charge storage element in a solvent and an absolute value of a difference between an SP value of a first matrix resin constituting the first resin current collector and an SP value of the solvent is 1.0 or less.
(1-4) A production method for a solution containing a metal ion of a metal element constituting an electrode active material, the production method including a dispersion liquid preparation step of dispersing a recyclable electrode active material obtained by the production method for a recyclable electrode active material for a lithium ion battery according to any one of (1-1) to (1-3), in a solvent containing water, to obtain an electrode active material dispersion liquid, and a pH adjustment step of adjusting a pH of the electrode active material dispersion liquid such that a hydrogen ion exponent (pH) of an aqueous solution fractionated from the electrode active material dispersion liquid at 25°C is 5 or less.
(1-5) A lithium ion battery including a charge storage element including a first electrode that has a first resin current collector and has a first electrode active material layer formed on the first resin current collector and consisting of a first electrode composition containing a first electrode active material, a second electrode that has a second resin current collector and has a second electrode active material layer formed on the second resin current collector and consisting of a second electrode composition containing a second electrode active material, and a separator disposed between the first electrode active material layer and the second electrode active material layer, in which the first resin current collector contains a first matrix resin and a first conductive filler, the second resin current collector contains a second matrix resin and a second conductive filler, and a melting point of the first matrix resin is less than 200°C, and a melting point of the second matrix resin is higher than the melting point of the first matrix resin by 30°C or higher.
(1-6) A lithium ion battery including a charge storage element including a first electrode that has a first resin current collector and has a first electrode active material layer formed on the first resin current collector and consisting of a first electrode composition containing a first electrode active material, a second electrode that has a second resin current collector and has a second electrode active material layer formed on the second resin current collector and consisting of a second electrode composition containing a second electrode active material, and a separator disposed between the first electrode active material layer and the second electrode active material layer, in which the first resin current collector contains a first matrix resin and a first conductive filler, the second resin current collector contains a second matrix resin and a second conductive filler, and an SP value and Tg of each of the first matrix resin and the second matrix resin respectively satisfy the following conditions (1) and (2),
   Condition (1): [the absolute value of the difference between the SP value of the first matrix resin and the SP value of the second matrix resin] > 3.5
   Condition (2): [the absolute value of the difference between Tg of the first matrix resin and Tg of the second matrix resin] ≥ 35

(2-1) A production method for a recyclable electrode active material for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, the production method characterized by including an isolation step of separating the first current collector and the separator with the first sealing material as a boundary, to isolate the first electrode active material from the lithium ion battery.
(2-2) The production method for a recyclable electrode active material for a lithium ion battery according to (2-1), in which the isolation step includes a step of heating the charge storage element at a temperature equal to or higher than a melting point of a resin constituting the first sealing material and lower than 200°C.
(2-3) The production method for a recyclable electrode active material for a lithium ion battery according to (2-1), in which the isolation step includes a step of immersing the charge storage element in a solvent, and an absolute value of a difference between an SP value of a resin constituting the first sealing material and an SP value of the solvent is 1.0 or less.
(2-4) The production method for a recyclable electrode active material for a lithium ion battery according to (2-1), in which the isolation step includes a step of cutting the first sealing material along a direction substantially perpendicular to a direction in which the first current collector and the separator face each other.
(2-5) A production method for a solution containing a metal ion of a metal element constituting an electrode active material, the production method including a dispersion liquid preparation step of dispersing a recyclable electrode active material produced by the production method for a recyclable electrode active material for a lithium ion battery according to any one of or (2-1) to (2-4), in a solvent containing water, to obtain an electrode active material dispersion liquid, and a pH adjustment step of adjusting a pH of the electrode active material dispersion liquid such that a hydrogen ion exponent (pH) of an aqueous solution fractionated from the electrode active material dispersion liquid at 25°C is 5 or less.
(2-6) A lithium ion battery characterized by having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed, the second electrode current collector and the separator are adhered to each other with the second sealing material being sandwiched therebetween at an outer peripheral edge portion on which the second electrode active material layer is not formed, a melting point of a resin constituting the first sealing material is lower than 200°C, and a melting point of a resin constituting the second sealing material is higher than a melting point of a resin constituting the first sealing material by 30°C or higher.
(2-7) A lithium ion battery characterized by having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed, the second electrode current collector and the separator are adhered to each other with the second sealing material being sandwiched therebetween at an outer peripheral edge portion on which the second electrode active material layer is not formed, an SP value and Tg of each of the first sealing material and the second sealing material respectively satisfy the following conditions (1) and (2),
   Condition (1): [the absolute value of the difference between the SP value of the resin constituting the first sealing material and the SP value of the resin constituting the second sealing material] > 3.5
   Condition (2): [the absolute value of the difference between the Tg of the resin constituting the first sealing material and the Tg of the resin constituting the second sealing material] ≥ 35
(2-8) A production method for a recyclable sheet-shaped electrode member, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, the production method characterized by including an isolation step of separating the first current collector and the separator with the first sealing material as a boundary, to isolate the first recyclable sheet-shaped electrode member including the first current collector and the first electrode active material layer from the lithium ion battery.
(2-9) The production method for a recyclable sheet-shaped electrode member for a lithium ion battery according to (2-8), in which the isolation step includes a step of heating the charge storage element at a temperature equal to or higher than a melting point of a resin constituting the first sealing material and lower than 200°C.
(2-10) The production method for a recyclable sheet-shaped electrode member for a lithium ion battery according to (2-8), in which the isolation step includes a step of immersing the charge storage element in a solvent, and an absolute value of a difference between an SP value of a resin constituting the first sealing material and an SP value of the solvent is 1.0 or less.
(2-11) The production method for a recyclable sheet-shaped electrode member for a lithium ion battery according to (2-8), in which the isolation step includes a step of cutting the first sealing material along a direction substantially perpendicular to a direction in which the first current collector and the separator face each other.
(2-12) The production method for a recyclable electrode sheet for a lithium ion battery, the lithium ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, and the second current collector and the separator are adhered to each other with a second sealing material being sandwiched therebetween at an outer peripheral edge portion on which the second electrode active material layer is not formed, the production method characterized by including an isolation step of separating the second current collector and the separator with the second sealing material as a boundary, to isolate the first recyclable electrode sheet consisting of the first current collector, the first electrode active material layer, the separator, and the first sealing material from the lithium ion battery.
(2-13) The production method for a recyclable electrode sheet for a lithium ion battery according to (2-12), in which the isolation step includes a step of heating the charge storage element at a temperature equal to or higher than a melting point of a resin constituting the second sealing material and a temperature lower than a melting point of a resin constituting the first sealing material.
(2-14) The production method for a recyclable electrode sheet for a lithium ion battery according to (2-12), in which the isolation step includes a step of immersing the charge storage element in a solvent, and an absolute value of a difference between an SP value of a resin constituting the second sealing material and an SP value of the solvent is 1.0 or less, and an absolute value of a difference between an SP value of a resin constituting the first sealing material and an SP value of the solvent is more than 2.5.
(2-15) The production method for a recyclable electrode sheet for a lithium ion battery according to (2-12), in which the isolation step includes a step of cutting the second sealing material along a direction substantially perpendicular to a direction in which the second current collector and the separator face each other.

(3-1) A method of selectively isolating a positive electrode active material from a lithium ion battery, the lithium ion battery having a charge storage element consisting of a positive electrode that has a positive electrode resin current collector and has a positive electrode active material layer formed on the positive electrode resin current collector and consisting of a positive electrode composition containing a positive electrode active material, a negative electrode that has a negative electrode resin current collector and has a negative electrode active material layer formed on the negative electrode resin current collector and consisting of a negative electrode composition containing a negative electrode active material, and a separator disposed between the positive electrode active material layer and the negative electrode active material layer, the method characterized by including a suspension preparation step of isolating the charge storage element from the lithium ion battery, bringing the charge storage element into contact with a non-polar solvent having an SP value of 10 or less and a specific gravity smaller than that of water, adding water at a time of the contact or after the contact, and obtaining a suspension containing the water, the non-polar solvent, and the positive electrode active material, and a separation step of separating, after allowing the suspension to stand, an oil layer containing the non-polar solvent from a water layer containing the water and the positive electrode active material.
(3-2) The method of selectively isolating a positive electrode active material according to (3-1), in which the positive electrode resin current collector and the separator are adhered to each other with a positive electrode sealing material being sandwiched therebetween at an outer peripheral edge portion on which the positive electrode active material layer is not formed, and the negative electrode resin current collector and the separator are adhered to each other with a negative electrode sealing material being adhered to each other at an outer peripheral edge portion on which the negative electrode active material layer is not formed.
(3-3) The method of selectively isolating a positive electrode active material according to (3-1) or (3-2), in which the positive electrode active material layer is a non-bound body containing no binding material.
(3-4) The method of selectively isolating a positive electrode active material according to any one of (3-1) to (3-3), in which the positive electrode active material is a coated positive electrode active material, where at least a part of a surface of the positive electrode active material is coated with a coating material containing a macromolecule compound.
(3-5) The method of selectively isolating a positive electrode active material according to any one of (3-1) to (3-4), in which a matrix resin constituting the positive electrode resin current collector is a polyolefin resin.
(3-6) The method of selectively isolating a positive electrode active material according to any one of (3-1) to (3-5), in which the suspension is heated to 50°C to 100°C in the suspension preparation step.

(4-1) A production method for a positive electrode for a lithium ion battery, the method characterized by including a step of mixing a positive electrode active material isolated from a lithium ion battery with lithium and/or a lithium-containing compound.
(4-2) A production method for a positive electrode for a lithium ion battery, the method characterized by including a step of short circuiting a positive electrode active material layer containing a positive electrode active material isolated from a lithium ion battery and metallic lithium in a state of being opposed to each other, with a separator being sandwiched therebetween.
(4-3) A manufacturing method for a lithium ion battery, the method characterized by including a step of combining a positive electrode for a lithium ion battery produced by the production method for a positive electrode for a lithium ion battery according to (4-1) or (4-2) and a negative electrode for a lithium ion battery, with a separator being sandwiched therebetween.

### Examples

Next, the present invention will be specifically described with reference to Examples; however, the present invention is not limited to Examples as long as the gist of the present invention is maintained. Unless otherwise specified, parts mean parts by weight and % means % by weight. Further, in the following Examples, the first electrode shall be a positive electrode, and the second electrode shall be a negative electrode.

[Examples of first aspect of production method for recyclable electrode active material for lithium ion battery and related matter]

### [Production Example 1-1]

### <Preparation of resin current collector A>

65 parts of a matrix resin [manufactured by Sumitomo Chemical Co., Ltd., SUMITOMO NOBLEN FL6737 (random polypropylene), melting point: 130°C], 30 parts of a conductive filler [DENKA BLACK Li-400, manufactured by Denka Company Limited], and 5 parts of a dispersing agent were melt-kneaded with a twin-screw extruder under the conditions of 190°C, 100 rpm, and a retention time of 5 minutes to obtain a material for a resin current collector.

The obtained material for a resin current collector was extruded from a T-die and rolled with a cooling roll of which the temperature was adjusted to 50°C to obtain a resin current collector A having a film thickness of 100 µm.

### [Production Example 1-2]

### <Preparation of resin current collector B>

65 parts of a matrix resin [manufactured by Mitsui Chemicals, Inc., TPX (polymethylpentene), melting point: 235°C], 30 parts of a conductive filler [DENKA BLACK Li-400, manufactured by Denka Company Limited], and 5 parts of a dispersing agent were melt-kneaded with a twin-screw extruder under the conditions of 295°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector B having a film thickness of 100 µm.

### [Production Example 1-3]

### <Preparation of resin current collector C>

65 parts of a matrix resin [manufactured by TOSOH CORPORATION, low density polyethylene, melting point: 110°C], 30 parts of a conductive filler [DENKA BLACK Li-400, manufactured by Denka Company Limited], and 5 parts of a dispersing agent were melt-kneaded with a twin-screw extruder under the conditions of 170°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector C having a film thickness of 100 µm.

### [Production Example 1-4]

### <Preparation of resin current collector D>

65 parts of a matrix resin [manufactured by SunAllomer, SunAllomer PM854X (block polypropylene), SP value: 8.0, melting point: 160°C, glass transition temperature (Tg): 0°C], 30 parts of a conductive filler [DENKA BLACK Li-400, manufactured by Denka Company Limited], and 5 parts of a dispersing agent were melt-kneaded with a twin-screw extruder under the conditions of 220°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector D having a film thickness of 100 µm.

### [Production Example 1-5]

### <Preparation of coated positive electrode active material>

70.0 parts of DMF was placed in a four-necked flask equipped with a stirrer, a thermometer, a reflux condenser, a dropping funnel, and a nitrogen gas introduction tube, and the temperature was raised to 75°C. Next, a monomer blending solution obtained by blending 20.0 parts of butyl methacrylate, 55.0 parts of acrylic acid, 22.0 parts of methyl methacrylate, 3 parts of sodium allylsulfonate, and 20 parts of DMF, and an initiator solution obtained by dissolving 0.4 parts of 2,2'-azobis(2,4-dimethylvaleronitrile) and 0.8 parts of 2,2'-azobis(2-methylbutyronitrile) in 10.0 parts of DMF were continuously added dropwise to the four-necked flask over 2 hours under stirring by using a dropping funnel, while blowing nitrogen thereinto, to carry out radical polymerization. After completion of the dropwise addition, the temperature was raised to 80°C, and the reaction was continued for 5 hours to obtain a copolymer solution having a resin concentration of 50% by weight. The obtained copolymer solution was transferred to a Teflon (registered trade name) vat and dried under reduced pressure at 120°C and 0.01 MPa for 3 hours to distill off DMF, whereby a macromolecule compound for coating was obtained.

Subsequently, 100 parts of a positive electrode active material powder (LiNi_{0.8}Co_{0.15}Al_{0.05}O₂ powder, volume average particle size: 4 µm) was placed in an all-purpose mixer, High Speed Mixer FS25 [manufactured by EARTHTECHNICA Co., Ltd.], and at room temperature and in a state of the powder being stirred at 720 rpm, 11.2 parts of a macromolecule compound solution for coating obtained by dissolving the macromolecule compound for coating in isopropanol at a concentration of 1.0% by weight was added dropwise over 2 minutes, and then the resultant mixture was further stirred for 5 minutes.

Next, in a state of the resultant mixture being stirred, 6.2 parts of acetylene black [DENKA BLACK (registered trade name) manufactured by Denka Company Limited] was divisionally added as a conducting agent in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated positive electrode active material.

### [Production Example 1-6]

### <Preparation of coated negative electrode active material>

100 parts of non-graphitizable carbon powder (volume average particle size: 20 µm) which is a carbon-based material was placed in an all-purpose mixer, High Speed Mixer FS25 [manufactured by EARTHTECHNICA Co., Ltd.], and at room temperature and in a state of the powder being stirred at 720 rpm, 9.2 parts of a macromolecule compound solution for coating obtained by dissolving the macromolecule compound for coating in isopropanol at a concentration of 19.8% by weight was added dropwise over 2 minutes, and then the resultant mixture was further stirred for 5 minutes.

Next, in a state of the resultant mixture being stirred, 11.3 parts of acetylene black [DENKA BLACK (registered trade name) manufactured by Denka Company Limited], which is a conducting agent, was divisionally added in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated negative electrode active material.

### [Example 1-1]

### <Preparation of first electrode (positive electrode)>

42 parts of an electrolytic solution prepared by dissolving LiN(FSO₂)₂ at a proportion of 2 mol/L in a mixed solvent (volume ratio 1:1) of ethylene carbonate (EC) and propylene carbonate (PC) and 4.2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 30 parts of the electrolytic solution and 206 parts of the coated positive electrode active material were added, and then mixing was further carried out at 2,000 rpm for 1.5 minutes with Awatori Rentaro. Then, after 20 parts of the electrolytic solution was further added, stirring with Awatori Rentaro was carried out at 2,000 rpm for 1 minute, and after 2.3 parts of the electrolytic solution was further added, stirring with Awatori Rentaro was carried out for mixing at 2,000 rpm for 1.5 minutes, whereby a positive electrode active material slurry was prepared.

The obtained positive electrode active material slurry was applied onto the surface of the resin current collector A, which is the first resin current collector, and pressed at a pressure of 5 MPa for about 10 seconds to prepare a positive electrode for a lithium ion battery (42 mm × 42 mm) according to Example 1-1. It is noted that in the positive electrode for a lithium ion battery according to Example 1-1, a positive electrode active material layer having a plan view dimension of 35 mm × 35 mm is disposed substantially in the center of the resin current collector A having a plan view dimension of 42 mm × 42 mm.

### <Preparation of second electrode (negative electrode)>

20 parts of an electrolytic solution prepared by dissolving LiN(FSO₂)₂ at a proportion of 2 mol/L in a mixed solvent (volume ratio 1:1) of ethylene carbonate (EC) and propylene carbonate (PC) and 2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 50 parts of the electrolytic solution and 98 parts of the coated negative electrode active material were added, and then mixing was further carried out at 2,000 rpm for 1.5 minutes with Awatori Rentaro. Then, after 25 parts of the electrolytic solution was further added, stirring with Awatori Rentaro was carried out at 2,000 rpm for 1 minute, and moreover, after 50 parts of the electrolytic solution was further added, stirring with Awatori Rentaro was carried out for mixing at 2,000 rpm for 1.5 minutes, whereby a negative electrode active material slurry was prepared.

The obtained negative electrode active material slurry was applied onto the surface of the resin current collector B, which is the second resin current collector, and pressed at a pressure of 5 MPa for about 10 seconds to prepare a negative electrode for a lithium ion battery (42 mm × 42 mm) according to Example 1-1.

It is noted that in the negative electrode for a lithium ion battery according to Example 1-1, a negative electrode active material layer having a plan view dimension of 35 mm × 35 mm is disposed substantially in the center of the resin current collector B having a plan view dimension of 42 mm × 42 mm.

### <Preparation of lithium ion battery>

A positive electrode for a lithium ion battery (a first electrode) according to Example 1-1 and a negative electrode for a lithium ion battery (a second electrode) according to Example 1-1 were laminated so that the positive electrode active material layer and the negative electrode active material layer were opposed to each other, with a flat plate-shaped cell guard 3501 [made of PP (melting point: 160°C), thickness: 25 µm, plan view dimension:42 mm × 42 mm] serving as a separator sandwiched therebetween, subsequently subjected to thermocompression bonding to obtain a laminate (a charge storage element), and then enclosed in an aluminum laminated film to obtain a lithium ion battery according to Example 1-1.

At this time, an outer region of a width of 2 mm of a square region having an outer size of 42 mm × 42 mm was subjected to thermocompression bonding so that the positive electrode active material layer and the negative electrode active material layer were surround when seen in a plan view, to cover the positive electrode active material layer with the separator and a positive electrode resin current collector and to cover the negative electrode active material layer with the separator and the negative electrode resin current collector.

### <Checking of isolation properties of first electrode active material>

The aluminum laminated film was removed from the lithium ion battery according to Example 1-1, subsequently heating was carried out at 160°C for 30 minutes, and then immersion was carried out in a solvent for 10 minutes while applying vibration. Water was used as the solvent. Those from which the first electrode active material could be isolated were evaluated as "o". The results are shown in Table 1-1.

### [Evaluation of selectivity]

It was checked whether the coated negative electrode active material was contained in the solvent, and then a case where the coated negative electrode active material was not contained was evaluated as "o", and a case where the coated negative electrode active material was contained was evaluated as "×". The results are shown in Table 1-1.

### [Examples 1-2 to 1-4]

Lithium ion batteries according to Examples 1-2 to 1-4 were prepared in the same procedure as Example 1-1, except that the kinds of the first resin current collector and the second resin current collector were changed as shown in Table 1-1. Then, the isolation properties of the first electrode active material were checked, and the selectivity thereof was evaluated. The results are shown in Table 1-1.

**[Table 1-1]**

| | | Example 1-1 | Example 1-2 | Example 1-3 | Example 1-4 |
|---|---|---|---|---|---|
| First resin current collector | Resin current collector | A | C | A | D |
| | Matrix resin | Random PP | Low density PE | Random PP | Block PP |
| | Melting point [°C] | 130 | 110 | 130 | 160 |
| Second resin current collector | Resin current collector | B | B | C | D |
| | Matrix resin | PMP | PMP | Low density PE | Block PP |
| | Melting point [°C] | 235 | 235 | 110 | 160 |
| Heating condition | Temperature [°C] | 160 | 140 | 160 | 190 |
| | Time [min] | 5 | 5 | 5 | 5 |
| Isolation property | | ∘ | ∘ | ∘ | ∘ |
| Selectivity evaluation | | ∘ | ∘ | × | × |

As shown in the results of Table 1-1, a positive electrode active material, which is the recyclable electrode active material, can be obtained from the lithium ion batteries according to Examples 1-1 to 1-4 in a simple process without requiring high temperature heating.

Further, it was confirmed that a positive electrode active material can be obtained from the lithium ion batteries according to Examples 1-1 and 1-2 in a state where the negative electrode active material is not mixed, and thus is selectivity is good.

### [Production Example 1-7]

### <Preparation of resin current collector E>

65 parts of a matrix resin [manufactured by TORAY INDUSTRIES, Inc., AMILAN CM1017 (polyamide), SP value: 13.6, glass transition temperature (Tg): 50°C], 30 parts of a conductive filler [DENKA BLACK Li-400, manufactured by Denka Company Limited], and 5 parts of a dispersing agent were melt-kneaded with a twin-screw extruder under the conditions of 270°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector E having a film thickness of 100 µm.

### [Production Example 1-8]

### <Preparation of resin current collector F>

65 parts of a matrix resin [manufactured by Mitsui Chemicals, Inc., Inc., AURUM PL450 (polyimide), SP value: 13.1, glass transition temperature (Tg): 250°C], 30 parts of a conductive filler [DENKA BLACK Li-400, manufactured by Denka Company Limited], and 5 parts of a dispersing agent were melt-kneaded with a twin-screw extruder under the conditions of 400°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector F having a film thickness of 100 µm.

### [Production Example 1-9]

### <Preparation of resin current collector G>

65 parts of a matrix resin [manufactured by Kureha Corporation, KF Polymer (polyvinylidene fluoride), SP value: 11.6, glass transition temperature (Tg): -35°C], 30 parts of a conductive filler [DENKA BLACK Li-400, manufactured by Denka Company Limited], and 5 parts of a dispersing agent were melt-kneaded with a twin-screw extruder under the conditions of 200°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector G having a film thickness of 100 µm.

### [Examples 1-5 to 1-9]

Lithium ion batteries according to Examples 1-5 to 1-9 were prepared in the same procedure as Example 1-1, except that the kinds of the first resin current collector and the second resin current collector were changed as shown in Table 1-2.

### <Checking of isolation properties of first electrode active material layer>

The aluminum laminated film was removed from the lithium ion battery according to Examples 1-5 to 1-9, and then immersion was carried out in a solvent shown in Table 1-2 for 10 minutes while applying vibration. Immersion was carried out for 10 minutes in a solvent (xylene, SP value: 8.8) heated to 140°C while applying vibration.

Those from which the first electrode active material could be isolated were evaluated as "o". The results are shown in Table 1-2.

### [Evaluation of selectivity]

It was checked whether the coated negative electrode active material was contained in the solvent, and then a case where the coated negative electrode active material was not contained was evaluated as "o", and a case where the coated negative electrode active material was contained was evaluated as "×". The results are shown in Table 1-2.

**[Table 1-2]**

| | | Example 1-5 | Example 1-6 | Example 1-7 | Example 1-8 | Example 1-9 |
|---|---|---|---|---|---|---|
| First resin current collector | Resin current collecto r | D | D | D | G | D |
| | Matrix resin | PP | PP | PP | PVDF | PP |
| | SP value | 8.0 | 8.0 | 8.0 | 11.6 | 8.0 |
| Second resin current collector | Resin current collecto r | E | F | G | D | D |
| | Matrix resin | PA | PI | PVDF | PP | PP |
| | SP value | 13.6 | 13.1 | 11.6 | 8.0 | 8.0 |
| SP value of separator | | 13.6 | 13.6 | 11.6 | 8.0 | 8.0 |
| Condition (1) | Value | 5.6 | 5.1 | 3.6 | 3.6 | 0 |
| | Determin ation | ∘ | ∘ | ∘ | ∘ | × |
| Condition (2) | Value | 50 | 250 | 35 | 35 | 0 |
| | Determin ation | ∘ | ∘ | ∘ | ∘ | × |
| Condition (3) | Value | 0 | 0.5 | 0 | 0 | 0 |
| | Determin ation | ∘ | ∘ | ∘ | ∘ | ∘ |
| Solvent | Temperat ure [°C] | 140 | 140 | 140 | 140 | 140 |
| | Kind | Xylene | Xylene | Xylene | DMF | Xylene |
| | SP value | 8.8 | 8.8 | 8.8 | 12.0 | 8.8 |
| Isolation property | | ∘ | ∘ | ∘ | ∘ | ∘ |
| Selectivity evaluation | | ∘ | ∘ | ∘ | ∘ | × |

As shown in the results of Table 1-2, a positive electrode active material, which is the recyclable electrode active material, can be obtained from the lithium ion batteries according to Examples 1-5 to 1-9 in a simple process without requiring high temperature heating.

Further, it was confirmed that a positive electrode active material can be obtained from the lithium ion batteries according to Examples 1-5 to 1-8 in a state where the negative electrode active material is not mixed, and thus is selectivity is good.

### [Examples of second aspect of production method for recyclable electrode active material for lithium ion battery and related matter]

### [Production Example 2-1]

### <Preparation of resin current collector>

65 parts of a resin [manufactured by Mitsui Chemicals, Inc., TPX (polymethylpentene), melting point: 235°C], 30 parts of [DENKA BLACK Li-400, manufactured by Denka Company Limited], and 5 parts of a dispersing agent were melt-kneaded with a twin-screw extruder under the conditions of 190°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector having a film thickness of 100 µm.

### [Production Example 2-2]

### [Preparation of coated positive electrode active material]

70.0 parts of DMF was placed in a four-necked flask equipped with a stirrer, a thermometer, a reflux condenser, a dropping funnel, and a nitrogen gas introduction tube, and the temperature was raised to 75°C. Next, a monomer blending solution obtained by blending 20.0 parts of butyl methacrylate, 55.0 parts of acrylic acid, 22.0 parts of methyl methacrylate, 3 parts of sodium allylsulfonate, and 20 parts of DMF, and an initiator solution obtained by dissolving 0.4 parts of 2,2'-azobis(2,4-dimethylvaleronitrile) and 0.8 parts of 2,2'-azobis(2-methylbutyronitrile) in 10.0 parts of DMF were continuously added dropwise to the four-necked flask over 2 hours under stirring by using a dropping funnel, while blowing nitrogen thereinto, to carry out radical polymerization. After completion of the dropwise addition, the temperature was raised to 80°C, and the reaction was continued for 5 hours to obtain a copolymer solution having a resin concentration of 50% by weight. The obtained copolymer solution was transferred to a Teflon (registered trade name) vat and dried under reduced pressure at 120°C and 0.01 MPa for 3 hours to distill off DMF, whereby a macromolecule compound for coating was obtained.

Subsequently, 100 parts of a positive electrode active material powder (LiNi_{0.8}Co_{0.15}Al_{0.05}O₂ powder, volume average particle size: 4 µm) was placed in an all-purpose mixer, High Speed Mixer FS25 [manufactured by EARTHTECHNICA Co., Ltd.], and at room temperature and in a state of the powder being stirred at 720 rpm, 11.2 parts of a macromolecule compound solution for coating obtained by dissolving the macromolecule compound for coating in isopropanol at a concentration of 1.0% by weight was added dropwise over 2 minutes, and then the resultant mixture was further stirred for 5 minutes.

Next, in a state of the resultant mixture being stirred, 6.2 parts of acetylene black [DENKA BLACK (registered trade name) manufactured by Denka Company Limited] was divisionally added as a conducting agent in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated positive electrode active material.

### [Production Example 2-3]

### <Preparation of coated negative electrode active material>

100 parts of non-graphitizable carbon powder (volume average particle size: 20 µm) which is a carbon-based material was placed in an all-purpose mixer, High Speed Mixer FS25 [manufactured by EARTHTECHNICA Co., Ltd.], and at room temperature and in a state of the powder being stirred at 720 rpm, 9.2 parts of a macromolecule compound solution for coating obtained by dissolving the macromolecule compound for coating in isopropanol at a concentration of 19.8% by weight was added dropwise over 2 minutes, and then the resultant mixture was further stirred for 5 minutes.

Next, in a state of the resultant mixture being stirred, 11.3 parts of acetylene black [DENKA BLACK (registered trade name) manufactured by Denka Company Limited], which is a conducting agent, was divisionally added in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated negative electrode active material.

### <Example 2-1>

### <Preparation of first electrode (positive electrode)>

42 parts of an electrolytic solution prepared by dissolving LiN(FSO₂)₂ at a proportion of 2 mol/L in a mixed solvent (volume ratio 1:1) of ethylene carbonate (EC) and propylene carbonate (PC) and 4.2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 30 parts of the electrolytic solution and 206 parts of the coated positive electrode active material were added, and then mixing was further carried out at 2,000 rpm for 1.5 minutes with Awatori Rentaro. Then, after 20 parts of the electrolytic solution was further added, stirring with Awatori Rentaro was carried out at 2,000 rpm for 1 minute, and after 2.3 parts of the electrolytic solution was further added, stirring with Awatori Rentaro was carried out for mixing at 2,000 rpm for 1.5 minutes, whereby a positive electrode active material slurry was prepared.

The obtained positive electrode active material slurry was applied onto the surface of the resin current collector obtained in Production Example 2-1, which serves the first current collector, and pressed at a pressure of 5 MPa for about 10 seconds to prepare a sheet-shaped positive electrode member for a lithium ion battery (42 mm × 42 mm) according to Example 2-1. It is noted that in the sheet-shaped positive electrode member for a lithium ion battery according to Example 2-1, a positive electrode active material layer having a plan view dimension of 35 mm × 35 mm is disposed substantially in the center of the first current collector having a plan view dimension of 42 mm × 42 mm.

### <Adhesion of first current collector and separator with first sealing material>

An adhesive polyolefin film [manufactured by Mitsui Chemicals, Inc., ADMER (registered trade name) VE300, melting point 90°C, thickness 50 µm] which had been cut out to a width of 2 mm was disposed at the outer edge part of a flat plate-shaped cell guard 3501 [PP (melting point: 160°C), thickness: 25 µm, plan view dimension: 42 mm × 42 mm] that serves as a separator, superposed on the positive electrode active material layer of the positive electrode sheet-shaped member for a lithium ion battery according to Example 2-1, and adhered to the first current collector and the separator.

### <Preparation of second electrode (negative electrode)>

20 parts of an electrolytic solution prepared by dissolving LiN(FSO₂)₂ at a proportion of 2 mol/L in a mixed solvent (volume ratio 1:1) of ethylene carbonate (EC) and propylene carbonate (PC) and 2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 50 parts of the electrolytic solution and 98 parts of the coated negative electrode active material were added, and then mixing was further carried out at 2,000 rpm for 1.5 minutes with Awatori Rentaro. Then, after 25 parts of the electrolytic solution was further added, stirring with Awatori Rentaro was carried out at 2,000 rpm for 1 minute, and moreover, after 50 parts of the electrolytic solution was further added, stirring with Awatori Rentaro was carried out for mixing at 2,000 rpm for 1.5 minutes, whereby a negative electrode active material slurry was prepared.

### <Adhesion of second current collector and separator with second sealing material>

The obtained negative electrode active material slurry was applied onto a surface of an aramid separator and pressed at a pressure of 5 MPa for about 10 seconds to form a negative electrode active material layer on a separator.

After transferring this negative electrode active material layer to a surface of the separator, which was not in contact with the positive electrode active material layer, a toluene solution of a saturated copolymer polyester having a high molecular weight [Nichigo POLYESTER (registered trade name) SP-181, melting point: 140°C, manufactured by Nippon Synthetic Chemical Industry Co., Ltd.] was applied onto a region of a width of 2 mm of the outer edge part of the separator and the solvent was removed. Then, the negative electrode active material layer was superposed on the resin current collector obtained in Production Example 2-1, which serves as the second current collector, adhered to the second current collector and the separator, and then enclosed in an aluminum laminated film to obtain a lithium ion battery according to Example 2-1.

It is noted that the plan view dimension of the negative electrode active material layer is a square of 35 mm × 35 mm.

### <Checking of isolation properties of first recyclable electrode active material>

The aluminum laminated film was removed from the lithium ion battery according to Example 2-1, and the charge storage element was immersed in a solvent (propylene carbonate) heated to a temperature (120°C) higher than the melting point of the resin constituting the first sealing material by 30°C for 10 minutes while applying vibration.

Due to being immersed while applying vibration, the first sealing material was swollen and softened, and the first current collector and the separator were separated with the first sealing material as a boundary, whereby a dispersion liquid in which the first electrode active material was dispersed in the solvent was obtained.

Those from which the first electrode active material could be isolated were evaluated as "o". The results are shown in Table 2-1.

### [Evaluation of selectivity]

It was checked whether the coated negative electrode active material was contained in the above dispersion liquid, and then a case where the coated negative electrode active material was not contained was evaluated as "o", and a case where the coated negative electrode active material was contained was evaluated as "×". The results are shown in Table 2-1.

### <Examples 2-2 to 2-4>

Lithium ion batteries according to Examples 2-2 to 2-4 were prepared in the same procedure as Example 2-1, except that the kinds of the first sealing material and the second sealing material were changed as shown in Table 2-1. Then, the first electrode active material was isolated, and the selectivity thereof was evaluated. It is noted that the temperature of the solvent was set to the melting point of the resin constituting the first sealing material + 30°C. The results are shown in Table 2-1.

The kinds of resins shown in Table 2-1 are as follows.
A: ADMER (registered trade name) VE300 (an adhesive polyolefin, melting point: 90°C), manufactured by Mitsui Chemicals, Inc.
B: Nichigo POLYESTER (registered trade name) SP-181 (saturated copolymer polyester having high molecular weight, melting point: 140°C), manufactured by Nippon Synthetic Chemical Industry Co., Ltd.
C: Modic (registered trade name) F502 (adhesive polyolefin, melting point: 70°C), manufactured by Mitsubishi Chemical Corporation

**[Table 2-1]**

| | | Example 2-1 | Example 2-2 | Example 2-3 | Example 2-4 |
|---|---|---|---|---|---|
| First sealin g materi al | Sealin g materi al | A | C | C | A |
| | Meltin g point [°C] | 90 | 70 | 70 | 90 |
| Second sealin g materi al | Sealin g materi al | B | B | A | A |
| | Meltin g point [ °C] | 140 | 140 | 90 | 90 |
| Heatin g condit ion | Temper ature [°C] | 120 | 100 | 100 | 120 |
| | Time [min] | 10 | 10 | 10 | 10 |
| Isolation property | | ∘ | ∘ | ∘ | ∘ |
| Selectivity | | ∘ | ∘ | × | × |

### <Example 2-5>

A lithium ion battery according to Examples 2-5 was prepared, where the first sealing material and the second sealing material were respectively the same as those in Example 2-2.

The aluminum laminated film was removed from the lithium ion battery to isolate the charge storage element, the first sealing material present at the outer peripheral edge portion was cut along a direction substantially perpendicular to a direction in which the first current collector and the separator face each other, and the first sealing material was divided into two substantially equal parts in a direction in which the first current collector and the separator faced each other. The first current collector and the separator were separated with the first sealing material as a boundary to obtain the first recyclable sheet-shaped electrode member having the first electrode active material layer formed on the first current collector.

Further, the first electrode active material was scraped off from the first recyclable sheet-shaped electrode member using a squeegee and recovered in a glass container to obtain the first electrode active material, which is the recyclable electrode active material.

It was confirmed that the second electrode active material is not contained in the first electrode active material.

### <Example 2-6>

A lithium ion battery according to Examples 2-6 was prepared, where the first sealing material and the second sealing material were respectively the same as those in Example 2-2. The aluminum laminated film was removed from the lithium ion battery to isolate the charge storage element, and the second sealing material present at the outer peripheral edge portion was cut, whereby the second current collector and the separator were separated with the second sealing material as a boundary. Since the second electrode active material layer was formed on the second current collector, the charge storage element was separated into the second recyclable sheet-shaped electrode member consisting of the second current collector and the second electrode active material layer and the first recyclable electrode sheet consisting of the first current collector, the first electrode active material, the separator, and the first sealing material, with the second sealing material as a boundary.

In Example 2-6, all of the steps of removing the aluminum laminated film, cutting the second sealing material, and the like were carried out in a dry room environment with a dew point of -30°C or lower.

Further, the first recyclable electrode sheet was disassembled to isolate the first electrode active material, and then it was confirmed that the second electrode active material is not mixed and that the first electrode active material is deactivated by water.

As shown in the results of Table 2-1, a positive electrode active material, which is the recyclable electrode active material, can be obtained by the production method for recyclable electrode active material for a lithium ion battery of each of Examples in a simple process without requiring high temperature heating.

In addition, from the results of Examples 2-1 to 2-2, it was confirmed that in a case where the melting point of the resin constituting the second sealing material is higher than the melting point of the resin constituting the first sealing material by 30°C or higher, a positive electrode active material can be obtained in a state where the negative electrode active material is not mixed, and thus the selectivity is good.

Further, from the results of Example 2-5, it was confirmed that in a case where the first current collector and the separator are separated with the first sealing material as a boundary, a positive electrode active material can be obtained in a state where the negative electrode active material is not mixed, and thus selectivity is good. In addition, from the results of Examples 2-5, it was found that the lithium ion battery of each of Examples is suitable in the production method for a recyclable electrode active material for a lithium ion battery and the production method for a recyclable sheet-shaped electrode member for a lithium ion battery, which are described in the present specification.

Further, from the results of Examples 2-6, it was confirmed that in a case where the second sealing material is cut, it is possible to obtain the first recyclable electrode sheet in which the second electrode active material is not mixed and which contains the first positive electrode active material that is not deactivated by moisture. In addition, from the results of Examples 2-6, it was found that in a case where the production method for a recyclable electrode sheet for a lithium ion battery described in the present specification is used, it is possible to produce a recyclable electrode sheet for a lithium ion battery without the first electrode active material being deactivated.

Further, it was found that lithium ion batteries manufactured in Examples are suitable for executing the second aspect of the production method for a recyclable electrode active material for a lithium ion battery.

### [Examples of third aspect of production method for recyclable electrode active material for lithium ion battery and related matter]

### [Production Example 3-1]

### <Preparation of resin current collector>

50 parts of a resin [manufactured by Sumitomo Chemical Co., Ltd., SUMITOMO NOBLEN FL6737 (random polypropylene), 45 parts of a conductive filler [DENKA BLACK Li-400, manufactured by Denka Company Limited], and 5 parts of a dispersing agent were melt-kneaded with a twin-screw extruder under the conditions of 190°C, 100 rpm, and a retention time of 5 minutes to obtain a material for a resin current collector.

The obtained material for a resin current collector material was extruded from a T-die and rolled with a cooling roll of which the temperature was adjusted to 50°C to obtain a resin current collector having a film thickness of 100 µm.

### [Production Example 3-2]

### [Preparation of coated positive electrode active material]

70.0 parts of DMF was placed in a four-necked flask equipped with a stirrer, a thermometer, a reflux condenser, a dropping funnel, and a nitrogen gas introduction tube, and the temperature was raised to 75°C. Next, a monomer blending solution obtained by blending 20.0 parts of butyl methacrylate, 55.0 parts of acrylic acid, 22.0 parts of methyl methacrylate, 3 parts of sodium allylsulfonate, and 20 parts of DMF, and an initiator solution obtained by dissolving 0.4 parts of 2,2'-azobis(2,4-dimethylvaleronitrile) and 0.8 parts of 2,2'-azobis(2-methylbutyronitrile) in 10.0 parts of DMF were continuously added dropwise to the four-necked flask over 2 hours under stirring by using a dropping funnel, while blowing nitrogen thereinto, to carry out radical polymerization. After completion of the dropwise addition, the temperature was raised to 80°C, and the reaction was continued for 5 hours to obtain a copolymer solution having a resin concentration of 50% by weight. The obtained copolymer solution was transferred to a Teflon (registered trade name) vat and dried under reduced pressure at 120°C and 0.01 MPa for 3 hours to distill off DMF, whereby a macromolecule compound for coating was obtained.

Subsequently, 100 parts of a positive electrode active material powder (LiNi_{0.8}Co_{0.15}Al_{0.05}O₂ powder, volume average particle size: 4 µm) was placed in an all-purpose mixer, High Speed Mixer FS25 [manufactured by EARTHTECHNICA Co., Ltd.], and at room temperature and in a state of the powder being stirred at 720 rpm, 11.2 parts of a macromolecule compound solution for coating obtained by dissolving the macromolecule compound for coating in isopropanol at a concentration of 1.0% by weight was added dropwise over 2 minutes, and then the resultant mixture was further stirred for 5 minutes.

Next, in a state of the resultant mixture being stirred, 6.2 parts of acetylene black [DENKA BLACK (registered trade name) manufactured by Denka Company Limited] was divisionally added as a conducting agent in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated positive electrode active material.

### [Production Example 3-3]

### <Preparation of coated negative electrode active material>

100 parts of non-graphitizable carbon powder (volume average particle size: 20 µm) which is a carbon-based material was placed in an all-purpose mixer, High Speed Mixer FS25 [manufactured by EARTHTECHNICA Co., Ltd.], and at room temperature and in a state of the powder being stirred at 720 rpm, 9.2 parts of a macromolecule compound solution for coating obtained by dissolving the macromolecule compound for coating in isopropanol at a concentration of 19.8% by weight was added dropwise over 2 minutes, and then the resultant mixture was further stirred for 5 minutes.

Next, in a state of the resultant mixture being stirred, 11.3 parts of acetylene black [DENKA BLACK (registered trade name) manufactured by Denka Company Limited], which is a conducting agent, was divisionally added in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated negative electrode active material.

### [Production Example 3-4]

### <Preparation of positive electrode>

42 parts of a non-aqueous electrolytic solution prepared by dissolving LiN(FSO₂)₂ at a proportion of 2 mol/L in a mixed solvent (volume ratio 1:1) of ethylene carbonate (EC) and propylene carbonate (PC) and 4.2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 30 parts of the non-aqueous electrolytic solution and 206 parts of the coated positive electrode active material were added, and then mixing was further carried out at 2,000 rpm for 1.5 minutes with Awatori Rentaro. Then, after 20 parts of the non-aqueous electrolytic solution was further added, stirring with Awatori Rentaro was carried out at 2,000 rpm for 1 minute, and after 2.3 parts of the non-aqueous electrolytic solution was further added, stirring with Awatori Rentaro was carried out for mixing at 2,000 rpm for 1.5 minutes, whereby a positive electrode active material slurry was prepared.

The obtained positive electrode active material slurry was applied onto the surface of the resin current collector, and pressed at a pressure of 5 MPa for about 10 seconds to prepare a positive electrode for a lithium ion battery (42 mm × 42 mm) according to Example 3-1. It is noted that in the positive electrode for a lithium ion battery according to Example 3-1, a positive electrode active material layer having a plan view dimension of 35 mm × 35 mm is disposed substantially in the center of the resin current collector having a plan view dimension of 42 mm × 42 mm.

### [Production Example 3-5]

### <Preparation of negative electrode>

20 parts of a non-aqueous electrolytic solution prepared by dissolving LiN(FSO₂)₂ at a proportion of 2 mol/L in a mixed solvent (volume ratio 1:1) of ethylene carbonate (EC) and propylene carbonate (PC) and 2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 50 parts of the non-aqueous electrolytic solution and 98 parts of the coated negative electrode active material were added, and then mixing was further carried out at 2,000 rpm for 1.5 minutes with Awatori Rentaro. Then, after 25 parts of the non-aqueous electrolytic solution was further added, stirring with Awatori Rentaro was carried out at 2,000 rpm for 1 minute, and moreover, after 50 parts of the non-aqueous electrolytic solution was further added, stirring with Awatori Rentaro was carried out for mixing at 2,000 rpm for 1.5 minutes, whereby a negative electrode active material slurry was prepared.

The obtained negative electrode active material slurry was applied onto the surface of the resin current collector and pressed at a pressure of 5 MPa for about 10 seconds to prepare a negative electrode for a lithium ion battery (42 mm × 42 mm) according to Example 3-1.

It is noted that in the negative electrode for a lithium ion battery according to Example 3-1, a negative electrode active material layer having a plan view dimension of 35 mm × 35 mm is disposed substantially in the center of the resin current collector having a plan view dimension of 42 mm × 42 mm.

### [Production Example 3-6]

### <Preparation of lithium ion battery>

A positive electrode for a lithium ion battery and a negative electrode for a lithium ion battery were laminated so that the positive electrode active material layer and the negative electrode active material layer were opposed to each other, with a flat plate-shaped cell guard 3501 (made of PP, thickness: 25 µm, plan view dimension:40 mm × 40 mm) serving as a separator sandwiched therebetween, a sealing material (width: 1 mm) was disposed between the outer peripheral part of the resin current collector and the separator and subjected to thermocompression bonding to obtain a laminate (a charge storage element), and then enclosed in an aluminum laminated film to obtain a lithium ion battery according to Example 3-1.

As the sealing material, ADMER VE300 manufactured by Mitsui Chemicals, Inc. was used for both the positive electrode side and the negative electrode side.

### [Example 3-1]

### <Suspension preparation step>

After removing the aluminum laminated cell from the lithium ion battery according to Example 3-1, immersion was carried out in a mixed solvent of xylene (SP value: 8.8) and water (volume ratio is xylene:water = 80:20), and stirring was carried out for 20 minutes while heating the mixed solvent to 80°C. As a result, the positive electrode resin current collector and the negative electrode resin current collector, as well as the sealing material that adhered each of the resin current collectors and the separator were all partially swollen and softened, and a suspension in which the positive electrode active material layer and the negative electrode active material layer were dispersed in the mixed solvent was obtained.

### <Separation step>

The obtained suspension was allowed to stand at room temperature for 30 minutes, and as a result, it was separated into a water layer (a lower part) containing a precipitate and an oil layer (an upper part) as illustrated in Fig. 19. Fig. 19 is a photographic image showing a state of a mixed solvent after the separation step according to Example 3-1.

### <Analysis of obtained positive electrode active material>

After separating the oil layer and the water layer, the water layer was filtered to recover the precipitate, and the composition of the precipitate was checked by the TG-DTA analysis.

The TG-DTA analysis was carried out under the following conditions, and the content of the carbon-based material was determined from the weight loss rate before and after the decomposition temperature of the precipitate, and then the separability was evaluated. The results are shown in Table 3-1.
Measurement temperature: from 30°C to 900°C
Temperature rise rate: 10°C/min, held at 900°C for 15 min
Data interval: 0.5 s
Atmosphere: air
Pan: platinum

The criteria for the separability evaluation results are as follows.
A: proportion of carbon-based material ≤ 10% by weight
B: 10% by weight < proportion of carbon-based material ≤ 30% by weight
C: 30% by weight < proportion of carbon-based material

As a result of the analysis, the proportion of the carbon-based material contained in the precipitate was 10% by weight or less based on the weight of the precipitate.

### <Example 3-2>

The separation step was carried out in the same procedure as in Example 3-1 except that the suspension preparation step in Example 3-1 was changed as follows, and the obtained positive electrode active material was analyzed. The results are shown in Table 3-1.

After removing the aluminum laminated cell from the lithium ion battery according to Example 3-1, immersion in the xylene was carried out. Stirring was carried out for 1 hour while heating xylene to 130°C, and as a result, the positive electrode resin current collector and the negative electrode resin current collector were dissolved in xylene, whereby a dispersion liquid in which the positive electrode active material layer and the negative electrode active material layer were dispersed in xylene was prepared. Then, water was mixed so that xylene:water = 50:50 (in terms of weight ratio), and a suspension was obtained by stirring for 10 minutes while heating to 80°C.

The obtained suspension was allowed to stand at room temperature for 30 minutes, and as a result, it was separated into a water layer (a lower part) containing a precipitate and an oil layer (an upper part).

### <Comparative Examples 3-1 to 3-4>

The suspension preparation step and the separation step were carried out in the same procedure as in Example 3-1 except that the constitution of the positive electrode current collector and the composition of the mixed solvent were changed as shown in Table 3-1. The results are shown in Table 3-1.

However, in Comparative Examples 3-1, 3-3, and 3-4, current collectors were not dissolved in the suspension preparation step, and thus the suspension could not be obtained. In the separability evaluation, these are denoted as "-".

**[Table 3-1]**

| | Positive electrode current collector | Additio n of water in suspens ion prepara tion step | Mixed solvent | | | | Separability evaluation |
|---|---|---|---|---|---|---|---|
| | | | Non-polar solvent | | | Water | |
| | | | Kind | SP value | Propo rtion [% by volum e] | Propor tion [% by volume ] | |
| Example 3-1 | Resin current collector | At time of prepara tion | Xylene | 8 . 8 | 80 | 20 | A: No problem |
| Example 3-2 | Resin current collector | After prepara tion | Xylene | 8 . 8 | 50 | 50 | A: No problem |
| Comparativ e Example 3-1 | Resin current collector | At time of prepara tion | Ethanol | 14.8 | 80 | 20 | -: Resin current collector is not dissolved |
| Comparativ e Example 3-2 | Resin current collector | - | Xylene | 8.8 | 100 | 0 | B:Difficult to be separated from carbon |
| Comparativ e Example 3-3 | Resin current collector | At time of prepara tion | - | - | 0 | 100 | -: Resin current collector is not dissolved |
| Comparativ e Example 3-4 | Aluminum foil | At time of prepara tion | Xylene | 8.8 | 80 | 20 | -: Current collector is not dissolved |

From the results in Table 3-1, it was found that a positive electrode active material can be selectively isolated from a lithium ion battery.

### [Examples of production method for positive electrode for lithium ion battery and related matter]

### <Production Example 4-1>

### [Preparation of lithium ion battery A for cycle test]

90 parts of LiCoO₂, which is a positive electrode active material, 5 parts of acetylene black [manufactured by Denka Company Limited], which is a conductive auxiliary agent, and 5 parts of polyvinylidene fluoride, which is a binder, were mixed, and 50 parts of N-methyl-2-pyrrolidone were further mixed to prepare a positive electrode active material slurry. After applying this slurry onto an aluminum foil which is a positive electrode current collector, it was heated to 80°C under reduced pressure to obtain a positive electrode (40 mm × 50 mm) having a positive electrode active material layer (thickness: 40 µm) formed on the positive electrode current collector.

Next, 93 parts of non-graphitizable carbon, which is a negative electrode active material, 2 parts of acetylene black, which is a conductive auxiliary agent, and 5 parts of polyvinylidene fluoride, which is a binder, were mixed, and 50 parts of N-methyl-2-pyrrolidone were further mixed to prepare a negative electrode active material slurry. After applying this slurry onto a copper foil which is a negative electrode current collector, it was heated to 80°C under reduced pressure to obtain a negative electrode (42 mm × 52 mm) having a negative electrode active material layer (thickness: 40 µm) formed on the negative electrode current collector.

Next, the positive electrode and the negative electrode were laminated in a direction in which the positive electrode active material and the negative electrode active material were opposed to each other, with two sheets of the separator (made of polypropylene, thickness: 25 µm) sandwiched therebetween, where the separator had been punched into a rectangle of 50 mm × 60 mm. This laminate was housed in an aluminum laminated cell (60 mm × 70 mm), and further, a non-aqueous electrolytic solution A was injected thereto. Then sealing was carried out to prepare a lithium ion battery A for a cycle test. It is noted that as the non-aqueous electrolytic solution A, a solution obtained by dissolving 1M LiPF₆ in a mixed solvent (volume ratio 1:1) of ethylene carbonate and dimethyl carbonate was used.

### [Cycle test]

A cycle test was carried out using the lithium ion battery A for a cycle test to obtain a used lithium ion battery A.

The cycle test was carried out at 25°C as described below, and a rest period of 10 minutes was provided between charging and discharging.

The lithium ion battery for evaluation was set in the charging and discharging measuring device "HJ0501SM" [manufactured by HOKUTO DENKO Corporation], and according to the constant current and constant voltage charging method under the condition of 25°C, first, charging was carried out to 4.2 V at a current of 0.1 C, and a rest for 10 minutes was provided. Then discharging was carried out to 2.5 V at a current of 0.1 C, and then the capacity of the 1st cycle was checked. Then, a cycle, in which a rest for 10 minutes was provided and charging was carried out to 4.2 V at a current of 0.5 C, and then a rest for 10 minutes was provided and discharging was carried out to 2.5 V at a current of 0.1 C, was repeated 198 times.

In the 200th cycle, charging was carried out to 4.2V at a current of 0.1 C as in the 1st cycle, and after a rest of 10 minutes was provided, discharging was carried out to 2.5 V at a current of 0.1 C, and the capacity in the 200th cycle was checked.

Based on the discharge capacity in the 1st cycle, the capacity retention rate in the 200th cycle (the proportion of the discharge capacity in the 200th cycle to the discharge capacity in the 1st cycle) was 80%.

### <Example 4-1>

The aluminum laminated cell of the used lithium ion battery A was disassembled to isolate a positive electrode sheet A consisting of the positive electrode current collector, the positive electrode active material layer, and the positive electrode side separator (one sheet of separator disposed on the positive electrode side among the two disposed sheets of separator).

One sheet of a new separator (50 mm × 60 mm) was superposed on the separator of the isolated positive electrode sheet A, metallic lithium punched into a square of 40 mm × 50 mm was laminated on these separators, injection of a non-aqueous electrolytic solution was carried out, and housing into an aluminum laminated cell (60 mm × 70 mm) was carried out.

Then, the cell was allowed to stand for a predetermined time in a state of being short circuited in the outside.

Specifically, the time changes of the current value I and the voltage V flowing through a known resistor (resistance: 40Ω) installed in the external circuit of short circuit were monitored, and then the short circuit was released at the timing when the following conditions were satisfied; ΔI/ΔT > -0.2 mA/min, and monitor voltage V < 2.5 V.

The OCV of the positive electrode active material before the short circuit was 3.8 V, and the OCV of the positive electrode active material after the release of the short circuit was 2.3 V.

### [Checking of battery capacity]

The positive electrode sheet A after releasing the short circuit was combined with the negative electrode current collector newly prepared by the method described in Production Example 4-1 and the negative electrode sheet consisting of the negative electrode active material layer and the negative electrode side separator (one sheet of separator disposed on the negative electrode among the two disposed sheets of separator), to produce a lithium ion battery A for evaluation.

The lithium ion battery A for evaluation was charged and discharged, and then, when the discharge capacity in the initial stage (the 201st cycle in total) was measured, it was confirmed that it is 94.5% of the initial discharge capacity of the used lithium ion battery A.

### <Production Example 4-2>

### [Preparation of lithium ion battery B for cycle test]

100 parts of a positive electrode active material powder (LiNi_{0.8}Co_{0.15}Al_{0.05}O₂ powder, volume average particle size: 4 µm) was placed in an all-purpose mixer, High Speed Mixer FS25 [manufactured by EARTHTECHNICA Co., Ltd.], and at room temperature and in a state of the powder being stirred at 720 rpm, 10.0 parts of a macromolecule compound solution obtained by dissolving the obtained macromolecule compound in DMF at a concentration of 3.0% by weight was added dropwise over 2 minutes, and then the resultant mixture was further stirred for 5 minutes.

Next, in a state of the resultant mixture being stirred, 6.2 parts of acetylene black [DENKA BLACK (registered trade name) manufactured by Denka Company Limited] was divisionally added as a conductive auxiliary agent in 2 minutes, and stirring was continued for 30 minutes. Then, the pressure was reduced to 0.01 MPa while maintaining the stirring, the temperature was subsequently raised to 150°C while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated positive electrode active material (a coated NCA).

98 parts of the coated NCA was mixed with 2 parts of a carbon fiber which is a conductive auxiliary agent [VGCF, manufactured by Showa Denko K.K., average fiber length: 10 µm, average fiber diameter: 150 nm], and this mixture was further mixed with 100 parts of a non-aqueous electrolytic solution B obtained by dissolving 2M LiFSI in a mixed solvent (volume ratio 1:1) of ethylene carbonate and propylene carbonate to prepare a positive electrode active material slurry. This slurry was applied onto an aluminum foil which is a positive electrode current collector and pressed to obtain a positive electrode (40 mm × 50 mm) having a positive electrode active material layer (thickness: 250 µm) formed on the positive electrode current collector.

Next, 98 parts of non-graphitizable carbon which is a negative electrode active material was mixed with 2 parts of a carbon fiber which is a conductive auxiliary agent, and this mixture was further mixed with 120 parts of the non-aqueous electrolytic solution B to prepare a negative electrode active material slurry. This slurry was applied onto a copper foil which is a negative electrode current collector and pressed to obtain a negative electrode (42 mm × 52 mm) having a negative electrode active material layer (thickness: 300 µm) formed on the negative electrode current collector.

Next, the positive electrode and the negative electrode were laminated in a direction in which the positive electrode active material and the negative electrode active material were opposed to each other, with two sheets of the separator (made of polypropylene, thickness: 25 µm) sandwiched therebetween, where the separator had been punched into a rectangle of 50 mm × 60 mm. This laminate was housed in an aluminum laminated cell (60 mm × 70 mm), and further, the non-aqueous electrolytic solution B was injected thereto. Then sealing was carried out to prepare a lithium ion battery B for a cycle test.

### [Cycle test]

The same cycle test as in Example 4-1 was carried out using the lithium ion battery B for a cycle test to obtain a used lithium ion battery B. The discharge capacity retention rate in the 200th cycle was 82%.

### <Example 4-2>

The aluminum laminated cell of the used lithium ion battery B was disassembled to isolate a positive electrode sheet B consisting of the positive electrode current collector, the positive electrode active material layer, and the positive electrode side separator (one sheet of separator disposed on the positive electrode side among the two disposed sheets of separator).

A new separator (50 mm × 60 mm) was superposed on the separator of the isolated positive electrode sheet B, metallic lithium punched into a square of 40 mm × 50 mm was laminated on these separators, injection of a non-aqueous electrolytic solution B was carried out, and housing into an aluminum laminated cell (60 mm × 70 mm) was carried out.

Then, the cell was allowed to stand for a predetermined time in a state of being short circuited in the outside.

Specifically, the time changes of the current value I and the voltage V flowing through a known resistor (resistance: 40Ω) installed in the external circuit of short circuit were monitored, and then the short circuit was released at the timing when the following conditions were satisfied; ΔI/ΔT > -0.2 mA/min, and monitor voltage V < 2.5 V.

The OCV of the positive electrode active material before the short circuit was 3.7 V, and the OCV of the positive electrode active material after the release of the short circuit was 2.3 V.

### [Checking of battery capacity]

The positive electrode sheet B after releasing the short circuit was combined with the negative electrode current collector newly prepared by the method described in Production Example 4-2 and the negative electrode sheet consisting of the negative electrode active material layer and the negative electrode side separator (one sheet of separator disposed on the negative electrode among the two disposed sheets of separator), to produce a lithium ion battery B for evaluation.

The lithium ion battery B for evaluation was charged and discharged, and then, when the discharge capacity in the initial stage (the 201st cycle in total) was measured, it was confirmed that it is 93.4% of the initial discharge capacity of the used lithium ion battery B.

### <Production Example 4-3>

### [Preparation of lithium ion battery C for cycle test]

A positive electrode sheet and a negative electrode sheet were prepared in the same method as in Example 4-2. Next, the positive electrode sheet and the negative electrode sheet were laminated in a direction in which the positive electrode active material and the negative electrode active material were opposed to each other, with one sheet of separator (made of polypropylene, thickness: 25 µm) sandwiched therebetween, where the separator had been punched into a rectangle of 50 mm × 60 mm, whereby a laminate was prepared. This laminate was housed in an aluminum laminated cell (60 mm × 70 mm), and further, a non-aqueous electrolytic solution B was injected thereto. Then sealing was carried out to prepare a lithium ion battery C for a cycle test.

### [Cycle test]

The same cycle test as in Example 4-1 was carried out using the lithium ion battery C for a cycle test to obtain a used lithium ion battery C. The discharge capacity retention rate in the 200th cycle was 80%.

### <Example 4-3>

After disassembling the aluminum laminated cell of the used lithium ion battery C, the positive electrode current collector was scraped off. Then, the positive electrode active material layer adhered on the surfaces of the positive electrode current collector, and the separator was scraped off to isolate the positive electrode active material.

1.2 parts of a metallic lithium foil (manufactured by Honjo Metal Co., Ltd., thickness: 100 µm) cut into 1 cm × 1 cm was added to 100 parts of the isolated positive electrode active material, and the resultant mixture was stirred with a planetary mixer for 30 minutes.

The OCV of the positive electrode active material before stirring was 3.6 V, and the OCV of the positive electrode active material after stirring was 2.2 V. It is noted that at the time of the OCV measurement, a small amount of the positive electrode active material was sampled, and the sampled positive electrode active material and a lithium foil were opposed to each other with a separator impregnated with the non-aqueous electrolytic solution B being sandwiched therebetween, to carry out evaluation.

### [Checking of battery capacity]

100 parts of the non-aqueous electrolytic solution B was mixed with 100 parts of the positive electrode active material obtained by the above stirring to prepare a positive electrode active material slurry, and this slurry was applied onto an aluminum foil which is a positive electrode current collector and pressed to obtain a positive electrode (40 mm × 50 mm) having a positive electrode active material layer (thickness: 250 µm) formed on the positive electrode current collector.

This positive electrode was combined with the negative electrode current collector, the negative electrode active material, and the separator, which had constituted the used lithium ion battery C, to prepare a laminate again, and the laminate was enclosed in an aluminum laminated cell to prepare a lithium ion battery C for evaluation.

As a result of measuring the discharge capacity of this lithium ion battery C for evaluation in the initial stage (the 201st cycle in total), it was confirmed that it is 94.8% of the initial discharge capacity of the used lithium ion battery C.

### <Production Example 4-4>

### [Preparation of lithium ion battery D for cycle test]

90 parts of LiCoO₂, which is a positive electrode active material, 5 parts of acetylene black [manufactured by Denka Company Limited], which is a conductive auxiliary agent, and 5 parts of polyvinylidene fluoride, which is a binder, were mixed, and 50 parts of N-methyl-2-pyrrolidone were further mixed to prepare a positive electrode active material slurry. After applying this slurry onto an aluminum foil which is a positive electrode current collector, it was heated to 80°C under reduced pressure to obtain a positive electrode (40 mm × 50 mm) having a positive electrode active material layer (thickness: 40 µm) formed on the positive electrode current collector.

Next, 93 parts of non-graphitizable carbon, which is a negative electrode active material, 2 parts of acetylene black, which is a conductive auxiliary agent, and 5 parts of polyvinylidene fluoride, which is a binder, were mixed, and 50 parts of N-methyl-2-pyrrolidone were further mixed to prepare a negative electrode active material slurry. After applying this slurry onto a copper foil which is a negative electrode current collector, it was heated to 80°C under reduced pressure to obtain a negative electrode (42 mm × 52 mm) having a negative electrode active material layer (thickness: 40 µm) formed on the negative electrode current collector.

Next, the positive electrode and the negative electrode were laminated in a direction in which the positive electrode active material and the negative electrode active material were opposed to each other, with two sheets of the separator (made of polypropylene, thickness: 25 µm) sandwiched therebetween, where the separator had been punched into a rectangle of 50 mm × 60 mm. This laminate was housed in an aluminum laminated cell (60 mm × 70 mm), and further, a non-aqueous electrolytic solution A was injected thereto. Then sealing was carried out to prepare a lithium ion battery D for a cycle test.

### [Cycle test]

A cycle test was carried out using the lithium ion battery D for a cycle test to obtain a used lithium ion battery D.

The cycle test was carried out at 25°C as described below, and a rest period of 10 minutes was provided between charging and discharging.

The lithium ion battery for evaluation was set in the charging and discharging measuring device "HJ0501SM" [manufactured by HOKUTO DENKO Corporation], and according to the constant current and constant voltage charging method under the condition of 25°C, first, charging was carried out to 4.2 V at a current of 0.1 C, and rest for 10 minutes was provided. Then discharging was carried out to 2.5 V at a current of 0.1 C, and then the capacity in the 1st cycle was checked. Then, a cycle, in which a rest for 10 minutes was provided and charging was carried out to 4.2 V at a current of 0.5 C, and then a rest for 10 minutes was provided and discharging was carried out to 2.5 V at a current of 0.1 C, was repeated 198 times.

In the 200th cycle, charging was carried out to 4.2V at a current of 0.1 C as in the 1st cycle, and after a rest of 10 minutes was provided, discharging was carried out to 2.5 V at a current of 0.1 C, and the capacity in the 200th cycle was checked.

Based on the discharge capacity in the 1st cycle, the capacity retention rate in the 200th cycle (the proportion of the discharge capacity in the 200th cycle to the discharge capacity in the 1st cycle) was 73%.

### <Example 4-4>

### [Step of isolating positive electrode active material from lithium ion battery]

The aluminum laminated cell of the used lithium ion battery D was disassembled to isolate a positive electrode sheet D consisting of the positive electrode current collector, the positive electrode active material layer, and the positive electrode side separator (one sheet of separator disposed on the positive electrode side among the two disposed sheets of separator).

A new separator (50 mm × 60 mm) was superposed on the separator of the isolated positive electrode sheet D, metallic lithium punched into a square of 40 mm × 50 mm was laminated on these separators, injection of a non-aqueous electrolytic solution A was carried out, and housing into an aluminum laminated cell (60 mm × 70 mm) was carried out.

Then, the cell was connected to a charging and discharging device, and the CCCV discharging was carried out at a current value of 0.1 C in a constant-temperature bath of which the temperature was adjusted to 25°C with a setting of a lower limit voltage of 3.0 V. The OCV of the positive electrode active material before discharging was 3.8 V, and the OCV of the positive electrode active material after discharging was 3.0 V.

### [Checking of battery capacity]

The positive electrode sheet D after discharging was combined with the negative electrode current collector newly prepared by the method described in Production Example 4-4 and the negative electrode sheet consisting of the negative electrode active material layer and the negative electrode side separator (one sheet of separator disposed on the negative electrode among the two disposed sheets of separator), to produce a lithium ion battery D for evaluation.

The lithium ion battery D for evaluation was charged and discharged, and then, when the discharge capacity in the initial stage (the 201st cycle in total) was measured, it was confirmed that it is 93.2% of the initial discharge capacity of the used lithium ion battery D.

From the above results, it was confirmed that the battery capacity of the positive electrode active material constituting the used lithium ion battery can be recovered by the production method for a positive electrode for a lithium ion battery.

### Industrial Applicability

The production method for a recyclable electrode active material for a lithium ion battery of the present invention is useful as a method of isolating an electrode active material from a lithium ion battery.

The production method for a metal ion solution of the present invention is useful as a method of recycling valuable metals contained in a lithium ion battery.

Since the lithium ion battery of the present invention is easy to be recycled, it is useful as a lithium ion battery that is used for a mobile phone, a personal computer, a hybrid vehicle, or an electric vehicle.

The production method for a recyclable sheet-shaped electrode member for a lithium ion battery described in the present specification is useful as a method of recovering an electrode active material from a lithium ion battery.

The production method for a recyclable electrode sheet for a lithium ion battery described in the present specification is useful as a method of isolating an electrode active material from a lithium ion battery to reuse it.

The method of selectively isolating a positive electrode active material described in the present specification is useful as a method for reusing a positive electrode active material contained in a lithium ion battery.

The production method for a positive electrode for a lithium ion battery described in the present specification is useful as a method of reusing a positive electrode active material contained in a used lithium ion battery. Reference Signs List

1: lithium ion battery
10: first electrode
11: first current collector (first resin current collector)
13: first electrode active material layer
20: second electrode
21: second current collector (second resin current collector)
23: second electrode active material layer
30: separator
40: charge storage element
50: battery exterior body
60: solvent
101: lithium ion battery
110: first electrode
111: first current collector
113: first electrode active material layer
114: recyclable electrode active material
115: first sealing material
120: second electrode
121: second current collector
123: second electrode active material layer
125: second sealing material
130: separator
140: charge storage element
150: battery exterior body
160: solvent
170: recyclable sheet-shaped electrode member
180: recyclable electrode sheet
190: squeegee
201: lithium ion battery
210: positive electrode
211: positive electrode resin current collector
213: positive electrode active material layer
215: positive electrode active material
220: negative electrode
221: negative electrode resin current collector
223: negative electrode active material layer
230: separator
240: charge storage element
250: battery exterior body
260: water layer
261: water
270: oil layer
280: mixed solvent
290: suspension
301, 302: lithium ion battery
310: positive electrode
311: positive electrode current collector
313: positive electrode active material layer
314: positive electrode active material isolated from lithium ion battery
315: battery capacity-increased or battery capacity-recovered positive electrode active material
320: negative electrode
321: negative electrode current collector
323: negative electrode active material layer
330,331: separator
331a: positive electrode side separator
331b: negative electrode side separator
340, 341: charge storage element
350, 351: battery exterior body
360: lithium and/or lithium-containing compound
370: solvent
380: metallic lithium sheet
410: positive electrode sheet
420: negative electrode sheet

## Claims

1. A production method for a recyclable electrode active material for a lithium ion battery, the lithium ion battery having a charge storage element including a first electrode that has a first current collector and a first electrode active material layer formed on the first current collector and consisting of a first electrode composition containing a first electrode active material, a second electrode that has a second current collector and a second electrode active material layer formed on the second current collector and consisting of a second electrode composition containing a second electrode active material, and a separator disposed between the first electrode active material layer and the second electrode active material layer, in which the first current collector is a first resin current collector, the production method comprising:
an isolation step of isolating the first electrode active material from the lithium ion battery,

2. The production method for a recyclable electrode active material for a lithium ion battery according to Claim 1,
wherein at least a part of the first resin current collector is removed and the first electrode active material is isolated.

3. The production method for a recyclable electrode active material for a lithium ion battery according to Claim 2,
wherein the isolation step includes a step of heating the charge storage element at a temperature equal to or higher than a melting point of a first matrix resin constituting the first resin current collector and lower than 200°C.

4. The production method for a recyclable electrode active material for a lithium ion battery according to Claim 2,
wherein the isolation step includes a step of immersing the charge storage element in a solvent, and
an absolute value of a difference between an SP value of a first matrix resin constituting the first resin current collector and an SP value of the solvent is 1.0 or less.

5. The production method for a recyclable electrode active material for a lithium ion battery according to Claim 1,
wherein in the lithium ion battery, the first current collector and the separator are adhered to each other with a first sealing material being sandwiched therebetween at an outer peripheral edge portion on which the first electrode active material layer is not formed, and
the first current collector and the separator are separated, with the first sealing material as a boundary, to isolate the first electrode active material.

6. The production method for a recyclable electrode active material for a lithium ion battery according to Claim 5,
wherein the isolation step includes a step of heating the charge storage element at a temperature equal to or higher than a melting point of a resin constituting the first sealing material and lower than 200°C.

7. The production method for a recyclable electrode active material for a lithium ion battery according to Claim 5,
wherein the isolation step includes a step of immersing the charge storage element in a solvent, and
an absolute value of a difference between an SP value of a resin constituting the first sealing material and an SP value of the solvent is 1.0 or less.

8. The production method for a recyclable electrode active material for a lithium ion battery according to Claim 5,
wherein the isolation step includes a step of cutting the first sealing material along a direction substantially perpendicular to a direction in which the first current collector and the separator face each other.

9. The production method for a recyclable electrode active material for a lithium ion battery according to Claim 1,
wherein the first electrode active material is a positive electrode active material, and
the isolation step is a step of selectively isolating the positive electrode active material from the lithium ion battery, including;
a suspension preparation step of isolating the charge storage element from the lithium ion battery, bringing the charge storage element into contact with a non-polar solvent having an SP value of 10 or less and a specific gravity smaller than that of water, adding water at a time of the contact or after the contact, and obtaining a suspension containing the water, the non-polar solvent, and the positive electrode active material, and
a separation step of separating, after allowing the suspension to stand, an oil layer containing the non-polar solvent from a water layer containing the water and the positive electrode active material.

10. The production method for a recyclable electrode active material for a lithium ion battery according to Claim 9,
wherein the first current collector is a positive electrode resin current collector, and the first electrode active material layer is a positive electrode active material layer,
the positive electrode resin current collector and the separator are adhered to each other with a positive electrode sealing material being sandwiched therebetween at an outer peripheral edge portion on which the positive electrode active material layer is not formed,
the second current collector is a negative electrode resin current collector, and the second electrode active material layer is a negative electrode active material layer, and
the negative electrode resin current collector and the separator are adhered to each other with a negative electrode sealing material being sandwiched therebetween at an outer peripheral edge portion on which the negative electrode active material layer is not formed.

11. The production method for a recyclable electrode active material for a lithium ion battery according to Claim 9 or 10,
wherein the first electrode active material layer is a positive electrode active material layer, and
the positive electrode active material layer is a non-bound body containing no binding material.

12. The production method for a recyclable electrode active material for a lithium ion battery according to any one of Claims 9 to 11,
wherein the positive electrode active material is a coated positive electrode active material, where at least a part of a surface of the positive electrode active material is coated with a coating material containing a macromolecule compound.

13. The production method for a recyclable electrode active material for a lithium ion battery according to any one of Claims 9 to 12,
wherein the first current collector is a positive electrode resin current collector, and
a matrix resin constituting the positive electrode resin current collector is a polyolefin resin.

14. The production method for a recyclable electrode active material for a lithium ion battery according to any one of Claims 9 to 13,
wherein the suspension is heated to 50°C to 100°C in the suspension preparation step.

15. A production method for a solution containing a metal ion of a metal element constituting an electrode active material, the production method comprising:
a dispersion liquid preparation step of dispersing a recyclable electrode active material obtained by the production method for a recyclable electrode active material for a lithium ion battery according to any one of Claims 1 to 14, in a solvent containing water, to obtain an electrode active material dispersion liquid; and
a pH adjustment step of adjusting a pH of the electrode active material dispersion liquid such that a hydrogen ion exponent (pH) of an aqueous solution fractionated from the electrode active material dispersion liquid at 25°C is 5 or less.

16. A lithium ion battery comprising:
a charge storage element consisting of a first electrode that has a first current collector and a first electrode active material layer formed on the first current collector and consisting of a first electrode composition containing a first electrode active material, a second electrode that has a second current collector and a second electrode active material layer formed on the second current collector and consisting of a second electrode composition containing a second electrode active material, and a separator disposed between the first electrode active material layer and the second electrode active material layer,
wherein the first resin current collector contains a first matrix resin and a first conductive filler,
the second resin current collector contains a second matrix resin and a second conductive filler,
a melting point of the first matrix resin is less than 200°C, and
a melting point of the second matrix resin is higher than the melting point of the first matrix resin by 30°C or higher.
